(19) **Europäisches Patentamt / European Patent Office / Office européen des brevets**

(11) **EP 2 573 635 B1**

(12) **EUROPEAN PATENT SPECIFICATION**

(45) Date of publication and mention
of the grant of the patent:
**12.04.2017 Bulletin 2017/15**

(51) Int Cl.:
*G05B 19/418* (2006.01)  *G05B 23/02* (2006.01)
*D01H 13/14* (2006.01)

(21) Application number: **12185264.4**

(22) Date of filing: **20.09.2012**

(54) **Central device, information processing system, information processing method and program**

Zentrale Vorrichtung, Informationsverarbeitungssystem, Informationsverarbeitungsverfahren und Programm

Dispositif central, système de traitement d'informations, procédé et programme de traitement des informations

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2011 JP 2011205303**

(43) Date of publication of application:
**27.03.2013 Bulletin 2013/13**

(73) Proprietor: **Murata Machinery, Ltd.**
**Minami-ku**
**Kyoto-shi**
**Kyoto 601-8326 (JP)**

(72) Inventors:
• **Nakano, Taiji**
**Kyoto-shi, Kyoto 612-8686 (JP)**
• **Kinoshita, Kunio**
**Kyoto-shi, Kyoto 612-8686 (JP)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A2- 1 186 977    DE-A1- 4 031 419**
**DE-A1- 4 400 601    US-A- 5 515 266**

EP 2 573 635 B1

**Description**

BACKGROUND OF THE INVENTION

1. Field of the Invention

The present invention relates to a central device that is connected to a terminal device provided in a plurality of plants, an information processing system, an information processing method and a program.

2. Description of the Related Art

Conventionally, there are known systems capable of visually obtaining a plurality of pieces of information on a textile machine, including operating states, operation setting, and productivity (refer to, e.g., Japanese Unexamined Patent Application Publications No. 2002-87703 and No. 2004-183139)

EP 1 186 977 A2 describes a machine information displaying system for a textile machine capable of grasping visually and easily the information of the current status, the operational setting, and the production, out of the machine information of the textile machinery. The displaying system includes a computer machine for gathering and processing the operational data of each machine, a memory for storing and accumulating the data, and a screen for displaying the processed result of the data.

DE 40 31 419 A1 describes a maintenance monitoring apparatus comprised of an information processing machine for making a maintenance working plan for an automatic winder in response to an input data, outputting it and at the same time displaying the state of progress and a portable operating unit for inputting in sequence to the information processing machine the content of work applied by the operator to the automatic winder in accordance with the aforesaid work plan.

SUMMARY OF THE INVENTION

However, such conventional systems function to monitor a textile machine under control of a computer connected to the textile machine, and therefore it is difficult to properly obtain information on a large number of textile machines provided in different places (plants).

An object of the present invention is to provide an approach that can store a plurality of pieces of operation information on a plurality of textile machines provided in a plurality of plants, and also that can generate report information including the plurality of pieces of operation information and abnormality information of textile machines of each plant.

This object is achieved by a central device according to claim 1, an information processing system according to claim 15, an information processing method according to claim 16, and a program according to claim 17.

A central device disclosed in this application is connected to at least one terminal device provided in each of a plurality of plants via a communication network, and includes a receiving section adapted to receive plant identification information to identify a plant, machine identification information to identify each textile machine of a plurality of textile machines connected to the terminal device, unit identification information to identify each unit of a plurality of units of the textile machine, and a plurality of pieces of operation information on operating states of the textile machines and the units, a storing processing section adapted to store the a plurality of pieces of operation information, which the receiving section has received, in a storing section in association with the plant identification information, the machine identification information and the unit identification information, an abnormality determining section adapted to determine that the operation information is abnormal when the operation information stored in the storing section exceeds a threshold, and a generating section adapted to generate report information per plant identification information, including operation information of each of the textile machines and the units and abnormality information to identify the abnormal operation information determined by the abnormality determining section.

The central device disclosed in this application includes a calculating section adapted to calculate an evaluation value per textile machine of each plant based on the plurality of pieces of operation information stored in the storing section, wherein the generating section generates report information including the evaluation value calculated by the calculating section.

The calculating section of the central device disclosed in this application subtracts a value, which is obtained by multiplying operation information on a successful splicing ratio or a mis-splicing ratio by a coefficient previously stored in the stored section, and a value, which is obtained by multiplying operation information other than the above operation information, by the coefficient, from a constant stored in the storing section.

The central device disclosed in this application includes an average calculating section adapted to calculate an average evaluation value according to all textile machines of each plant based on the evaluation value per textile machine of each plant calculated by the calculating section, wherein the generating section generates report information including the average evaluation value calculated by the average calculating section.

The central device disclosed in this application includes a sorting section adapted to sort operation information according to the order of average evaluation values, which are calculated by the average calculating section for each, and an extracting section adapted to extract plant identification information of a plant which is ranked equal to or below the order stored in the storing section by the sorting section.

The central device disclosed in this application includes a reading section adapted to read out a plurality of pieces of first action information by referring to the storing section storing the plurality of pieces of first action information in association with the evaluation values, wherein the generating section generates report information including the plurality of pieces of the first action information read out by the reading section and the extracted plant identification information.

The central device disclosed in this application includes an operation average calculating section adapted to calculate an average value per operation information according to all textile machines of each plant by reading out the plurality of pieces of operation information stored in the storing section.

The central device disclosed in this application includes an operation sorting section adapted to sort operation information according to the average values of operation information, which are calculated by the operation average calculating section for each plant, and an operation extracting section adapted to extract plant identification information of a plant which is ranked equal to or below the order stored in the storing section by the sorting section.

The central device disclosed in this application includes a second action reading section adapted to read out a plurality of pieces of second action information by referring to the storing section storing a plurality of pieces of the second action information, wherein the generating section generates report information including the second action information read out by the second action reading section and the plant identification information extracted by the operation extracting section.

The central device disclosed in this application includes a part information extracting section adapted to extract part information corresponding to operation information, when the central device refers to the storing section storing the part information in association with operation information and the abnormality determining section determines that the operation information is abnormal, wherein the generating section generates report information including the abnormal operation information and the part information extracted by the part information extracting section.

The central device disclosed in this application includes a transmitting section adapted to transmit the report information to an address corresponding to the plant identification information.

The central device disclosed in this application includes a first receiving section adapted to receive first action information identifying information to identify the first action information selected from among the plurality of pieces of first action information, a counting section adapted to count the number of the first action information identifying information received by the first receiving section, and a statistics calculating section adapted to calculate statistic information based on the number of the first action information identifying information counted by the counting section, wherein the generating section generates report information including the plurality of pieces of first action information and the statistic information calculated by the statistics calculating section.

The central device disclosed in this application includes a second receiving section adapted to receive second action information identifying information to identify the second action information selected from among the plurality of pieces of the second action information corresponding to operation information, a counting section adapted to count the number of the second action information identifying information corresponding to the operation information received by the second receiving section, and a statistics calculating section adapted to calculate statistics information per operation information based on the number of the second action information identifying information corresponding to the operation information counted by the counting section, wherein the generating section generates report information including the plurality of pieces of second action information corresponding to the operation information and the statistics information calculated by the statistics calculating section.

The central device disclosed in this application includes a dispersion calculating section adapted to calculate dispersion according to all textile machines of each plant based on an evaluation value per textile machine of each plant calculated by the calculating section, wherein the generating section generates report information including the dispersion calculated by the dispersion calculating section.

An information processing system disclosed in this application is an information processing system in which a terminal device provided in a plurality of plants is connected to a central device via a communication network, wherein the terminal device includes a transmitting section adapted to transmit plant identification information to identify a plant, machine identification information to identify each textile machine among a plurality of textile machines connected to the terminal device, unit identification information to identify each unit among a plurality of units of the textile machine, and a plurality of pieces of operation information on operating states of the textile machines and the units, wherein the central device includes a receiving section adapted to receive the plant identification information, the machine identification information, the unit identification information and the plurality of pieces of operation information transmitted by the transmitting section, a memory processing section adapted to store the plurality of pieces of operation information received by the receiving section in a storing section in association with the plant identification information, the machine identification information and the unit identification information, an abnormality determining section adapted to determine that operation information is abnormal when the operation information stored in the storing section exceeds a threshold, and a generating section adapted to generate report information per plant identification information, including operation information of each textile machine and unit and abnormality information to identify the abnormal operation information determined by the abnormality determining section.

An information processing method disclosed in this application includes in an information processing method using a central device having a control section connected to a terminal device provided in a plurality of plants via a communication network a receiving step for receiving by the control section plant identification information to identify a plant, machine identification information to indentify each textile machine among a plurality of textile machines connected to the terminal device, unit identification information to identify each unit among a plurality of units of the textile machine, and a plurality of pieces of operation information on operating states of the textile machines and the units, a memory processing step in which the control section stores the plurality of pieces of operation information received in the receiving step in a storing section in association with the plant identification information, the machine identification information and the unit identification information, an abnormality determining step for determining that the operation information stored in the storing section is abnormal, when the operation information exceeds a threshold, and a generating step in which the control section generates report information per plant identification information, including operation information of each textile machine and unit, and abnormality information to identify the abnormal operation information determined by the abnormality determining section.

A program disclosed in this application is used for a computer having a control section connected to a terminal device provided in a plurality of plants via a communication network and includes a receiving step in which the control section of the computer receives plant identification information to identify a plant, machine identification information to identify each textile machine among a plurality of textile machines connected to the terminal device, unit identification information to identify each unit among a plurality of units of the textile machine, and a plurality of pieces of operation information on operating states of the textile machines and the units, a memory processing step in which the control section stores the plurality of pieces of operation information received in the receiving step in the storing section in association with the plant identification information, the machine identification information and the unit identification information, an abnormality determining step in which the control section determines that operation information is abnormal when the operation information stored in the storing section exceeds a threshold, and a generating step in which the control section generates report information per plant identification information, including operation information of each textile machine and unit, abnormality information to identify the abnormal operation information determined by the abnormality determining section.

According to one aspect of the present invention, it becomes possible to store a plurality of pieces of operation information of textile machines provided in a plurality of plants, and to generate report information including a plurality of pieces of operation information of the textile machines and abnormality information of each plant.

BRIEF DESCRIPTION OF THE DRAWINGS

Fig. 1 is an outline of an information processing system.
Fig. 2 is a schematic view showing an outline of a textile machine.
Fig. 3 is a block diagram of a hardware configuration of a client computer.
Fig. 4 is an illustrative record layout of an operation information file.
Fig. 5 is a block diagram of a hardware configuration of a server computer.
Fig. 6 is an illustrative record layout of a file by plant.
Fig. 7 is an illustrative record layout of an address file.
Fig. 8 is an illustrative view of a report.
Fig. 9 is an illustrative record layout of a threshold file.
Fig. 10 is an illustrative view of the report of operation information on a unit.
Fig. 11 is a graph showing evaluation values.
Fig. 12 is a flowchart of procedures for receiving operation information.
Fig. 13 is a flowchart of procedures for generating the report.
Fig. 14 is a flowchart of procedures for generating a report.
Fig. 15 is a flowchart of procedures for generating the report.
Fig. 16 is a block diagram of a hardware configuration of a server computer according to a second embodiment of the present invention.
Fig. 17 is an illustrative record layout of an evaluation value file.

Fig. 18 is an illustrative record layout of an action file for evaluation values.
Fig. 19A is an illustrative view of the report.
Fig. 19B is an illustrative view of the report.
Fig. 20 is an illustrative view of the report in which actions to be taken are written.
Fig. 21 is a flowchart of procedures for displaying ranking.
Fig. 22 is a flowchart of procedures for displaying ranking.
Fig. 23 is a block diagram of a hardware configuration of a server computer according to a third embodiment of the present invention.
Fig. 24 is an illustrative record layout of a statistics file.
Fig. 25 is an illustrative view of the report.
Fig. 26 is a flowchart of procedures for writing a selection ratio.
Fig. 27 is a block diagram of a hardware configuration of a server computer according to a fourth embodiment of the present invention.
Fig. 28 is an illustrative record layout of an operation information file.
Fig. 29 is an illustrative record layout of an action file for operation.
Fig. 30A is an illustrative view of the report.
Fig. 30B is an illustrative view of the report.
Fig. 31 is an illustrative view of the report in which actions to be taken is written.
Fig. 32 is a flowchart of procedures for calculating an average of average mis-splicing ratios (average AMIS).
Fig. 33 is a flowchart of procedures for writing actions to be taken based on operation information.
Fig. 34 is a flowchart of procedures for writing actions to be taken based on operation information.
Fig. 35 is an illustrative record layout of a statistics file according to a fifth embodiment of the present invention.
Fig. 36 is an illustrative view of the report.
Fig. 37 is a flowchart of procedures for writing a selection ratio.
Fig. 38 is a block diagram of a hardware configuration of a server computer according to a sixth embodiment of the present invention.
Fig. 39 is an illustrative record layout of a part/action file.
Fig. 40 is an illustrative view of action information.
Fig. 41 is an illustrative view of part information.
Fig. 42 is a flowchart of procedures for writing actions to be taken and part information.
Fig. 43 is a flowchart of procedures for writing actions to be taken and part information.
Fig. 44 is a block diagram of a hardware configuration of a server computer according to a seventh embodiment of the present invention.
Fig. 45 is an illustrative record layout of a dispersion file.
Fig. 46 is an illustrative record layout of an action file for dispersion.
Fig. 47 is an illustrative view of the report.
Fig. 48 is a flowchart of procedures for calculating dispersion.
Fig. 49 is a flowchart of procedures for writing dispersion and action information.
Fig. 50 is a functional diagram showing operations of the server computer according to the above-described embodiments.
Fig. 51 is a block diagram of a hardware configuration of a server computer according to an eighth embodiment of the present invention.
Fig. 52 is an illustrative record layout of a threshold file according to a ninth embodiment of the present invention.
Fig. 53 is a flowchart of procedures for reading out a threshold.

DETAILED DESCRIPTION OF PREFERRED EMBODIMENTS

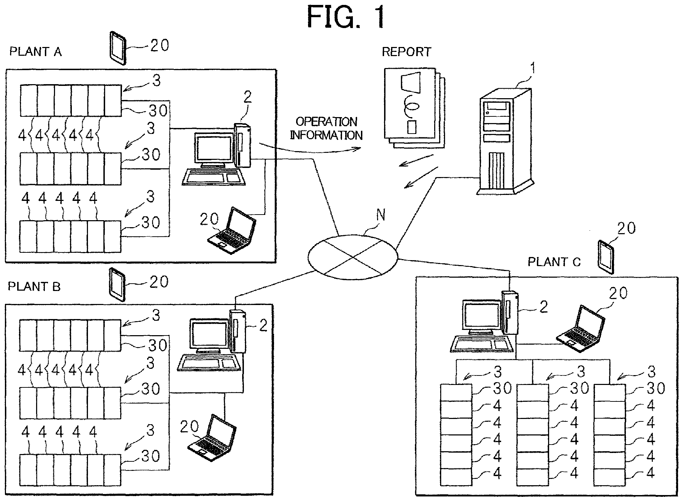

A first embodiment of the present invention will be described with reference to drawings. Fig. 1 is an outline of an information processing system. The information processing system includes a central device 1, a terminal device 2, a textile machine 3, a control section 30, a unit 4, an information processing device 20 and the like. The central device 1, the terminal device 2, the control section 30, the information processing device 20 and the like are connected each other via a communication network N, such as, the Internet, a local area network (LAN), or a mobile telephone network. The central device 1 is, e.g., a server computer or a personal computer. Hereinafter, the central device 1 will be described as a server computer 1. The server computer 1 is connected to the terminal device 2 (hereinafter referred to as "client computer" 2) provided in each plant via the communication network N, and receives a plurality of pieces of operation information on operating states of the textile machine 3 and the unit 4. Instead of a personal computer, the terminal device 2 may be a device dedicated for controlling the textile machine 3. Three plants, A, B, and C are used to describe the embodiment of the present invention. The number of plants is not limited to three and may be more than one. Due to limitations of space of a drawing, three textile machines are illustrated in a drawing. However, the number of the textile machines is not limited to three, and may be more than one. Likewise, the number of units may be more than one. Further, in the embodiments of the present invention, a different company owns a plant A, a plant B and a plant C, respectively. However, one company may own a plurality of plants. For example, one company may own plants A and B, and another company may own a plant C only.

The textile machine 3 is a machine configured with a plurality of the units 4. The textile machine 3 is, e.g., an automatic winder, a roving frame, a fine spinning machine, a weaving machine, a knitting machine, a yarn winding machine, a draw texturing machine, an air-jet spinning machine or the like. In the embodiments of the present invention, a description will be made, as an example, on the assumption that the textile machine 3 is an automatic winder in which a plurality of units 4 to wind a spinning bobbin into a package are provided. The textile machine 3 is provided with the control section 30 that controls each unit 4. The control section 30 outputs a plurality of pieces of operation information on an operating state of each unit 4 and an operating state of the entire textile machine 3 to the client computer 2. The operation information includes, for example, an operating ratio based on an operating time of the textile machine 3, a mis-splicing ratio based on the number of times of failures in yarn splicing, a lighting ratio of a light emitting section giving a warning, a ratio of spliced points or the like. The textile machine 3 calculates operation information per unit 4 based on the plurality of pieces of information output from each unit 4 and operation information on the textile machine 3. The client computer 2 of each plant transmits the plurality of pieces of operation information to the server computer 1.

The server computer 1 generates report information for each plant based on the plurality of pieces of operation information. The report information is data of, e.g., a text, an image, voice, a moving image, a table, a graph, or the like. Alternatively, the report information may be properly-combined data of a text, an image, voice, a moving image, a table, and a graph. In the embodiments of the present invention, a PDF (Portable Document Format, a registered trademark) file in which a text, an image, a table, and a graph are properly incorporated will be described as an example of the report information (hereinafter refer to "report"). The server computer 1 transmits the report to the client computer 2 or a corresponding information processing device 20. The information processing device 20 is, for example, a portable phone, a personal computer, PDA (Personal Digital Assistance), or a book reader. Hereafter, description will be made on the assumption that the information processing device 20 is the personal computer 20. Users in each plant will be able to obtain an operating state of the textile machine 3 via the personal computer 20 or the like. The details will be described below.

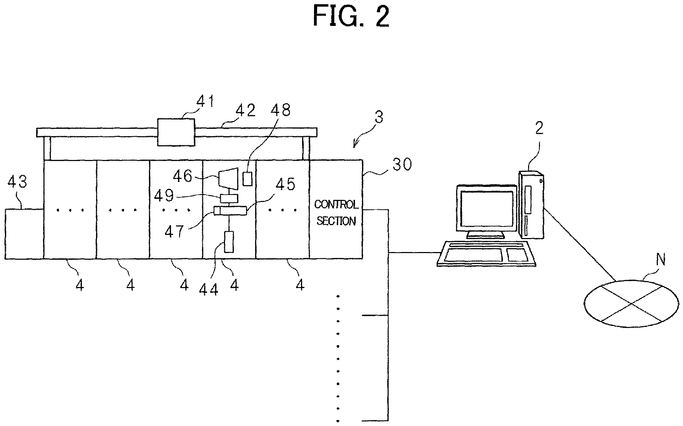

Fig. 2 is a schematic view showing an outline of the textile machine 3. The textile machine 3 includes the control section 30, a plurality of units 4 connected in line, a doffing device 41, a supporting section 42, a supplying device 43 or the like. Each unit 4 includes a spinning bobbin 44, a splicer 45, a clearer 49, a package 46, a unit control section 47, a light emitting section 48 and the like. The supplying device 43 supplies a spinning bobbin 44 to each unit 4. Yarn of the spinning bobbin 44 supplied to the unit 4 is wound into the package 46. The splicer 45 and the clearer 49 are arranged at a position between the spinning bobbin 44 and the package 46.

When yarn is broken due to an increase in tension applied to the yarn or when yarn is cut to eliminate a defect in the yarn, the splicer 45 splices a yarn end on the side of the spinning bobbin 44 and a yarn end on the side of the package 46. The clearer 49 monitors yarn travelling between the spinning bobbin 44 and the package 46 to detect a defective portion, such as, yarn with an irregular thickness or yarn containing a foreign substance. The clearer 49 is provided with a cutter (not illustrated). When detecting a defective portion in the yarn, the clearer 49 eliminates the defective portion using the cutter. The light emitting section 48 is, e.g., a LED (Light-Emitting Diode). When the unit 4 stops winding, the light emitting section 48 emits light. A detailed description on an internal structure of the unit 4 will be omitted. The supporting section 42, such as a rail, is provided above the units 4 in the direction in which each unit 4 is arranged in line. The doffing device 41 moves along the supporting section 42, and removes a wound package from the unit 4. Subsequently, the doffing device 41 sets a package (take-up tube), on which yarn is not wound yet, on the unit 4.

The unit control section 47 controls each hardware provided in the above-described units 4, and transmits operation information of each hardware and unique unit identification information to identify each unit 4 (hereinafter referred to as "unit ID") to the control section 30. The information transmitted to the control section 30 (hereinafter referred to as "unit information") includes, for example, the number of times of yarn splicing (yarn splicing frequency), the number of times of successful splicing (hereinafter referred to as "successful yarn splicing frequency"), and the number of times that the splicer fails to catch a yarn end on the side of the package 46 (hereinafter referred to as "upper-yarn mis-splicing frequency"). The unit information also includes the number of times of double drawing of yarn ends on the side of the package 46 (hereinafter referred to as "failure frequency due to upper yarn lay-in cut") and the number of times that the splicer 45 fails to catch a yarn end on the side of the spinning bobbin 44 (hereinafter referred to as "lower yarn mis-splicing frequency").

The unit information also includes the number of times of mis-splicing due to malfunction of the splicer 45 (hereinafter referred to as "mis-splicing frequency"), and the number of times of mis-splicing when a splice monitor (not illustrated) detects that yarn ends are not properly spliced (hereinafter referred to as "monitor cut frequency"). The unit information also includes the number of times the light emitting section 48 emits light, winding time of the package 46, the number of times of splicing, and the number of times that yarn ends are spliced when the yarn is broken due to a high tension (hereinafter referred to as "tension cut frequency"). The above unit information will be output to the control section 30 from the unit with a unit ID. The unit information also includes an operating time of the unit 4 and the yarn winding time by the package 46 while the unit 4 is operating. The control section 30 calculates operation information of each of the units 4 based on the unit ID and the unit information. The types of the unit information described above are examples and are not limited thereto.

The control section 30 includes a CPU (Central Processing Unit) (not illustrated) and a memory, and calculates a mis-splicing ratio (MIS) for a predetermined time (for example, every six hours) based on the yarn splicing frequency and the successful yarn splicing frequency, both of which are transmitted from the unit 4. Specifically, the control section 30 calculates a MIS by dividing a value, which is obtained by subtracting a successful yarn splicing frequency from the yarn splicing frequency, by the yarn splicing frequency, and then by multiplying the obtained value by 100. The control section 30 stores the calculated MIS in association with the unit ID. Alternatively, the successful yarn splicing frequency may be used as operation information.

Further, the control unit 30 calculates a failure ratio of splicing upper yarn ends (hereinafter referred to as "MUP") based on the yarn splicing frequency and the upper-yarn mis-splicing frequency. Specifically, the control section 30 calculates a MUP by dividing the upper-yarn mis-splicing frequency by the yarn splicing frequency and then multiplying the obtained value by 100. The control section 30 stores the calculated MUP in association with the unit ID. The control section 30 calculates a ratio of upper-yarn lay-in cut (hereinafter referred to as "MLC") based on the failure frequency due to upper yarn lay-in cut and the yarn splicing frequency. Specifically, the control section 30 calculates the MLC by dividing the failure frequency due to upper yarn lay-in cut by the yarn splicing frequency and then multiplying the obtained value by 100. The control section 30 stores the calculated MLC in association with the unit ID.

The control section 30 calculates a failure ratio of splicing of lower yarn ends (hereinafter referred to as "MLW") based on the lower yarn mis-splicing frequency and the yarn splicing frequency. Specifically, the control section 30 calculates a MLW by dividing the lower yarn mis-splicing frequency by the yarn splicing frequency and then multiplying the calculated value by 100. The control section 30 stores the calculated MLW in association with the unit ID. The control section 30 calculates a failure ratio of splicing by splicer (hereinafter referred to as "MSL") based on the mis-splicing frequency and the yarn splicing frequency. Specifically, the control section 30 calculates the MSL by dividing the mis-splicing frequency by the yarn splicing frequency and then multiplying the calculated value by 100. The control section 30 stores the calculated MSL in association with the unit ID.

The control section 30 calculates a monitor-cut ratio (hereinafter referred to as "MSM") based on the monitor cut frequency and the yarn splicing frequency. Specifically, the control section 30 calculates a MSM by dividing the monitor cut frequency by the yarn splicing frequency and then multiplying the divided value by 100. The control section 30 stores the calculated MSM in association with the unit ID. The control section 30 calculates a mis-splicing ratio (hereinafter referred to as "MIS") by dividing a value, which is obtained by subtracting a successful yarn splicing frequency from the yarn splicing frequency, by a yarn splicing frequency and then by multiplying the divided value by 100. The control section 30 stores the calculated MIS in association with the unit ID. The control section 30 calculates an operating ratio of each unit 4 by dividing the winding time of a unit 4 by an operating time and then multiplying the divided value by 100. The control section 30 stores the operating ratio in association with the unit ID. In the embodiment of the present invention, the control section 30 calculates operation information of each unit 4, such as a MIS, a MUP, a MLC, a MLW, a MSL, a MSM and an operating ratio. However, this is an example and not limited thereto. Instead of the control section 30, a unit control section 47 of each unit 4 or a CPU of a client computer 2, which will be described later, may calculate some or all of such operation information.

Then, the control section 30 calculates operation information on an operating state of the textile machine 3. The control section 30 stores an operating time of the textile machine 3 and a non-operating time of the supplying device 43 by a clock section (not illustrated). The control section 30 calculates an average winding time based on winding time output from each unit 4. The control section 30 calculates machine efficiency (hereinafter referred to as "spindle efficiency", or "SEF") by dividing the average winding time by a value, which is obtained by subtracting a non-operating time of the supplying device 43 from an operating time, and then by multiplying the divided value by 100. The control section 30 also calculates an average mis-splicing ratio (AMIS) based on an average of mis-splicing ratios of each of the units 4. As described above, the control section 30 may employ an average value of successful yarn splicing ratios of each of the units 45 instead of an AMIS. The control section 30 calculates the sum of the successful yarn splicing frequencies, each of which is output from each unit 4. The control section 30 also calculates the sum of light-emitting frequencies of the light emitting section 48, each of which is output from each unit 4. The control section 30 calculates a lighting ratio (hereinafter referred to as "YLW") by dividing the sum of the light emitting frequencies by the successful yarn splicing frequency and then multiplying the divided value by 100.

The control section 30 calculates the sum of yarn splicing frequencies, each of which is output from each unit 4. The control section 30 calculates the sum of the tension cut frequencies, each of which is output from each unit 4. The control section 30 counts the number of times that the supplying device 43 replaces a spinning bobbin 44. The control section 30 calculates a tension cut ratio (hereinafter referred to as "STB") by dividing the sum of the tension cut frequencies by the sum of the number of times of replacing the spinning bobbin 44, a tension cut frequency, and the number of times that the clearer removes a defective portion in yarn, and then by multiplying the obtained value by 100. The control section 30 transmits operation information of the textile machine 3, such as, a STB, a YLW, a SEF and an AMIS, to the client computer 2 in association with textile machine identification information (hereinafter referred to as "machine ID") to identify each textile machine 3 of a plurality of textile machines 3. In the embodiment of the present invention, the control section 30 calculates operation information of the textile machines 3, such as, a STB, a YLW, a SEF and an AMIS. However, instead of the control section 30, the CPU 11 of the client computer 2 may calculate some or all of such operation information (STB, YLW, SEF, and AMIS) of the textile machine 3.

The control section 30 also transmits operation information of each unit 4, such as, a MIS, a MUP, a MLC, a MLW, a MSL and a MSM, to the client computer 2 in association with a machine ID and a unit ID.

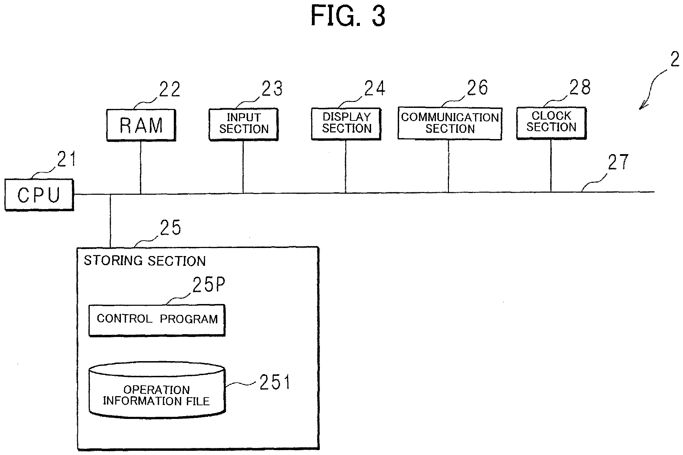

Fig. 3 is a block diagram of a hardware configuration of the client computer 2. The client computer 2 includes the CPU 21 as a control section, a RAM (Random Access Memory) 22, an input section 23, a display section 24, a storing section 25, a communication section 26, a clock section 28, or the like. The CPU 21 is connected to each section of hardware via a bus 27. The CPU 21 controls each section of the hardware in accordance with a control program 25P stored in the storing section 25. The RAM 22 is, for example, a SRAM (Static Random Access Memory), a DRAM (Dynamic Random Access Memory), a flash memory, or the like. The RAM 22 also serves as a storing section and temporarily stores various data generated when each program is executed by the CPU 21.

The input section 23 is an input device, such as a keyboard or a touch panel, and outputs a received operational instruction to the CPU 21. The display section 24 is a liquid crystal display, an organic electroluminescence display or the like, and displays various types of information in accordance with an instruction from the CPU 21. The communication section 26 is, for example, a LAN card or the like, and receives and transmits data between a server computer 1 and the control section 30 or the like. The clock section 28 outputs the current time or the time elapsed since a given time to the CPU 21. The storing section 25 is, for example, a hard disc or a large-capacity flash memory or the like, and stores the control program 25P and an operation information file 251, and the like.

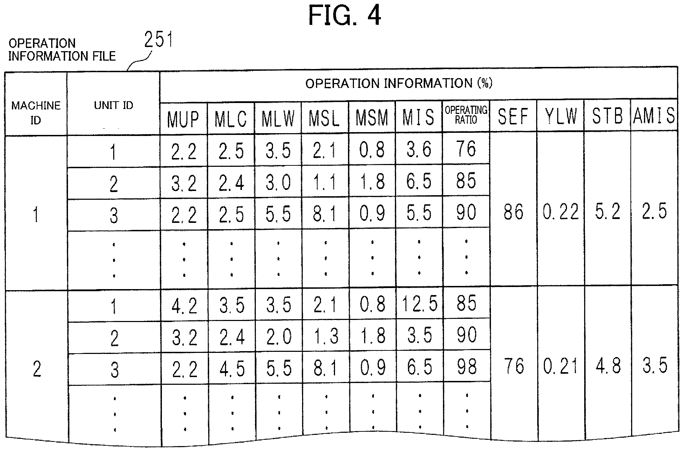

Fig. 4 is an illustrative record layout of the operation information file 251. The operation information file 251 includes a field for machine ID, a field for unit ID, and a field for operation information, or the like. The field for machine ID stores machine IDs. The field for unit ID stores unit IDs in association with machine IDs. The field for operation information stores operation information of each unit 4 in association with unit IDs. The CPU 21 stores operation information of the unit 4, such as a MIS, a MUP, a MLC, a MLW, a MSL, a MSM and an operating ratio in the operation information file 251 in association with a machine ID and a unit ID, both of which are received from the control section 30. In the operation information file in Fig. 4, the MUP of a unit, whose unit ID is 2 and the machine ID is 1, is stored as 3.2%.

The field for operation information also stores operation information of the textile machine 3 in association with machine IDs. The CPU 21 receives a machine ID, and operation information of the textile machines 3, such as a SEF, a YLW, a STB and an AMIS, and stores the received information in the operation information file 251. In the operation information file in Fig. 4, an AMIS of a machine whose machine ID is 2 is stored as 3.5%. The CPU 21 reads out plant identification to identify a plant of a company which has been previously stored (hereinafter referred to as "plant ID"). The plant identification information is data used to identify a plant, and a plant ID may be "A", for example. The plant ID may include identification information to identify a company that owns the plant (hereinafter referred to as "company ID"). If a company ID of a company whose name is X is given a company ID "X", the plant ID will be "XA" in the above-described case.

For every given period of time stored in the storing section 15 (e.g., every six hours), the CPU 21 transmits a plant ID as well as a machine ID, a unit ID and operation information stored in the operation information file 251 to the server computer 1 via the communication section 26 serving as a transmitting section. In order to describe the present embodiment more understandably, both the plant ID and the machine ID are individually described. However, both IDs may be unified if the ID can identify each plant and each textile machine 3. For example, A01 may be used if an alphabet is used as plant identification information and a figure is used as textile machine identification information.

The above example shows "B02", which means that "B" is a plant ID and "02" is a machine ID. The operation information file 251 shown in Fig. 4 is an example of a record layout and not limited thereto. If relationships between data are maintained, data (information) may be distributed and stored in a plurality of files. Alternatively, data (information) may be stored in a database server other than the client computer 2. In the embodiment of the present invention, the client computer 2 transmits information collected from a plurality of control sections 30 to the server computer 1, which is an example and not limited thereto. For example, the control section 30 of the textile machine 3 may be used as a terminal device without using the client computer 2. In this case, each control section 30 may directly transmit plant IDs, machine IDs, unit IDs, and operation information to the server computer 1.

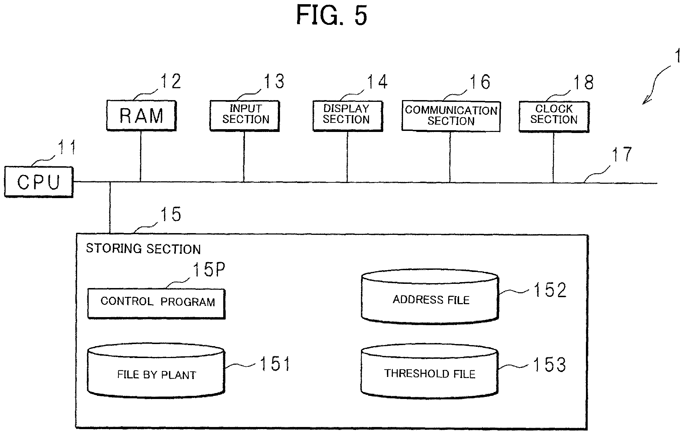

Fig. 5 is a block diagram of a hardware configuration of the sever computer 1. The server computer 1 includes the CPU 11 as a control section, a RAM 12, an input section 13, a display section 14, a storing section 15, a communication section 16, a clock section 18 or the like. The CPU 11 is connected to each section of the hardware via a bus 17. The CPU 11 controls each section of the hardware in accordance with a control program 15P stored in a storing section 15. The RAM 12 is, for example, a SRAM, a DRAM, a flash memory or the like. The RAM 12 also functions as a storing section and temporarily stores various data generated when the CPU 11 executes each program.

The input section 13 is an input device, such as a mouse, a keyboard, a touch panel or the like, and outputs a received operational instruction to the CPU 11. The display section 14 is a liquid crystal display, an organic electroluminescence display or the like, and displays various types of information in accordance with an instruction from the CPU 11. The communication section 16 is, for example, a LAN card or the like, and transmits/receives data between the client computer 2 and the personal computer 20 or the like using the HTTP (Hypertext Transfer Protocol) or the like. The clock section 18 outputs to the CPU 11 the current time or the time elapsed since a given point in time. The storing section 15 is, for example, a hard disc, a large-capacity flash memory or the like, and stores the control program 15P and the file by plant 151, the address file 152 and the threshold file 153 or the like.

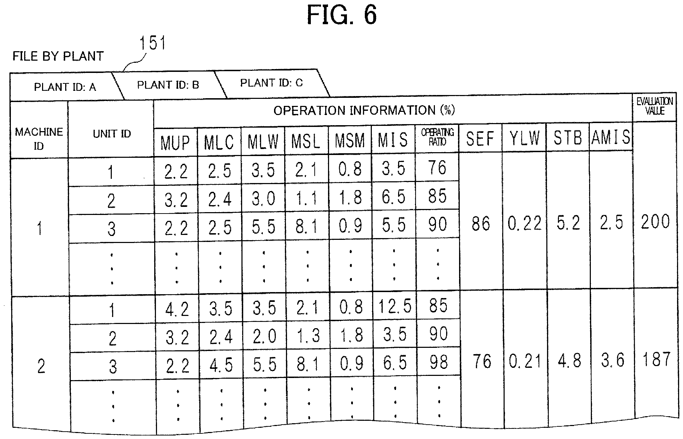

Fig. 6 is an illustrative record layout of the file by plant 151. The file by plant 151 stores machine IDs, unit IDs and operation information by plant. An example in Fig. 6 shows the file by plant 151 storing machine IDs, unit IDs, and a plurality of pieces of operation information of the plant A. The file by plant 151 includes a field for machine ID, a field for unit ID, a field for operation information, a field for an evaluation value and the like. Since information stored in the field for machine ID, the field for unit ID, and the field for operation information are the same as the information of the operation information file 251, a detailed description will be omitted. The CPU 11 receives the plant ID, the machine ID, the unit ID and the operation information from the client computer 2 via the communication section 16. The CPU 11 refers to the plant ID, the machine ID, and the unit ID and stores operation information according to the unit 4 in the file by plant 151. The CPU 11 also refers to the plant ID and the machine ID and stores operation information according to the textile machines 3 in the file by plant 151.

Accordingly, operation information of a plurality of textile machines 3 provided in each plant and a plurality of units 4 provided in the plurality of the textile machines 3 will be stored in the server computer 1. The record layout of the file by plant 151 described in the above embodiment is an example and not limited thereto. If relationships between data are maintained, the data (information) may be distributed and stored in a plurality of files. Alternatively, a database server (not illustrated) connected via the communication network N may store some or all of the information in the file by plant 151. In this case, the CPU 11 reads or writes necessary data from/ to the database server using a SQL (Structured Query Language). The field for the valuation value stores evaluation values calculated based on the plurality of pieces of operation information in association with the plant IDs and the machine IDs.

Among the plurality of pieces of operation information, the CPU 11 calculates an evaluation value based on at least an AMIS showing a mis-splicing ratio (MIS) (or, a successful splicing ratio) and operation information other than the AMIS. In the embodiments of the present invention, a calculation of the evaluation value will be described using, for example, four kinds of data, an AMIS, a YLM, a STB and an operating ratio. The CPU 11 reads out an AMIS, a YLW, and a STB from the file by plant 151 based on a plant ID and a machine ID. The CPU 11 also counts the number of units whose operating ratio is more than 0%. The number of unit(s) whose operation rate is more than 0% is defined as the number of operating units. The CPU 11 reads out a formula (1) to calculate an evaluation value, which is stored in the storing section 15. The formula (1) is:

```
an evaluation value = a first constant - {a MIS × a second
constant + a YLW × a third constant + a STB × a fourth constant
+ the number of operating units × a fifth constant number}
```

Note that from the first constant through the fifth constant may be a natural number: for example, the first constant is 300, and the second to the fifth constants are 10 or less.

In this case, a higher evaluation value means that a machine is effectively working. In the embodiment of the present invention, to calculate an evaluation value, figures based on the plurality of pieces of operation information are subtracted from the first constant. However, the calculation method is not limited thereto. The evaluation value may be simply obtained by multiplying the plurality of pieces of operation information by a coefficient. In this case, a lower evaluation value means that a machine is effectively working. The CPU 11 stores the calculated evaluation value in the file by plant 151 in association with a plant ID and a machine ID. In an example in Fig. 6, an evaluation value of a plant A whose machine ID is 1 is stored as "200".

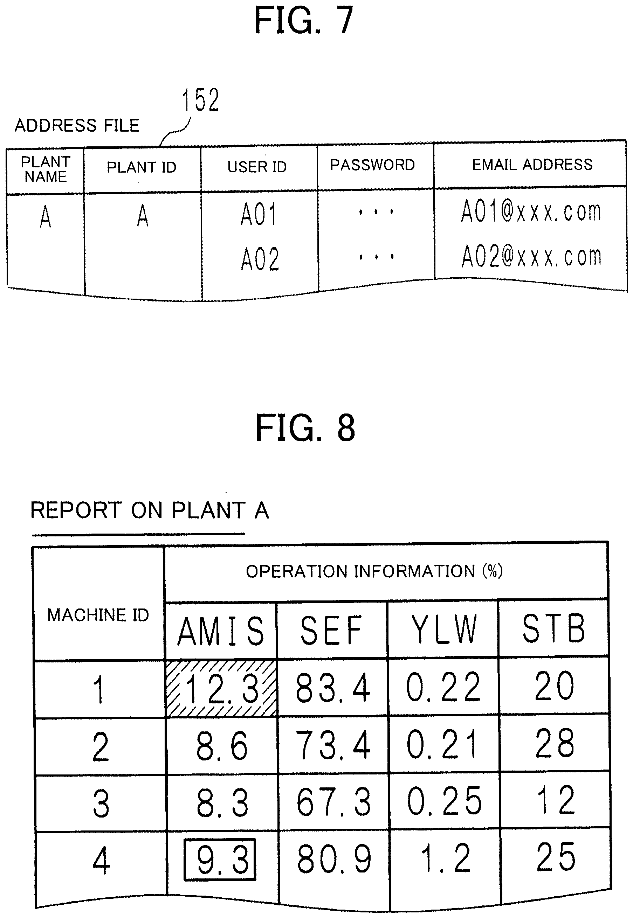

Fig. 7 is an illustrative record layout of the address file 152. The address file 152 includes a field for a plant name, a field for plant ID, a field for user ID, a filed of a password, a field for an electric mail address, and the like. The field for the plant name stores a name of a plant where textile machines 3 are provided. The field for the plant ID stores a plant ID in association with a plant name. The field for the user ID stores identification information to identify a user who has been previously registered (hereinafter referred to as "user ID") in association with the plant ID. The filed of passwords stores a password which is required to download a report in association with the user ID. The field for the electric mail address stores an electric mail address in association with the filed of user IDs.

Fig. 8 is an illustrative view of a report. The CPU 11 refers to the file by plant 151 and generates a report. The CPU 11 reads out a template of the report stored in the storing section 15. An example of preparing the report on a plant A will be described below. The CPU 11 reads out a plant name corresponding to a plant ID from the address file 152. The CPU 11 writes the plant name to the report. The CPU 11 reads out operation information of a textile machine 3 from the file by plant 151 based on the plant ID and a machine ID. The CPU 11 writes to the report the operation information corresponding to the plant ID and the machine ID. In an example in Fig. 8, the CPU 11 has written an AMIS, a SEF, a YLW and a STB of a textile machine whose machine ID is 1, as 12.3, 83.4, 0.22, and 20, respectively.

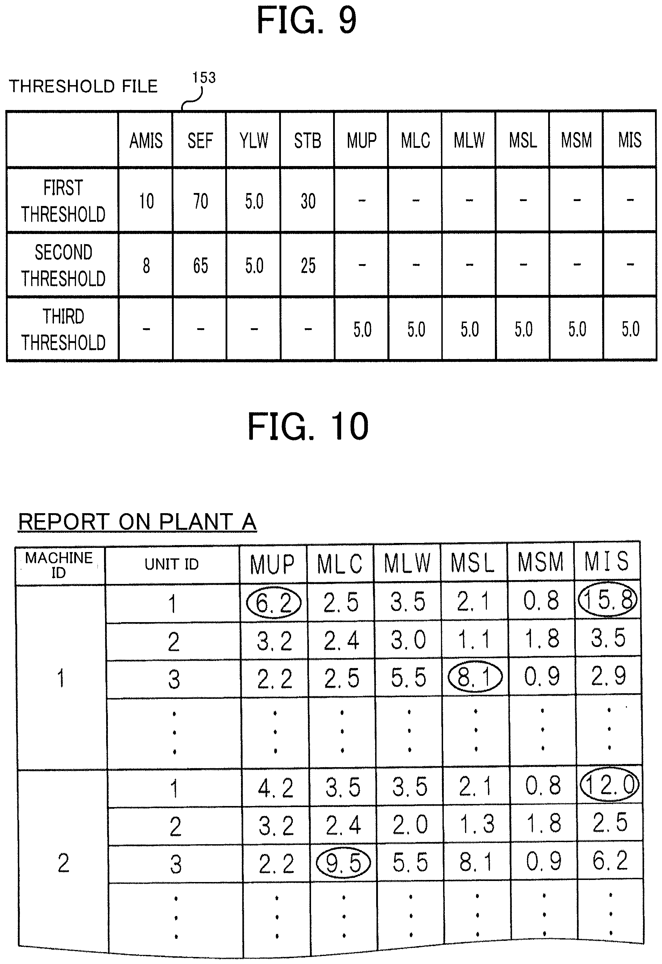

Fig. 9 is an illustrative record layout of the threshold file 153. The threshold file 153 stores a first threshold and a second threshold on operation information of the textile machine 3. The threshold file 153 also stores a third threshold on operation information of each unit 4. The CPU 11 determines whether the operation information read out from the storing section 15 exceeds the first threshold stored in the threshold file 153. When determining that the operation information exceeds the first threshold, the CPU 11 writes first abnormality information to the operation information exceeding the first threshold. For example, the CPU 11 makes a comparison between the AMIS "12.3" having the machine ID "1" and the first threshold "10". In this case, the AMIS of the machine having the machine ID 1 is 12.3, which exceeds the first threshold "10", and therefore the CPU 11 determines that the operation information is abnormal.

The CPU 11 writes the first abnormality information to a figure (data) corresponding to the machine ID and the operation information in the report. If the first abnormality information is written, the following processing is executed: hatching, coloring processing, blinking processing, enclosing a figure with a square, marking with an exclamation mark, highlighting, etc. In Fig. 8, a SEF (higher value is better) of a machine having a machine ID 1 is 83.4. Since the first threshold is 70 and the SEF does not exceed the threshold (which means the SEF is not below the first threshold, 70), the CPU 11 will not write the first abnormality information. A higher SEF is preferable, and thus determination on the first threshold will be made by determining whether a figure of operation information is lower than the first threshold. In order to describe the embodiment more understandably, a description will be made on the assumption that there exists an abnormality exceeding the threshold when data of operation information is higher than the threshold.

The CPU 11 executes the following processing for an AMIS of a machine ID in which the first abnormality information has not been written. The CPU 11 refers to the field for MIS of the file by plant 151 based on a plant ID and the machine ID to determine whether a unit 4 whose MIS exceeds the second threshold exists. When determining that a unit 4, of which MIS exceeds the second threshold, exists, the CPU 11 writes second abnormality information to a figure (data) corresponding to the machine ID and the AMIS. As is the case with the first abnormality information, the second abnormality information may include the following processing: hatching, coloring processing, blinking, enclosing a figure with a square, marking with an exclamation mark, highlighting, or the like. The CPU 11 displays the first abnormality information and the second abnormality information in a different way so that they can be distinguished from one another. In the embodiment of the present invention, a figure (data) of the second abnormality information is enclosed with a square.

Fig. 10 is an illustrative view of a report of operation information of the unit 4. The CPU 11 refers to plant IDs, machine IDs, and unit IDs to read out operation information of the unit 4 from the file by plant 151, and writes the read information. Then, the CPU 11 reads out a third threshold corresponding to each piece of operation information of the unit 4 from the threshold file 153. In order to describe the embodiment more understandably, all of the third thresholds are defined as "5.0". The CPU 11 determines whether each piece of operation information of the unit 4 exceeds the threshold. When determining that the information exceeds the threshold, the CPU 11 writes third abnormality information to a figure (data) corresponding to the machine ID, the unit ID, and the operation information. The third abnormality information may be handled in the same way as the processing of the first abnormality information and the second abnormality information. However, when from the first abnormality information through the third abnormality information are written in the same page of the file, each abnormality information may be distinguishably indicated one another. In an example in Fig. 10, some figures are enclosed with a circle. Alternatively, the CPU 11 may process all types of abnormality information with coloring processing; e.g., the first abnormality information, the second abnormality information, and the third abnormality information are displayed in red, yellow, and blue or the like, respectively.

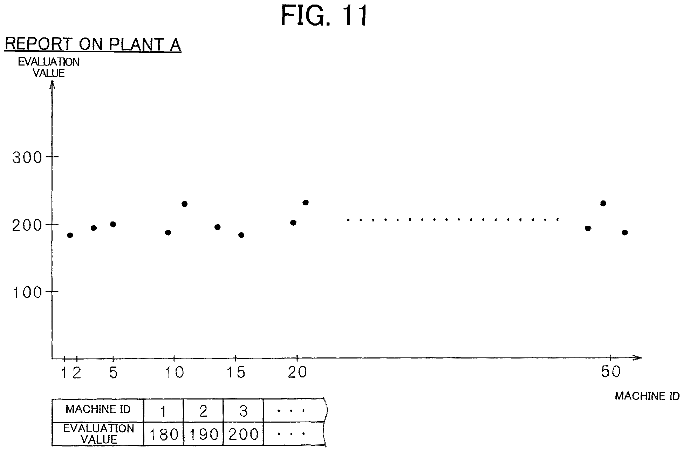

Fig. 11 is a graph of evaluation values. A horizontal line and a vertical line indicate machine IDs and evaluation values, respectively. The CPU 11 reads out plant IDs, machine IDs and evaluation values stored in the file by plant 151. The CPU 11 activates spreadsheet software stored in the storing section 15. The CPU 11 plots a graph based on the read machine IDs and evaluation values. As shown in Fig. 11, evaluation values per machine ID are plotted. The CPU 11 also writes machine IDs and evaluation values in proximity to the graph. The CPU 11 pastes the plotted graph, the machine IDs and the evaluation values. The CPU 11 transmits a report which is generated through the above described processing. The CPU 11 activates an application stored in the storing section 15 to convert the report to a PDF format. The CPU 11 refers to the plant ID to read out an email address from the address file 152. The CPU 11 sends an email, to which the report is attached, to the read email address.

A user of a plant where a personal computer 20 is provided receives the email, and thus can browse the report. In the embodiment of the present invention, the report is transmitted by email. However, the method is not limited thereto. The user accesses the server computer 1 using the personal computer 20 and transmits a user ID, a password and a request for acquiring the report. When the CPU 11 of the server computer 1 determines that the user ID with the password agrees with a user ID and a password stored in the address file 152, the CPU 11 transmits the report to the personal computer 20. Meanwhile, where the user ID with the password does not agree with the stored user ID and password, the CPU 11 will not transmit the report to the personal computer 20. Other than a PDF format, the report may be handled with word-processing software (e.g., Microsoft Word, a registered trademark), spreadsheet software (e.g., Microsoft Excel, a registered trademark) or in a HTML (Hypertext Markup Language) format. Alternatively, presentation software (e.g., Microsoft PowerPoint, a registered trademark) may be used as a report.

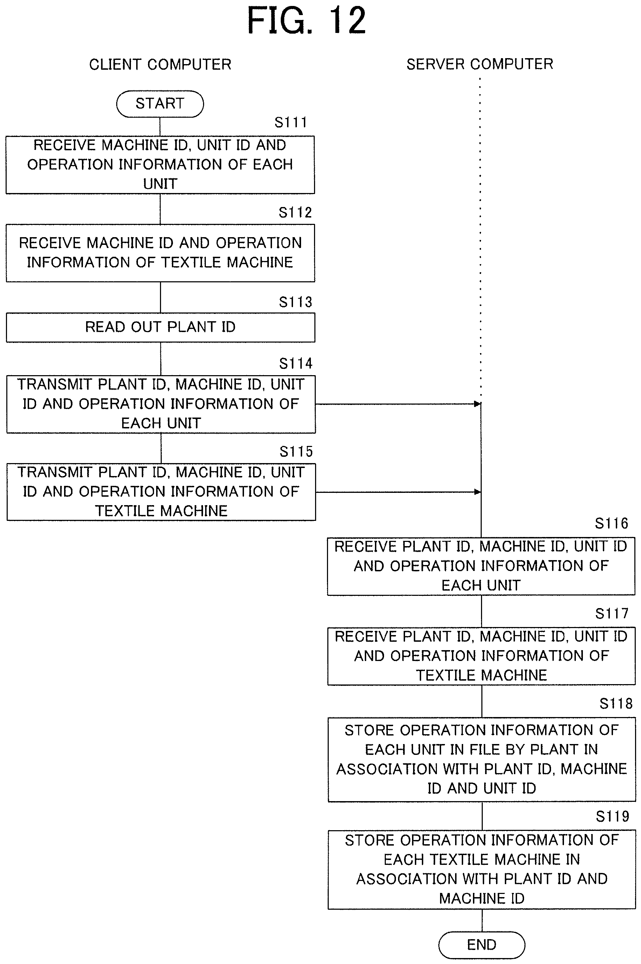

A software processing in the above described hardware configuration will be described using a flowchart. Fig. 12 is a flowchart of procedures for receiving operation information. The CPU 21 of the client computer 20 receives machine IDs, unit IDs and operation information of each unit 4 from the control section 30 via a communication section 26 (step S111). As described before, operation information of the unit 4 includes a MUP, a MLC, a MLW, a MSL, a MIS and an operating ratio. The CPU 21 receives a machine ID and operation information of the textile machine 3 (step S112). As described above, the operation information of the textile machine 3 refers to a SEF, a YLW, a STB and an AMIS.

The CPU 21 reads out a plant ID from the storing section 25 (step S113). Every time the CPU 21 receives the operation information from the control section 30, or in a proper timing (for example, every six hours), the CPU 21 transmits the operation information to the server computer 1. The CPU 21 transmits a plant ID, a machine ID, a unit ID and operation information of each unit 4 to the server computer 1 via the communication section 26 (step S114). The CPU 21 transmits the plant ID, the machine ID, the unit ID and operation information of the textile machine 3 to the server computer 1 via the communication section 26 (step S115). The CPU 11 of the server computer 1 receives the plant ID, the machine ID, the unit ID and the operation information of each unit 4 via a communication section 16 (step S116). The CPU 11 receives the plant ID, the machine ID, the unit ID and the operation information of the textile machine 3 via the communication section 16 (step S117).

The CPU 11 of the server computer 1 stores the operation information of each unit 4 in the file by plant 151 in association with the plant ID, the machine ID and the unit ID (step S118). The CPU 11 stores the operation information of each textile machine 3 in the file by plant 151 in association with the plant ID and the machine ID (step S119). Accordingly, the operation information of each plant will be stored in the file by plant 151.

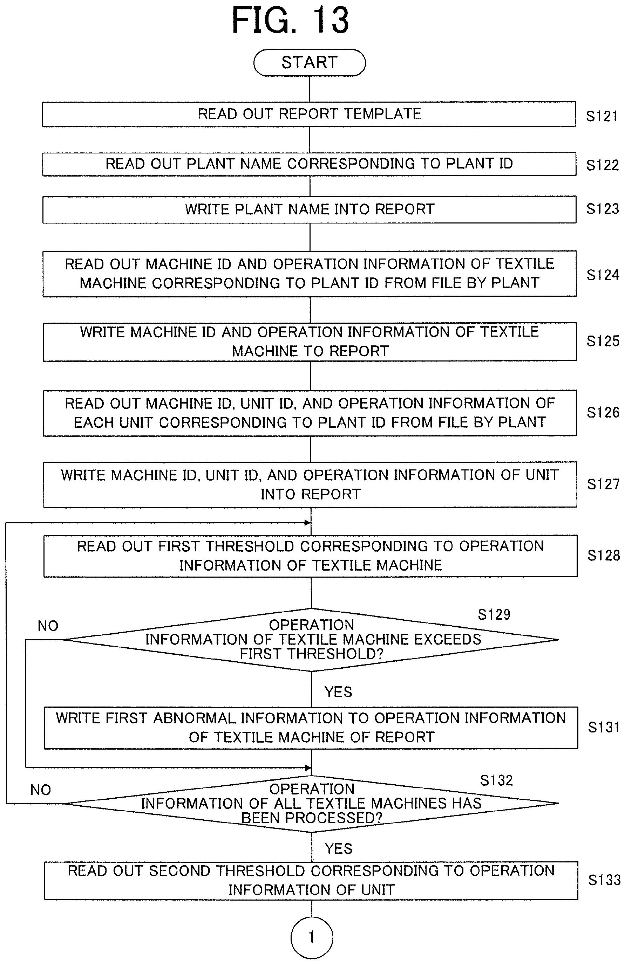

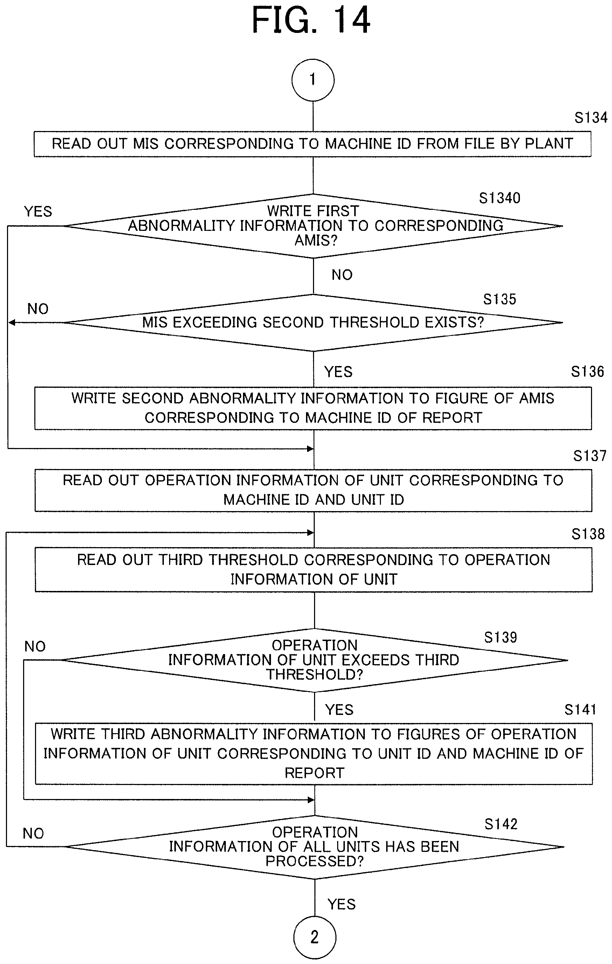

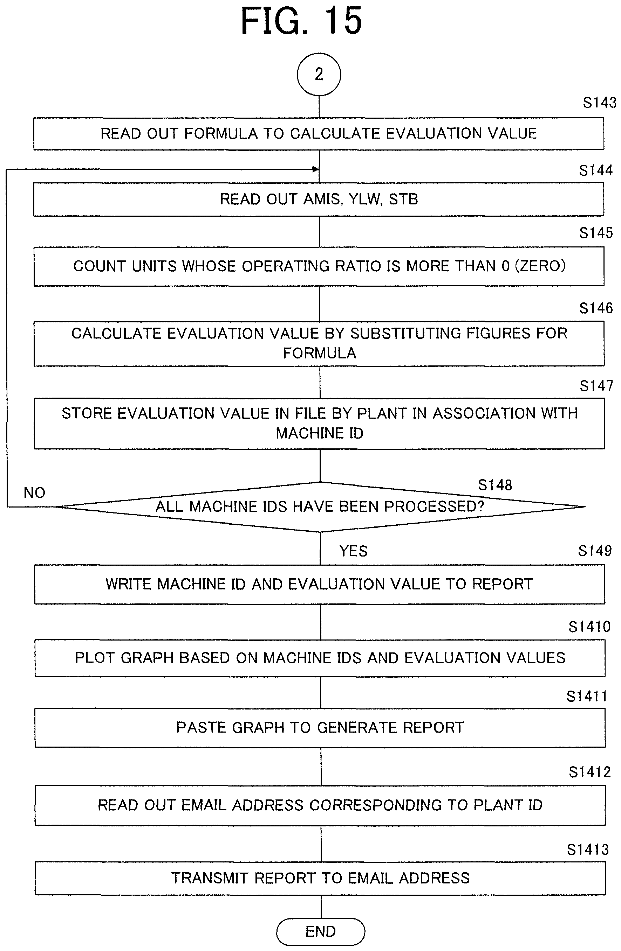

Figs. 13 to 15 are flowcharts indicating procedures for generating a report. The CPU 11 reads out a template for the report from the storing section 15 (step S121). The template of a text format may be prepared as a report. The CPU 11 reads out a plant name of a plant ID, whose report is to be generated, from the address file 152 (step S122). The CPU 11 writes the read plant name to the report (step S123). The CPU 11 reads out the machine ID and the operation information of the textile machine 3 corresponding to the plant ID from the file by plant 151 (step S124). The CPU 11 writes the machine ID and the operation information of the textile machine 3 to the report (step S125).

The CPU 11 reads out a machine ID, a unit ID and operation information of the unit 4 corresponding to the plant ID from the file by plant 151 (step S126). The CPU 11 writes to the report the machine ID, the unit ID, and the operation information of the unit 4 (step S127). The CPU 11 reads out a first threshold corresponding to the operation information of the textile machine 3 form the threshold file 153 (step S128). The CPU 11 determines whether the read operation information of the textile machine 3 exceeds the first threshold (step S129). As shown in Fig. 8, when determining that the information exceeds the threshold ("YES" in step S129), the CPU 11 writes first abnormality information to the operation information of the textile machine 3 corresponding to the machine ID in the report (step S131). When determining that the information does not exceed the first threshold ("NO" in step S129), the CPU 11 skips the procedure in step S131.

The CPU 11 examines whether or not a procedure in step S129 has been executed for operation information of all textile machines 3 (step S132). When determining that the procedure has not been executed for the operation information of all textile machines 3 ("NO" in step S132), the CPU 11 returns the procedure to step S128. The CPU 11 processes the operation information which has not been processed yet. An example in Fig. 8, for example, after data (operation information) of AMISs are processed, the CPU 11 processes data (operation information) of SPEs which have not been processed yet. When determining that operation information of all textile machines 3 has been processed ("YES" in step S132), the CPU 11 shifts the procedure to step S133.

The CPU 11 reads out a second threshold corresponding to operation information of the unit 4 from the threshold file 153 (step S133). The CPU 11 reads out a MIS of each unit 4 corresponding to a machine ID (step S134). The CPU 11 determines whether the first abnormality information has been written to an AMIS corresponding to the MIS of the machine ID in step S131 (step S1340). Alternatively, the CPU 11 may determine whether the corresponding AMIS exceeds the first threshold. When determining that the first abnormality information has not been written ("NO" in step S1340), the CPU 11 shifts the procedure to step S135.

The CPU 11 determines whether a MIS exceeding the second threshold exists or not (step S135). When determining that the MIS exceeding the second threshold exists ("YES" in step S135), the CPU 11 shifts the procedure to step S136. The CPU 11 writes the second abnormality information to a figure (data) of the AMIS corresponding to the machine ID in a report. When determining that the MIS exceeding the second threshold does not exist ("NO" in step S135), the CPU 11 skips the procedure in step S136. In step S1340, when determining that the first abnormality information has been written to the corresponding AMIS ("YES" in step S1340), the CPU 11 shifts the procedure to step S137.

The CPU 11 reads out operation information of the unit 4 corresponding to the machine ID and the unit ID from the file by plant 151 (step S137). The CPU 11 reads out a third threshold corresponding to the operation information of the unit 4 from the threshold file 153 (step S138). The CPU 11 determines whether the operation information of the unit 4 exceeds the third threshold (step S139). When determining that the operation information of the unit 4 exceeds the third threshold ("YES" in step S139), the CPU 11 shifts the procedure to step S141. The CPU 11 writes third abnormality information to each figure (data) of the machine ID, the unit ID and the operation information of the unit 4 (step S141) .

When determining that the operation information of the unit 4 does not exceed the third threshold ("NO" in step S139), the CPU 11 skips the procedure in step S141. The CPU 11 examines whether the operation information of all units 4 has been processed or not (step S142). When determining that the operation information of all units 4 has not been processed yet ("NO" in step S142), the CPU 11 returns the procedure to step S138. In an example in Fig. 10, when data (operation information) of MUPs only have been processed, data (operation information) of MLCs will be processed next.

When determining that the operation information of all units 4 has been processed ("YES" in step S142), the CPU 11 shifts the procedure to step S143. The CPU 11 reads out a formula to calculate an evaluation value from the storing section 15 (step S143). The CPU 11 reads out an AMIS, a YLW, and a STB corresponding to the machine ID from the file by plant 151 (step S144). The CPU 11 refers to the machine ID and the file by plant 151, and counts the number of units 4, whose operating ratio is more than 0 (zero) %, in one machine ID (step S145). The CPU 11 obtains an evaluation value by substituting a value read out in step S144 and a value calculated in step S145 into the formula for calculating an evaluation value (step S146).

The CPU 11 stores the evaluation value in the file by plant 151 in association with the machine ID (step S147). The CPU 11 determines whether or not the procedure in step S147 has been executed for all machine IDs (step S148). When determining that all of the machine IDs have not been processed yet ("NO" in step S148), the CPU 11 returns the procedure to step S144. Accordingly, evaluation values of all machine IDs will be stored in the file by plant 151. When determining that the procedure has been executed for all of the machine IDs ("YES" in step S178), the CPU 11 shifts the procedure to step S149.

The CPU 11 writes the machine ID and the calculated evaluation values to a report (step S149). The CPU 11 plots a graph based on the machine IDs and the evaluation values (step S1410). The CPU 11 generates the report by pasting the graph (step S1411). The CPU 11 reads out an email address corresponding to the plant ID from the address file 152 (step S1412). The CPU 11 sends an email, to which the report is attached, to the email address (step S1413). The report may be directly written in the email by a HTML format. Accordingly, a person in charge of each plant will be able to acquire an operating state properly based on the plurality of pieces of operation information of the units 4 and the textile machines 3 and the evaluation values.

Second Embodiment

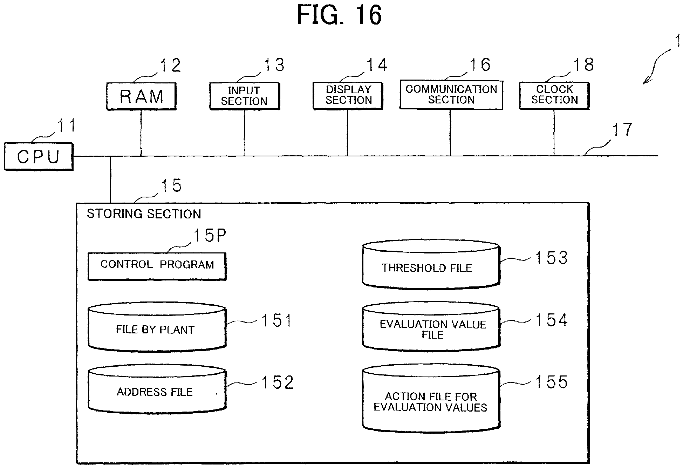

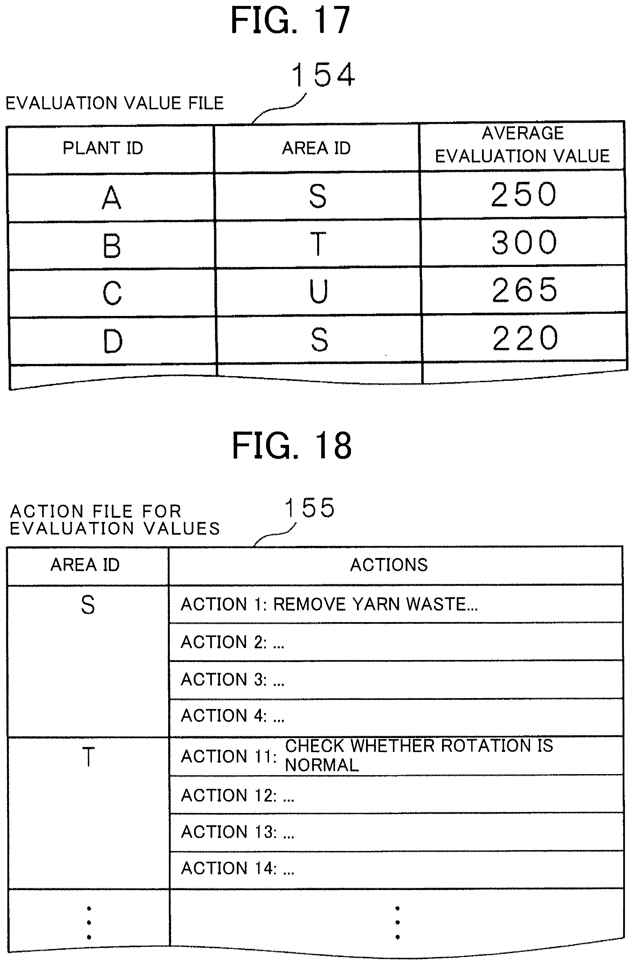

A second embodiment of the present invention relates to relative evaluation. Fig. 16 is a block diagram of a hardware configuration of a server computer 1 according to the second embodiment. Compared to the server computer according to the first embodiment illustrated in Fig. 5, the server computer 1 according to the second embodiment further includes an evaluation value file 154 and an action file for evaluation values 155 in the storing section 15. Fig. 17 is an illustrative record layout of the evaluation value file 154. The evaluation value file 154 includes a field for the plant ID, a field for an area ID, and a field for an average evaluation value. The field for the area ID stores area identification information to identify an area of a plant where a textile machine 3 is provided (hereinafter referred to as "area ID") in association with a plant ID. The area ID is, for example, an area ID which is applied when a country is divided into regions, an area ID to identify a country (e.g., Japan, China, United States, Germany, Brazil), or an area ID which is applied when the world is divided into several regions, e.g., Southeast Asia, North American, or South American.

The field for the average evaluation value stores an average of evaluation values in association with a plant ID. The CPU 11 reads out an evaluation value stored in the file by plant 151 according to the plant ID. The CPU 11 calculates an average evaluation value by obtaining the sum of each evaluation value of each plant ID and then dividing the sum by the number of machine IDs. The CPU 11 stores the average evaluation value in association with the plant ID.

Fig. 18 is an illustrative record layout of the action file for evaluation values 155. The action file for evaluation values 155 includes a field for the area ID, a field for an action or the like. The field for the action stores a plurality of actions (action information) in association with an area ID. Specifically, the field for the action stores the plurality of actions that a user could take when an evaluation value is not good. Such action data are composed of, for example, text data, text data with images, text data with moving images, or the like. In order to describe the embodiment more understandably, the following description will be made on the assumption that four actions are proposed with text data, which is an example and not limited thereto. A plurality of actions may be proposed. In the embodiment of the present invention, an example in which a different action is stored in the action file for evaluation values 155 in association with an area ID is indicated. However, the method is not limited thereto. That is, a plurality of the same actions may be stored in the action file for evaluation values 155 for all areas.

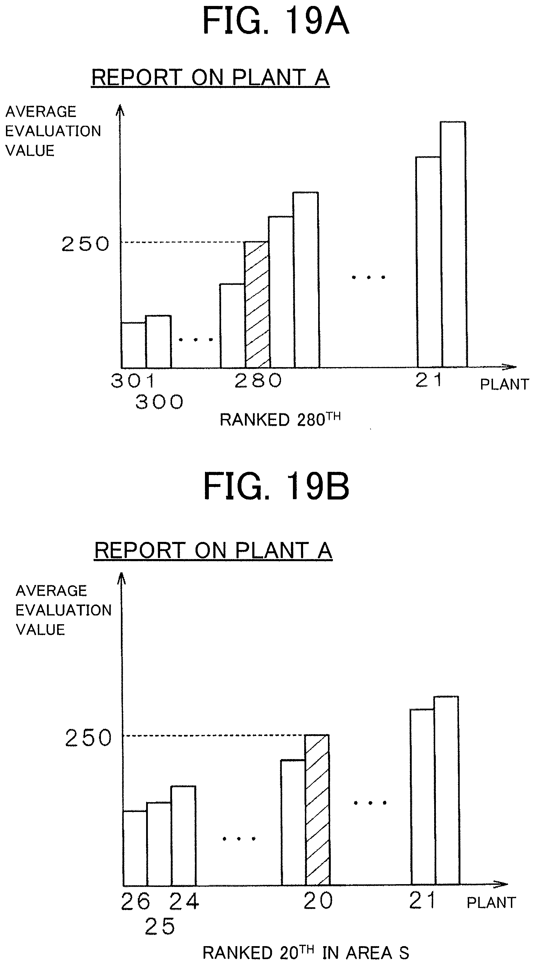

The CPU 11 writes to a report a plant name, an evaluation value, and a rank corresponding to the plant ID. Figs. 19A and 19B are illustrative views of the report. Fig. 19A shows the rank of a plant in all plants using a graph. A horizontal line and a vertical line indicate plants and evaluation values, respectively. The CPU 11 refers to the evaluation value file 154 to sort evaluation values in descending order, and ranks plants by plant ID. The CPU 11 plots average evaluation values of plants on the graph in accordance with the sorted order. Although a bar graph is employed in the embodiment, a line graph may be used instead. The CPU 11 also writes a name of a plant to be reported, the rank and an evaluation value, both of which correspond to the plant ID. In the example in Fig. 19A, a horizontal line and a vertical line indicate the ranks of plant IDs and evaluation values, respectively, and also, a line corresponding to the plant ID is differently indicated from lines of other plant IDs. The example in Fig. 19A shows a report on plant A, which indicates that an average evaluation value of the plant A is 250 and the plant A is ranked 280th.

A graph in Fig. 19B shows ranking by area. The CPU 11 refers to the evaluation value file 154 and extracts a plant ID, whose area ID is the same as an area ID of a plant ID of a plant which is to be reported, and an average evaluation value. Based on the extracted plant IDs and the average evaluation values, the CPU 11 sorts the average evaluation values of the plants in descending order and ranks the plants in the area by plant ID. The CPU 11 plots the average evaluation values on a graph according to the sorted order. The CPU 11 also writes to the report a name of the plant to be reported, the rank corresponding to the plant ID, the area ID, and the evaluation value. An example in Fig. 19B shows a report on the plant A in the area, which indicates that the average evaluation value is 250 and the plant A is ranked 20th in the area.

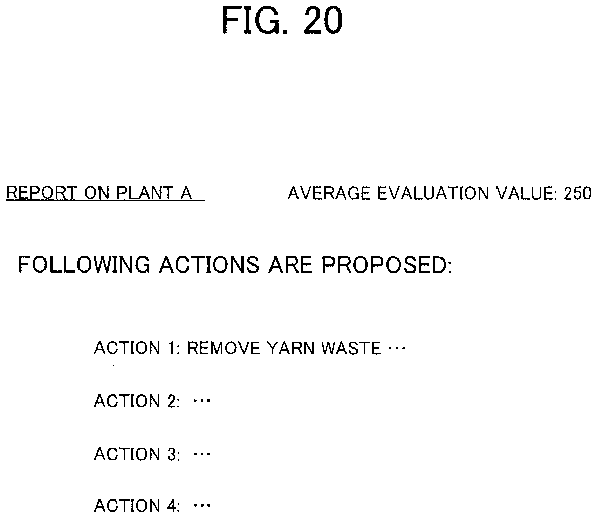

The CPU 11 reads out threshold rank from the storing section 15. The threshold rank is stored as, for example, 250. Alternatively, as the threshold rank, the CPU 11 may use a figure that is obtained by multiplying the total number of plants by a prescribed value (e.g., 0.95). Fig. 20 is an exemplary report in which actions have been written. When a plant to be reported is ranked equal to or below the threshold rank, the CPU 11 refers to the action file for evaluation values 155 and the area ID of the plant, and reads out actions to be taken. The CPU 11 writes a plurality of actions to the report.

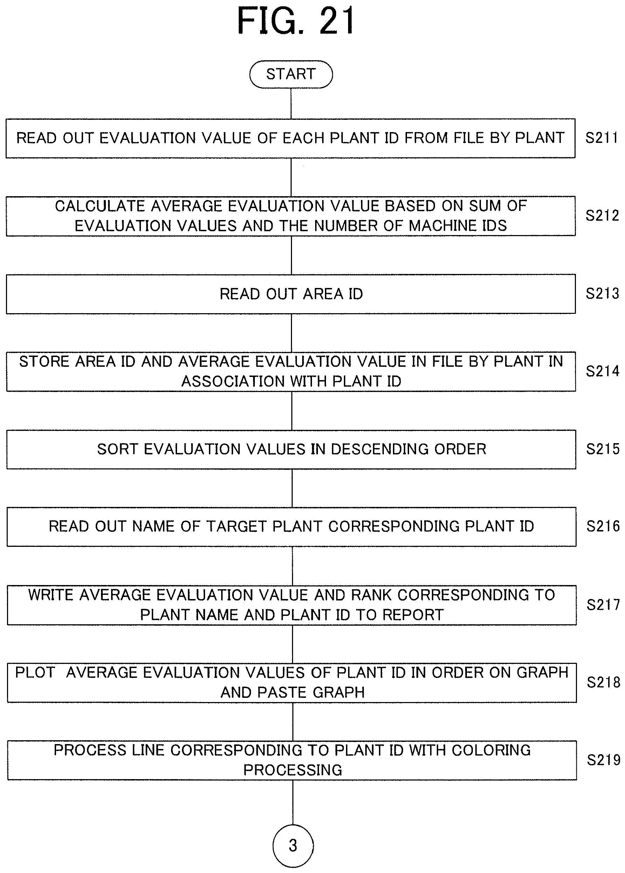

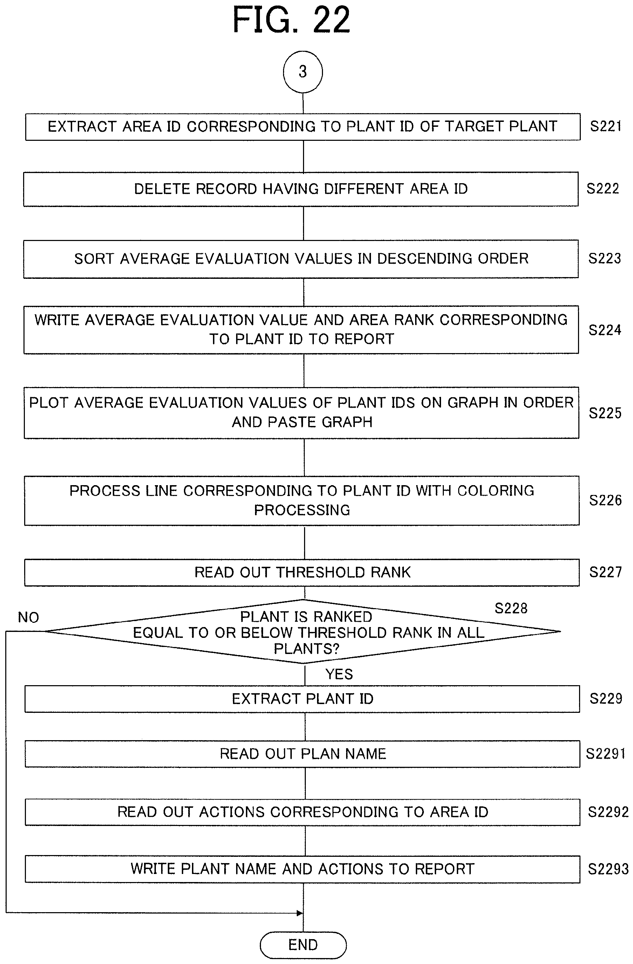

Figs. 21 and 22 are flowcharts indicating procedures for displaying the ranks of plants. The CPU 11 reads out an evaluation value of each plant ID from the file by plant 151 (step S211). The CPU 11 calculates an average evaluation value based on the sum of evaluation values and the number of machine IDs (step S212). Specifically, the CPU 11 calculates an average evaluation value by obtaining the sum of each evaluation value of each plant ID and then dividing the sum by the number of machine IDs. The CPU 11 reads out an area ID of the plant whose report is to be generated (hereinafter sometime referred to as "target plant") from the storing section 15 (step S213). The CPU 11 stores the area ID, which has been read in association with the plant ID, and the average evaluation value in the evaluation value file 154 (step S214).

The CPU 11 sorts the average evaluation values of the evaluation value file 154 in descending order (step S215). The CPU 11 reads out a plant name from the address file 152 in association with the plant ID (step S216). The CPU 11 writes to a report a name of the target plant, an average evaluation value and a rank corresponding to the plant ID (step S217). Further, the CPU 11 reads out average evaluation values of all plant IDs, and plots the average evaluation values on a graph in order. Furthermore, the CPU 11 pastes the plotted graph on the report (step S218). The CPU 11 processes a line (average evaluation value) corresponding to the plant ID of the target plant with color processing (step S219). Specifically, the line is processed with coloring processing to be visually distinguished from lines of other plant IDs.

The CPU 11 extracts an area ID corresponding to the plant ID of the target plant from the evaluation value file 154 (step S221). The CPU 11 deletes records of area IDs, which are other than the extracted area ID, from the evaluation value file 154 (step S222). After the unrelated records are deleted, the CPU 11 sorts the evaluation values of the evaluation value file 154 in descending order (step S223). The CPU 11 writes to a report the name of the target plant, the average evaluation value and its area rank corresponding to the plant ID (step S224). Further, the CPU 11 reads out average evaluation values of plant IDs in the same area, which are stored in the evaluation value file 154, and plots the average evaluation values on a graph in order. Furthermore, the CPU 11 pastes the plotted graph on the report (step S225). The CPU 11 processes a line (average evaluation value) corresponding to the plant ID of the target plant with coloring processing (step S226).

The CPU 11 reads out a threshold rank from the storing section 15 (step S227). The CPU 11 examines whether the target plant written in step S217 is ranked equal to or below the threshold rank in all plants (step S228). The embodiment of the present invention is described on the condition that a plant should be ranked the threshold rank or under. However, the condition is not limited thereto. The CPU 11 may determine whether the target plant written in step S225 is ranked equal to or below the threshold in the area. When determining that the plant is not ranked equal to or below the threshold rank ("NO" in step S228), the CPU 11 terminates the processing.

When determining that the plant is ranked equal to or below the threshold rank in all plants ("YES" in step S228), the CPU 11 shifts the procedure to step S229. The CPU 11 extracts a plant ID which is ranked equal to or below the threshold rank (step S229). The CPU 11 refers to the address file 152 and reads out a plant name corresponding to the plant ID (step S 2291). The CPU 11 refers to the evaluation value file 154 and reads out an area ID corresponding to the plant ID. The CPU 11 reads out a plurality of actions corresponding to the area ID of the target plant (first action information) from the action file for evaluation values 155 (step S2292). The CPU 11 writes to a report the read actions and plant name (or, plant ID) (step S2293). As a result, a report is generated. The procedures for transmitting the report will be omitted since the procedures have been explained in the description on the first embodiment. Each company will thus be able to obtain relative evaluation of the textile machines 3 provided in its own plant. Further, when a plant is ranked lower, by providing a plurality of actions to be taken, it becomes possible to use the textile machine 3 more efficiently. Furthermore, by providing ranks and actions to be taken according to area where humidity, temperature, and quality of yarn to be used vary depending on the area, it becomes possible to provide the users with a more appropriate advice to use the textile machine 3 efficiently.

The second embodiment of the present invention is as described above. Since other features thereof are the same as the first embodiment of the present invention, the same reference numerals are denoted for the corresponding portions, and a detailed description will be omitted.

Third Embodiment

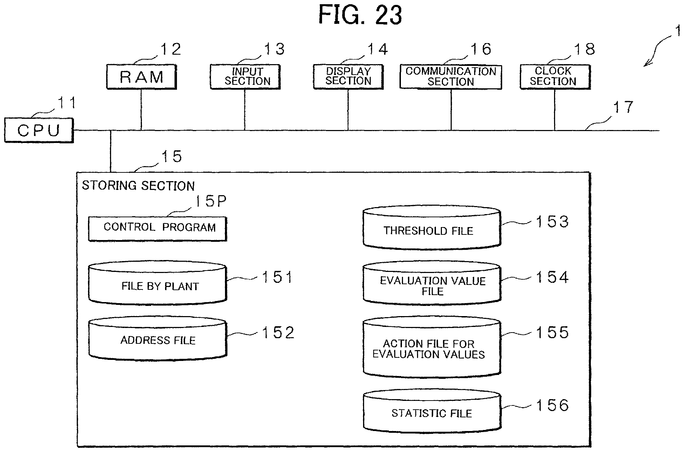

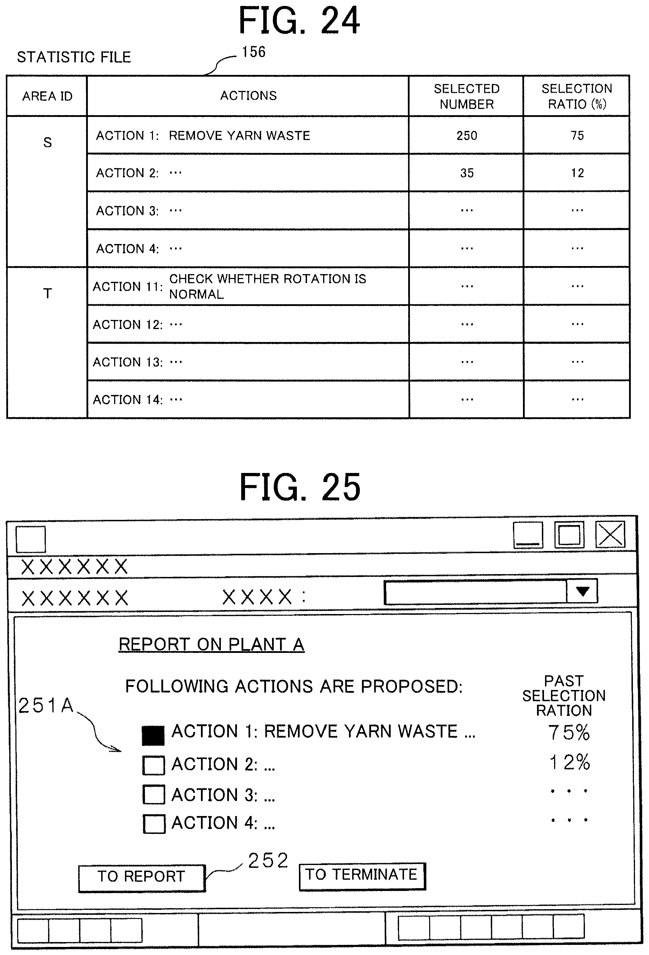

A third embodiment of the present invention relates to statistics data of selected actions. Fig. 23 is a block diagram of a hardware configuration of a server computer 1 according to the third embodiment. Compared to the server computer according to the second embodiment illustrated in Fig. 16, the server computer 1 according to the third embodiment further includes a statistics file 156 in the storing section 15. Fig. 24 is an illustrative record layout of the statistics file 156. The statistics file 156 includes a field for the area ID, a field for the action, a field for the number of selected actions, a field for a selection ratio and the like. The field for the area ID and the field for the action are as described above. The field for the action stores a plurality of actions (first action information) in association with an area ID. Specifically, actions to be taken when an evaluation value is low are stored in the field for the action in association with action identification information to identify each action (hereinafter referred to as "action ID").

The field for the number of selected actions and the field for the selected ratio store the selected number and a selected ratio as statistical information, respectively. The field for the number of selected actions stores the number of action IDs transmitted from the personal computer 20 (first action information identifying information) in association with an area ID and the actions. That is, the field for the number of selected actions stores the number of action IDs to identify each action selected from among the plurality of actions by the personal computer 20. In an example in Fig. 24, actions 1 through 4 are transmitted, and the number that the action 1 is selected and the number that the action 2 is selected are stored as "250" and "35", respectively. The selected number is incremented every time the selected action ID is transmitted.

When an action ID of an action 1 whose area ID is "S" is transmitted, the selected number of the action 1 whose area Id is "S" is incremented. The field for the selected ratio stores a ratio of the number that one action is selected in all selected numbers in an area ID. When the selected number is incremented, a CPU 11 calculates a selection ratio by dividing the selected number of each action by the sum of the selected numbers and then by multiplying the divided value by 100. Specifically, when the selected number is incremented, the CPU 11 reads out the selected number corresponding to each action ID to calculate the sum of the selected numbers. The CPU 11 calculates a selection ratio by dividing the selected value of one action ID by the sum of the selected numbers and then by multiplies the divided value by 100. The CPU 11 repeatedly executes the same procedures for other action IDs. The CPU 11 stores the calculated selection ratio in the statistics file 156 in association with area an ID, an action, and the number of actions selected.

Fig. 25 is an illustrative view of a report. The embodiment of the present invention will be described using a report prepared in a HTML format. The CPU 11 writes a checkbox 251A, which is to be used to select an action, at a position close to each action in association with an action ID and the action. The CPU 11 reads out a selection ratio corresponding to the action ID and the action from the statistics file 156, and writes the selection ratio in association with the action. The embodiment of the present invention has been described on the assumption that a selection ratio calculated based on the number of transmitted action IDs is written as statistical information. However, the statistical information is not limited thereto. Instead of the selection ratio, the CPU 11 may use the number of the transmitted action IDs, that is, the selected number may be stored as statistical information. Alternatively, the CPU 11 may use a selection ratio and the selected number, which are calculated based on the number of the transmitted action IDs, as statistical information. Further, the CPU 11 writes to the report a button 252 to transmit an action ID. The CPU 11 writes to the report a button 252 to report. The CPU 11 writes to the report a program so that an action ID of the selected action can be transmitted to the server computer 1 by a click of the button 252. When the action ID is transmitted, the CPU 11 of the server computer 11 increments the selected number of action IDs in the statistics file 156.

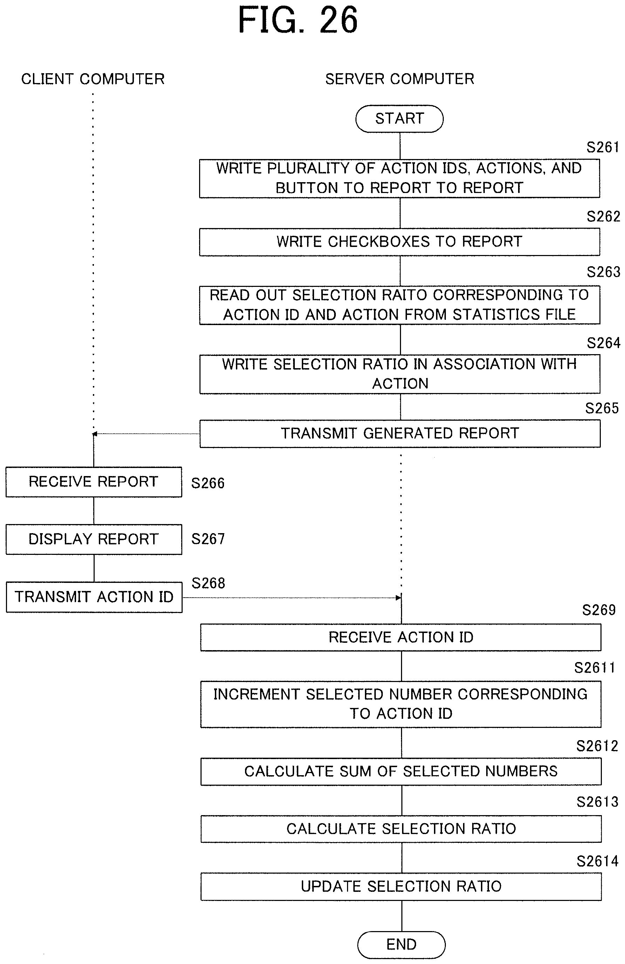

Fig. 26 is a flowchart of procedures for writing a selection ratio. The following processing will be executed after step S2291. In order to describe the embodiment more understandably, the following description will be made on the assumption that an area ID is "S", an ID and a password transmitted from the personal computer 20 have been authorized, and a session has already been established between the personal computer 20 and the server computer 1. The CPU 11 of the server computer 1 writes to a report a plurality of action IDs, a plurality of actions, the button 252 to report (step S261). The CPU 11 writes to the report the checkbox 251A in association with the action ID and the action (step S262). The CPU 11 reads out a selection ratio of the action corresponding to the action ID and the action from the statistics file 156 (step S263).

The CPU 11 writes to the report the selection ratio, which has been read out in association with the action (step S264). The CPU 11 transmits the report, which has been generated in the above described procedures, to the personal computer 20 (step S265). The personal computer 20 receives the report (step S266), and displays the report on the screen (not illustrated) (step S267). The personal computer 20 transmits the action ID received from an input section (not illustrated) to the server computer 1 (step S268). Specifically, when the button 252 to report is clicked, the CPU 11 transmits the action ID, which the input section (not illustrated) has selected by a click of the checkbox 251A, to the server computer 1.

The CPU 11 of the server computer 1 receives the action ID transmitted from the personal computer 20 via a communication section 16 (step S269). The CPU 11 refers to the statistics file 156 and increments the selected number corresponding to the action ID (step S2611). The CPU 11 calculates the sum of the selected numbers in an area ID (step S2612). The CPU 11 calculates a selection ratio by dividing the selected number by the sum of the selected numbers (step S2613). The CPU 11 calculates a selection ratio of all selected numbers of the area ID. The CPU 11 updates the calculated selection ratio in association with the action ID (step S2614). Accordingly, based on various experiences of users in a plant, actions to be taken when any problem occurs will be accumulated.

The third embodiment of the present invention is as described above. Since other features thereof are the same as the first and the second embodiments of the present invention, the same reference numerals are denoted for the corresponding portions, and a detailed description will be omitted.

Fourth Embodiment

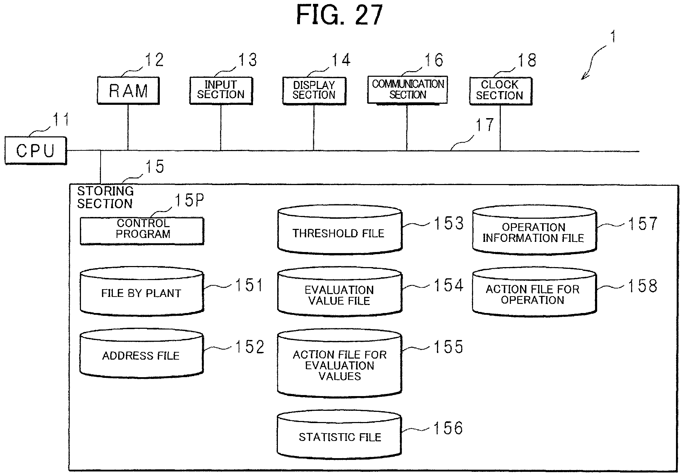

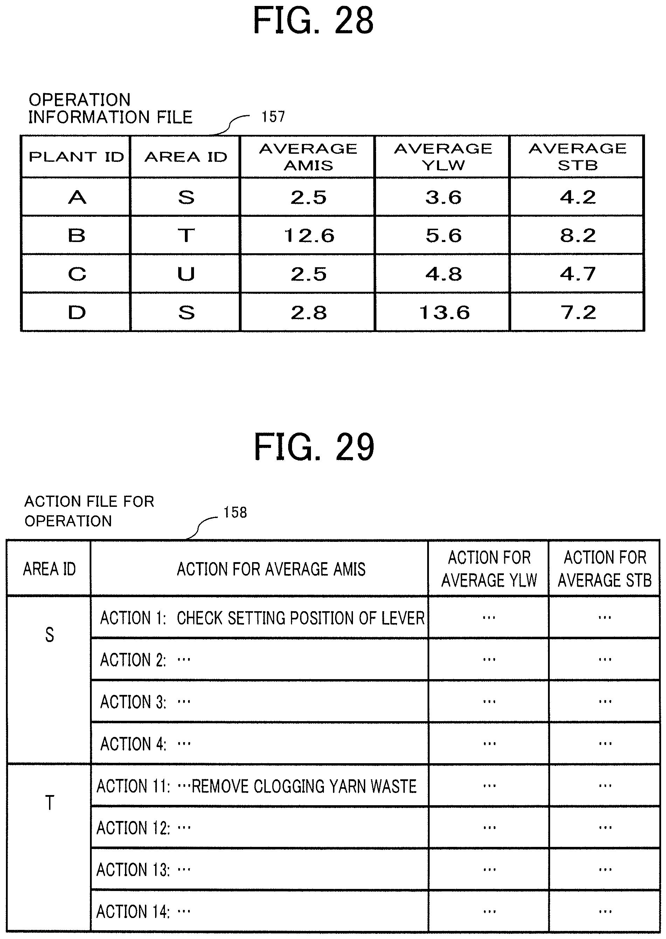

A fourth embodiment of the present invention relates to providing actions to be taken based on operation information. Fig. 27 is a block diagram of a hardware configuration of a server computer 1 according to the fourth embodiment. Compared to the server computer according to the third embodiment illustrated in Fig. 23, the server computer 1 according to the fourth embodiment further includes an operation information file 157 and an action file for operations 158 in the storing section 15. Fig. 28 is an illustrative record layout of the operation information file 157. The operation information file 157 includes a field for plant ID, a field for area ID, a field for average AMIS, a field for average YLW, and a field for average STB. The field for the plant ID and the field for the area ID are as described above, and therefore a detailed description will be omitted.

The field for the average AMIS stores an average of the AMISs of textile machines 3 of a plant in association with a plant ID and an area ID. The CPU 11 refers to the file by plant 151 to calculate the average of the AMISs per plant ID. Specifically, the CPU 11 calculates the average of the AMISs (hereinafter referred to as "average AMIS") by dividing the sum of the AMISs according to the plant ID by the number of machine IDs. The CPU 11 stores the average AMIS in the operation information file 157 in association with the plant ID.

The field for the average YLW stores an average of all YLWs of the textile machines 3 of the plant in association with the plant ID and the area ID. The CPU 11 refers to the file by plant 151 to calculate the average of the YLWs per plant ID. Specifically, the CPU 11 calculates the average of the YLWs (hereinafter referred to as "average YLW") by dividing the sum of the YLWs according to the plant ID by the number of machine IDs. The CPU 11 stores the average YLW in the operation information file 157 in association with the plant ID. The field for the average STB stores an average of the STBs of the textile machines 3 of the plant in association with the plant ID and the area ID. The CPU 11 refers to the file by plant 151 to calculate an average of the STBs per plant ID. Specifically, the CPU 11 calculates the average of the STBs (hereinafter referred to as "average STB") by dividing the sum of STBs according to the plant ID by the number of machine IDs. The CPU 1 stores the average STB in the operation information file 157 in association with the plant ID. In order to describe the embodiment more understandably, the description on the SEF will be omitted.

Fig. 29 is an illustrative record layout of the action file for operation 158. The action file for operation 158 includes a field for the area ID, a field for the action for average AMIS, a field for the action for average YLW, a field for the action for average STB and the like. The field for the action for average AMIS stores a plurality of actions for lowering a MIS (second action information) along with a action ID (second action information identifying information) in association with an area ID. For example, as an action ID1, a text with a drawing including the following message is stored in the field:

check the setting position of the lever .... Likewise, the field for the action for average YLW stores a plurality of actions for lowering a YLW (second action information) along with an action ID in association with an area ID. The field for the action for average STB stores a plurality of actions for lowering the STB (second action information) along with the action IDs. The actions for average AMIS, the actions for average YLM and the action for average STB may be different one another, and also some of them may be the same. In the embodiment, such information is stored according to the area. However, the information may be shared among a plurality of areas. In an example in Fig. 29, an action ID (11) for an average AMIS whose area ID is "T" is: remove yarn clogging.

When an average evaluation value is ranked above the threshold rank in all, but an average of a plurality of pieces of operation information of a plant which are used to calculate an average evaluation value is equal to or below the threshold rank, the CPU 11 writes to a report, as described below, data of the operation information, which is ranked equal to or below the threshold rank, and actions. In the embodiment of the present invention, the AMIS, the YLW and the STB are used as the plurality of pieces of operation information to be used to calculate an average evaluation value. The following description will be made on the assumption that the order of an average AMIS is the threshold rank or under.

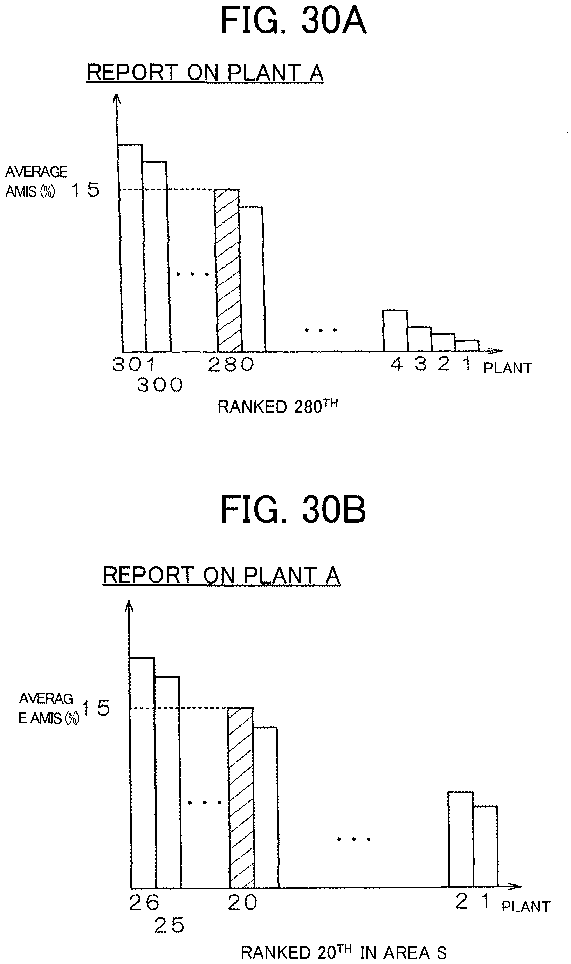

The CPU 11 writes to the report a plant name, an average AMIS and the rank corresponding to a plan ID. Figs. 30A and 30B are illustrative views of the report. Fig. 30A is a graph indicating where a plant is ranked in all plants. A horizontal axis and a vertical axis indicate plants and average AMISs, respectively. The CPU 11 refers to the operation information file 157 to sort the average AMISs in ascending order, and ranks plant IDs. The CPU 11 plots average AMISs on a graph in accordance with the sorted order. Further, the CPU 11 writes to the report the rank and an average AMIS corresponding to the plant ID. In examples in Figs. 30A and 30B, a horizontal axis shows ranking corresponding to plant IDs and a vertical axis shows average AMISs. The CPU 11 also displays a line of the graph corresponding to the plant ID to be distinguished from lines corresponding to other plant IDs. An example in Fig. 30A indicates that an average AMIS is 15 and the plant is ranked 280th.

Fig. 30B is a graph of ranking by area. The CPU 11 refers to the operation information file 157 and extracts a plant ID whose area ID is the same as an area ID of a plant ID of a plant whose report is to be generated, and an average AMIS. Based on the extracted plant ID and the average AMISs, the CPU 11 sorts the average AMISs in ascending order and ranks the plant ID. The CPU 11 plots average AMISs on a graph in accordance with the sorted order. Further, the CPU 11 writes to the report the rank, the area ID, and the average AMIS, all of which are corresponding to the plant ID. An example of Fig. 30B indicates that the average AMIS is 15 and the plant is ranked 20th in the area.

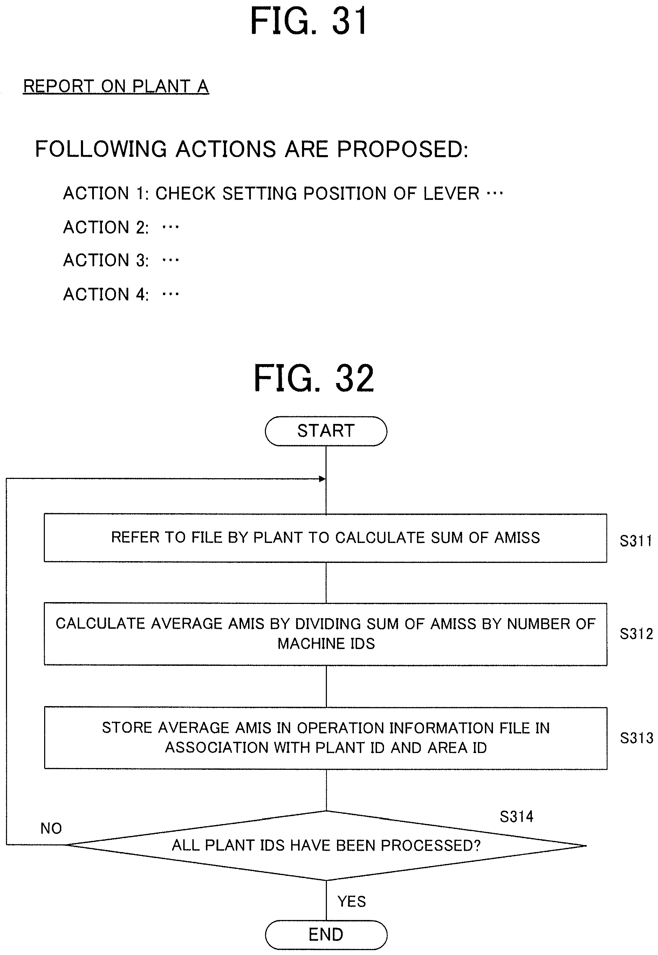

Fig. 31 is an illustrative view of a report in which actions to be taken are written. The CPU 11 reads out actions for average AMIS corresponding to an area ID according to a plant ID. The CPU 11 writes to the report a plurality of actions read out.

Fig. 32 is a flowchart of procedures for calculating an average AMIS. The CPU 11 refers to the file by plant 151 to calculate the sum of the AMISs corresponding to each machine ID of one plant (step S311). The CPU 11 calculates an average AMIS by dividing the sum of the AMISs by the number of machine IDs (step S312). The CPU 11 stores the average AMIS in the operation information file 157 in association with the plant ID and the area ID (step S313). The CPU 11 determines whether the above described procedures have been executed for all plant IDs (step S314).

When determining that the above described procedures have not been executed yet for all plant IDs ("NO" in step S314), the CPU 11 returns a procedure to step S311. Thus, an average AMIS of all plant IDs will be calculated. When determining that the above described procedures have been executed for all plant IDs ("YES" in step S314), the CPU 11 terminates the processing. The above-described procedures may be executed for other operation information, the YLW and the STB.

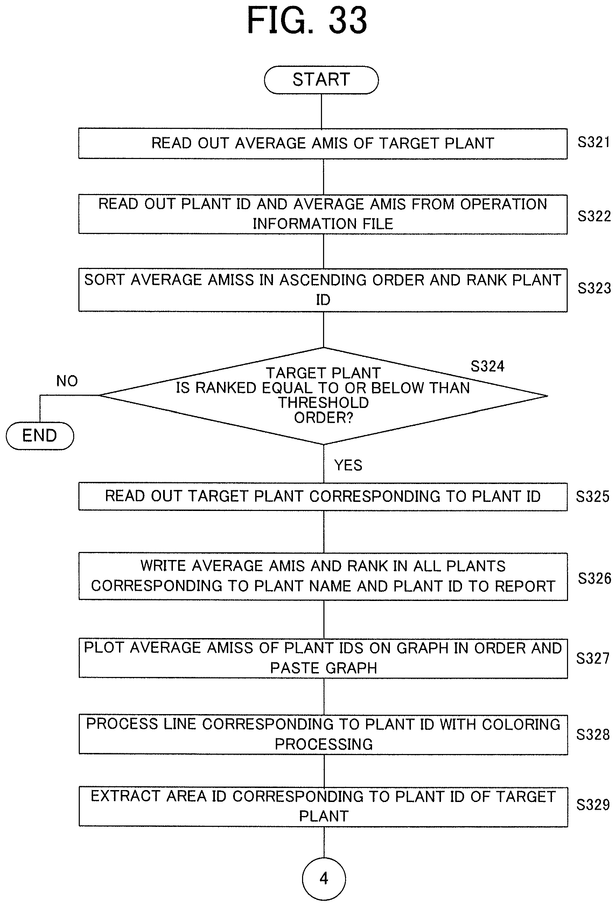

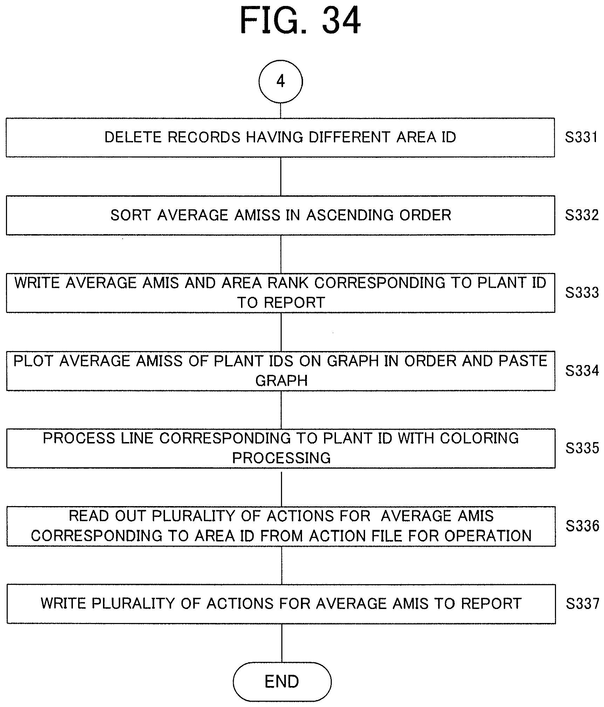

Figs. 33 and 34 are flowcharts of procedures for writing actions based on operation information. When "NO" in step S228, that is, when an average evaluation value is higher than the threshold, the CPU 11 executes the following processing. In the embodiment, the following description will be made on the assumption that when "No" in step S228. However, the following processing may be also executed with the processing when "YES" in step S228. The CPU 11 reads out an average AMIS of a target plant whose report is to be generated, from the operation information file 157 (step S321). The CPU 11 reads out all plant IDs and average AMISs from the operation information file 157 (step S322).

The CPU 11 sorts average AMISs in ascending order and ranks plant IDs (step S323). The CPU 11 reads out the threshold rank from the storing section 15. The threshold rank read herein in this embodiment and the threshold rank read in step S227 (second embodiment) may be different. The CPU 11 examines whether the target plant is ranked equal to or below the threshold rank (step S324). When determining that the target plant is not ranked equal to or below the threshold rank ("NO" in step S324), the CPU 11 terminates the processing. When determining that the target plant is ranked equal to or below the threshold rank ("YES" in step S324), the CPU 11 shifts a procedure to step S325.

The CPU 11 reads out a name of the target plant corresponding to the plant ID from the address file 152 (step S325) . The CPU 11 writes to the report the name of the target plant, an average AMIS and the rank in all plants corresponding to the plant ID to a report (step S326). The CPU 11 also reads out average AMISs of all plant IDs to plot the average AMISs on a graph according to the order, and pastes the graph (step S327). The CPU 11 processes a line (average AMIS) corresponding to the plant ID of the target plant with coloring processing (step S328). Specifically, the CPU 11 processes the line with coloring processing so as to be easily distinguished from lines corresponding to other plant IDs.

The CPU 11 extracts an area ID corresponding to the plant ID of the target plant from the evaluation value file 154 (step S329). The CPU 11 deletes records of area IDs which are other than the area ID extracted from the operation information file 157 (step S331). After the unrelated records are deleted, the CPU 11 sorts the average AMISs of the operation information file 157 in ascending order (step S332). The CPU 11 writes to the report the name of the target plant, an average AMIS and an area ranking corresponding to the plant ID (step S333). Further, the CPU 11 reads out average AMISs of plant IDs in the same area which have been stored in the operation information file 157 to plot the AMISs on a graph according to the order, and pastes the graph on the report (step S334). The CPU 11 processes a line (average AMIS) corresponding to the plant ID of the target plant with coloring processing (step S335).

The CPU 11 reads out a plurality of actions for average AMIS corresponding to the area ID from the operation information file 158 (step S336). The CPU 11 writes to the report the plurality of actions for average AMIS (step S337). The above described procedures may be executed in the same way for other types of operation information, the YLW and the STB. Accordingly, when the rank based on any one of a plurality of pieces of operation information constituting an average evaluation value is low even if the plant ID is ranked high based on the average evaluation value, it becomes possible to provide users with a condition of a machine and necessary actions properly.

The fourth embodiment of the present invention is as described above. Since other features thereof are the same as the features of the first to the third embodiments, the same reference numerals are denoted for the corresponding portions, and a detailed description will be omitted.

Fifth Embodiment

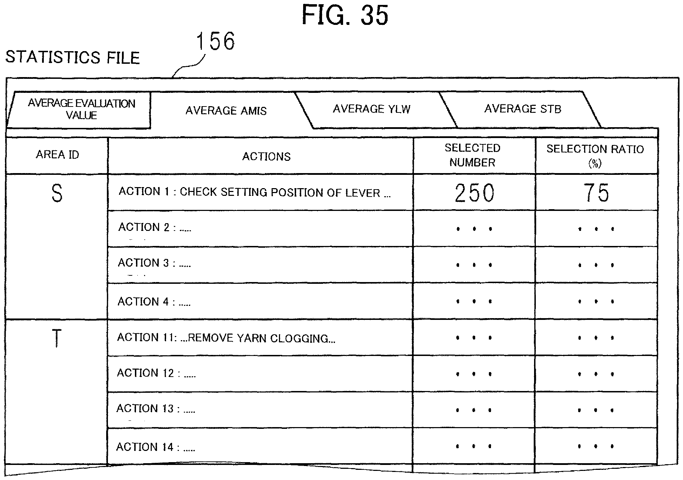

A fifth embodiment of the present invention relates to providing statistic data of actions based on operation information. Fig. 35 is an illustrative record layout of a statistics file 156 according to the fifth embodiment. The statistics file 156 includes a field for area ID, a field for an action, a field for the selected number, a field for a selection ratio and the like per average evaluation value, average AMIS, average YLW, and average STB. The information of each record (field) is as described in the third embodiment, and thus detailed descriptions will be omitted. Fig. 35 shows the selected number and a selection ratio (statistical information) of an average AMIS. As actions for an average AMIS, plural actions corresponding to plural action IDs are stored. The following description will be made by taking an average AMIS as an example.

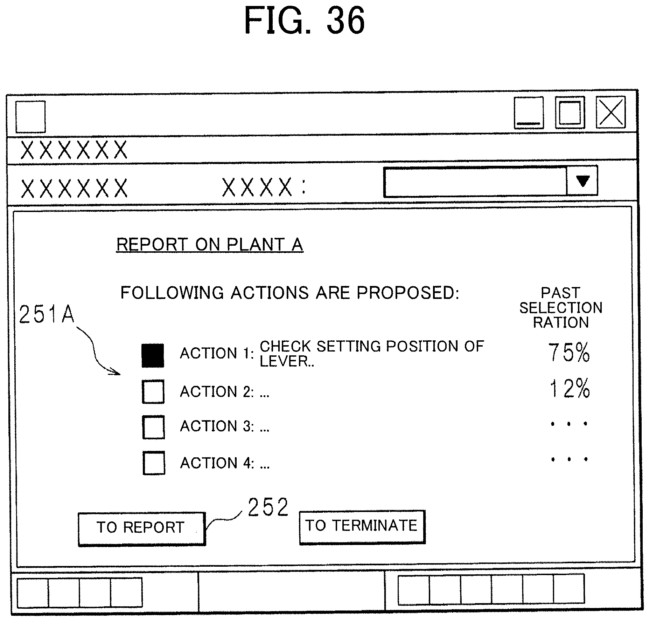

Fig. 36 is an illustrative view of a report. In the embodiment, the following description will be made with a report prepared in a HTML format. The CPU 11 writes a checkbox 251A, which is used to select an action (second action information), at a position close to each corresponding action. The CPU 11 reads out a selection ratio of the action from the statistics file 156 and writes the ratio in association with the action. In the embodiment, writing a selection ratio has been described, which is an example and not limited thereto. However, instead of the selection ratio, a selected number may be written. Alternatively, the selected number as well as the selection ratio may be written. The CPU 11 writes to the report a button 252 to report a transmission of an action ID. The CPU 11 writes the button 252 to transmit an action ID. The CPU 11 writes the button 252 to report. The CPU 11 writes to the report a program so that the selected action ID will be transmitted to the server computer 1, when the button 252 is clicked. When the action ID is transmitted, the CPU 11 of the server computer 1 increments the selected number of the action ID of the statistics file 156.

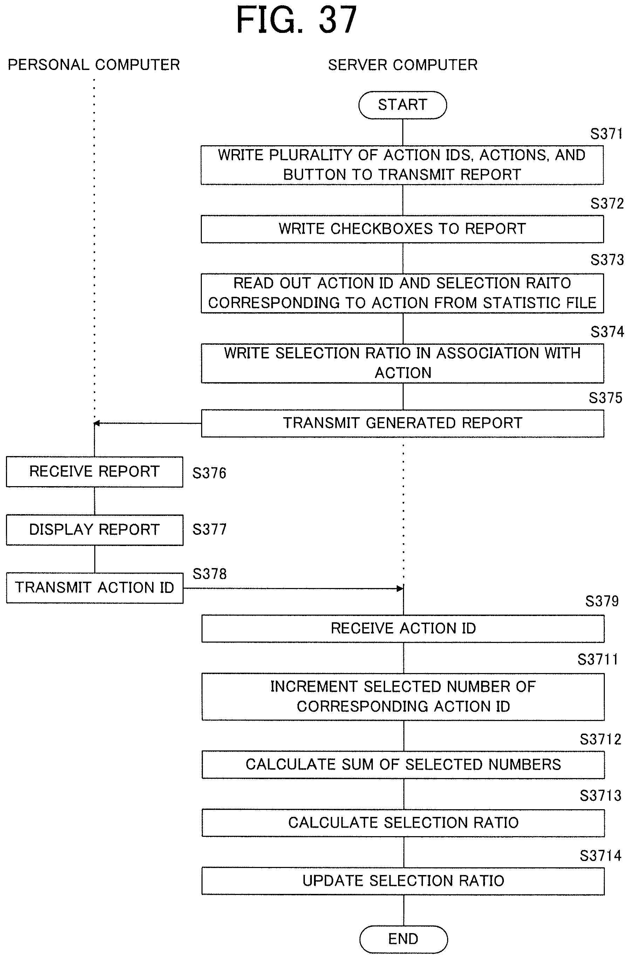

Fig. 37 is a flowchart of procedures for writing a selection ratio. The following processing will be executed after step S337. The CPU 11 of the server computer 1 writes to the report a plurality of action IDs, a plurality of actions, a button 252 to report (step S371). The CPU 11 writes the checkboxes 251A in association with actions (step S372). The CPU 11 reads out an action ID and a selection ratio of the action from the statistics file 156 (step S373).

The CPU 11 writes to the report the selection ration read in association with the action (step S374). The CPU 11 transmits the report generated in the above-described processing to a personal computer 20 (step S375). The personal computer 20 receives the report (step S376) and displays the report on a screen (not illustrated) (step S377). The personal computer 20 transmits an action ID received from the input section (not illustrated) to the server computer 1 (step S378). Specifically, when the button 252 is clicked, the personal computer 20 transmits the action ID, which the input section (not illustrated) selects by a click of the checkbox 251A, to the server computer 1.

The CPU 11 of the server computer 1 receives the action ID transmitted from the personal computer 20 via a communication section 16 (step S379). The CPU 11 refers to the statistics file 156 and increments the number of the actions ID selected (step S3711). The CPU 11 calculates the sum of the selected numbers in the area ID (step S3712). The CPU 11 calculates a selection ratio by dividing the selected number by the sum of the selected numbers (step S3713) . The CPU 11 calculates selection ratios of all selected numbers of the area ID. The CPU 11 updates the calculated selection ratios in association with the action ID (step S3714) Accordingly, based on various experiences of users in a plant, actions to be taken for any problem related to operation information will be accumulated.

The fifth embodiment of the present invention is as described above. Since other features thereof are the same as the first to the fourth embodiments of the present invention, the same reference numerals are denoted for the corresponding portions, and a detailed description will be omitted.

Sixth Embodiment

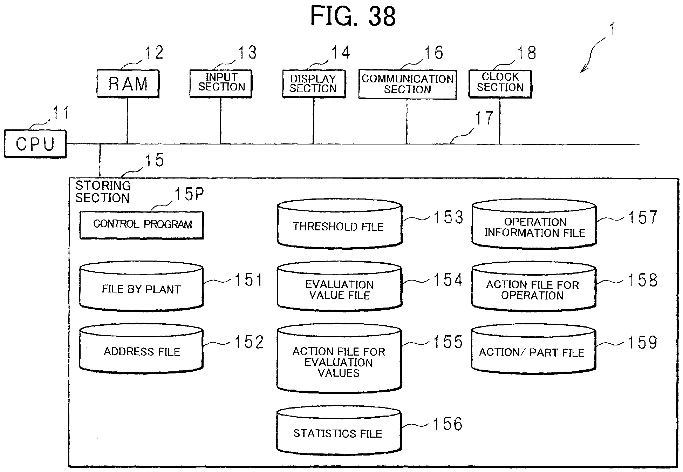

A sixth embodiment of the present invention relates to providing parts information. Fig. 38 is a block diagram of a hardware configuration of a server computer 1 according to the sixth embodiment of the present invention. Compared to the server computer according to the fourth embodiment illustrated in Fig. 27, the server computer 1 according to the sixth embodiment further includes an action/part file 159 in the storing section 15. As described above, a structure and a data layout of each file stored in the storing section 15 are an example and are not limited thereto. Further, some or all of the files may be stored in a database server connected via another recording medium or a communication network N.

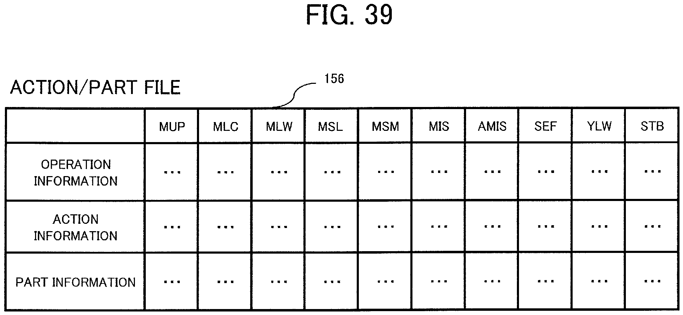

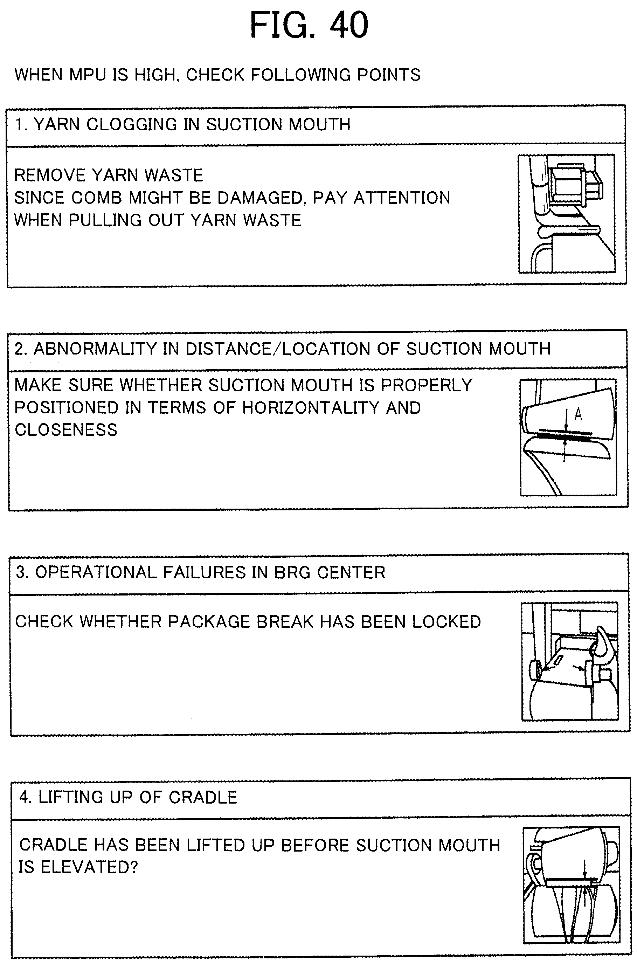

Fig. 39 is an illustrative record layout of the action/ part file 159. The action/ part file 159 stores action information and part information in association with each of a plurality of pieces of operation information. When it is determined that operation information includes a problem (abnormality), the CPU 11 reads out the action information from the action/part file 159 to solve the problem of the operation information. Fig. 40 is an example display of action information. When it is determined that a MUP is abnormal, the CPU 11 reads out a plurality of actions including, a text, a text with an image, a text with a moving image, or the like, and writes to a report the read action information.

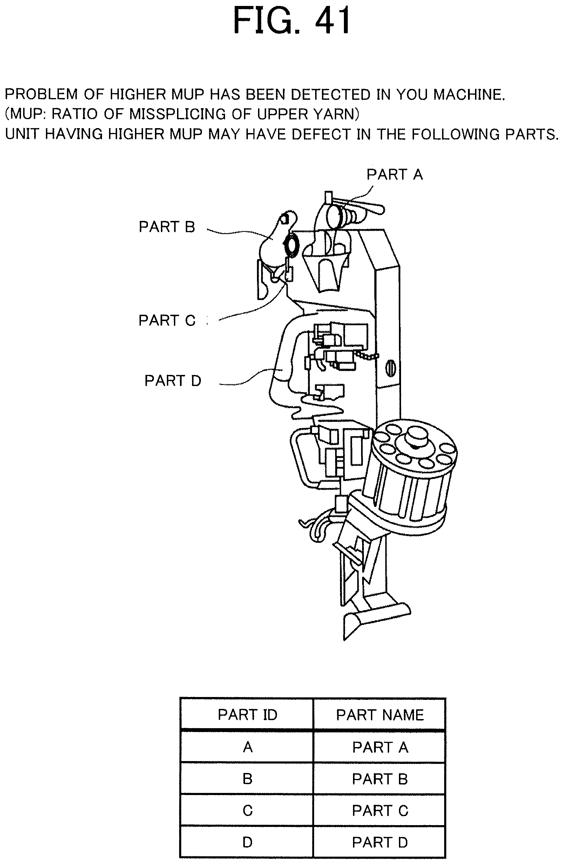

Further, when it is determined that operation information includes a problem (abnormality), the CPU 11 reads out part information corresponding to the relevant operation information from the action/part file 159. Fig. 41 is an example display of part information. When it is determined that a MUP is abnormal, the CPU 11 reads out a text with images including information on a part which is likely to be replaced and its allocation, or a text with moving images including information on a part which is likely to be replace and its allocation, and writes the read information to the report. The content of the part information is one example and not limited thereto. The CPU 11 may write to the report a text data of the information to identify a part, which simply needs to be replaced.

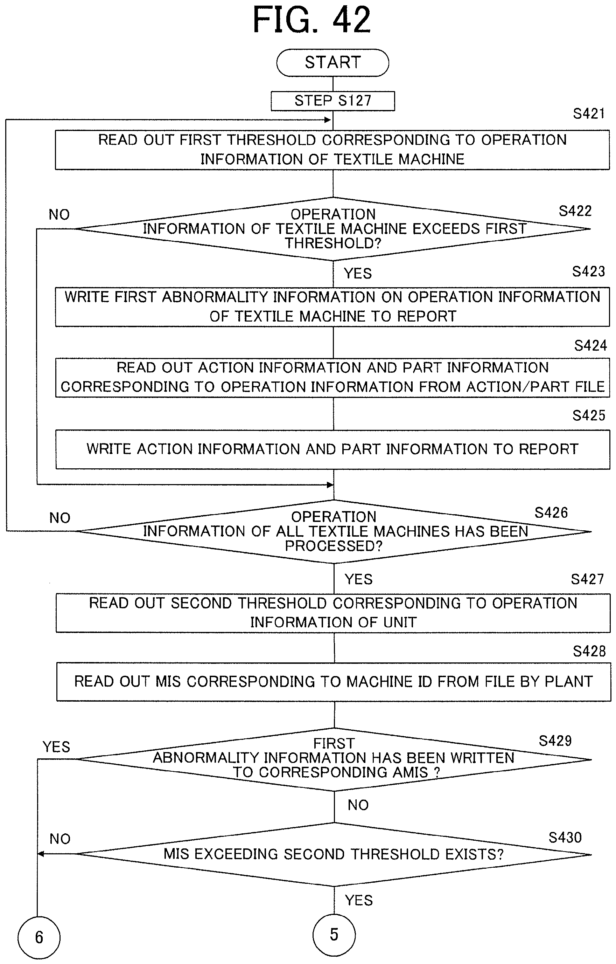

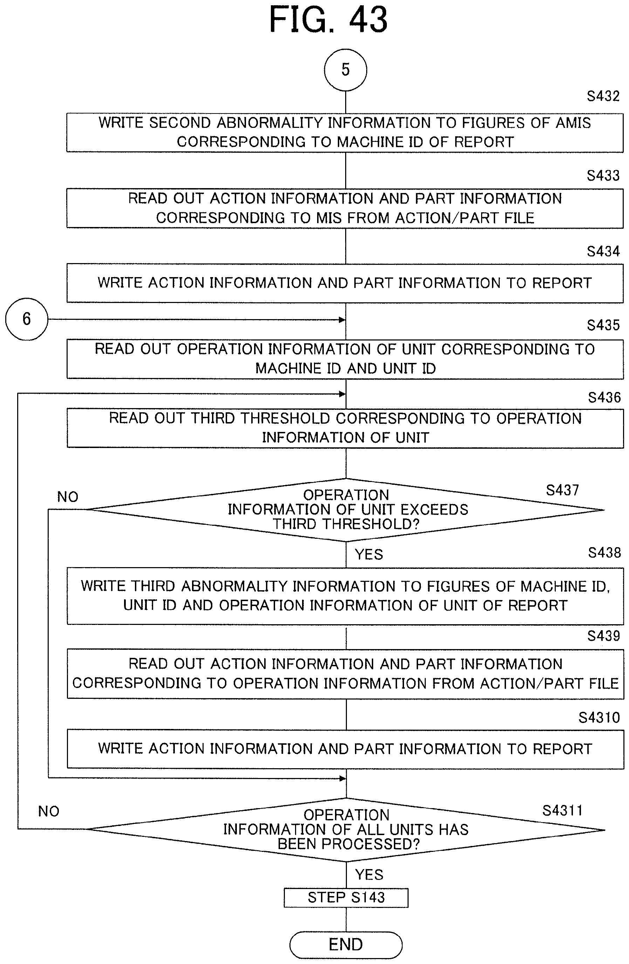

Figs. 42 and 43 are flowcharts indicating procedures for writing action information and part information. The following processing will be executed after step S127. The CPU 11 reads out a first threshold corresponding to operation information of the textile machine 3 from a threshold file 153 (step S421). The CPU 11 determines whether the operation information of the read textile machine 3 exceeds the first threshold (step S422). When determining that the operation information exceeds the read first threshold ("YES" in step S422), as shown in Fig. 8, the CPU 11 writes first abnormality information to the operation information of the textile machine 3 corresponding to a machine ID of the report (step S423). The CPU 11 reads out action information and part information corresponding to the operation information from the action/part file 159 (step S424). The CPU 11 writes to the report the action information and the part information read out (step S425). When determining that the operation information of the textile machine 3 does not exceed the first threshold ("NO" in step S422), the CPU 11 skips procedures from step S423 through step S425.

The CPU 11 determines whether the procedure in step S422 has been executed for operation information of all textile machines 3 (step S426). When determining that the procedure has not been executed yet for the operation information of all textile machines 3 ("NO" in step S426), the CPU 11 returns the procedure to step S421. The CPU 11 executes the processing for operation information which is not processed yet. In an example shown in Fig. 8, after operation information of AMISs is processed, operation information of SEFs which is not processed yet will be processed. When determining that operation information of all textile machines 3 has been processed ("YES" in step S426), the CPU 11 shifts the procedure to step S427.

The CPU 11 reads out a second threshold corresponding to operation information of a unit 4 from a threshold file 153 (step S427). The CPU 11 reads out a MIS of each unit 4 corresponding to a machine ID (step S428). The CPU 11 determines whether first abnormal information has been written to an AMIS corresponding to a MIS of the machine ID in step S423 (step S429). When determining that the first abnormality information has not been written ("NO" in step S429), the CPU 11 shifts the procedure to step S431.

The CPU 11 examines whether a MIS exceeding the second threshold exists or not (step S431). When determining that a MIS exceeding the second threshold exists ("YES" in step S431), the CPU 11 shifts the procedure to step S432. The CPU 11 writes second abnormal information to a figure (data) of an AMIS corresponding to the machine ID of the report (step S432). The CPU 11 reads out action information and part information corresponding to the MIS from the action/part file 159 (step S433). The CPU 11 writes to the report the read action information and part information (step S434).

When determining that there exists no MIS exceeding the second threshold ("NO" in step S431), the CPU 11 skips procedures from step S432 through step S434. Further, when determining that first abnormality information has been written to the corresponding AMIS in step S429 ("YES" in step S429), the CPU 11 shifts the procedure to step S435.

The CPU 11 reads out operation information on the unit 4 corresponding to the machine ID and the unit ID from the file by plant 151 (step S435). The CPU 11 reads out a third threshold corresponding to the operation information of the unit 4 from the threshold file 153 (step S436). The CPU 11 examines whether the operation information of the unit 4 exceeds the third threshold (step S437). When determining that the operation information of the unit 4 exceeds the third threshold ("YES" in step S437), the CPU 11 shifts the procedure to step S438. The CPU 11 writes third abnormality information to figures (data) of the operation information of the unit 4 corresponding to the unit ID and the machine ID (step S438). The CPU 11 reads out action information and part information corresponding to the operation information from the action/part file 159 (step S439). The CPU 11 writes to the report the read action information and part information (step S4310).

When determining that the operation information of the unit 4 does not exceed the third threshold ("NO" in step S437), the CPU 11 skips the procedures from step S438 through step S4310. The CPU 11 examines whether operation information of all units 4 has been processed (step S4311). When determining that operation information of all units 4 has not been processed yet ("NO" in step S4311), the CPU 11 returns the procedure to step S436. In an example in Fig. 10, after data of the field for MUP only have been processed, data of the field for MLC will be processed next.

When determining that operation information of all units 4 has been processed ("YES" in step S4311), the CPU 11 shifts the procedure to step S143. As the following procedures are the same as in the first embodiment, detailed descriptions will be omitted. After the above described processing, users will be able to refer to the report and to promptly become aware of any action to be taken for a problem and a part to be replaced.

The sixth embodiment of the present invention is as described above. Since other features thereof are the same as the first to the fifth embodiments of the present invention, the same reference numerals are denoted for the corresponding portions, and a detailed description will be omitted.

Seventh Embodiment

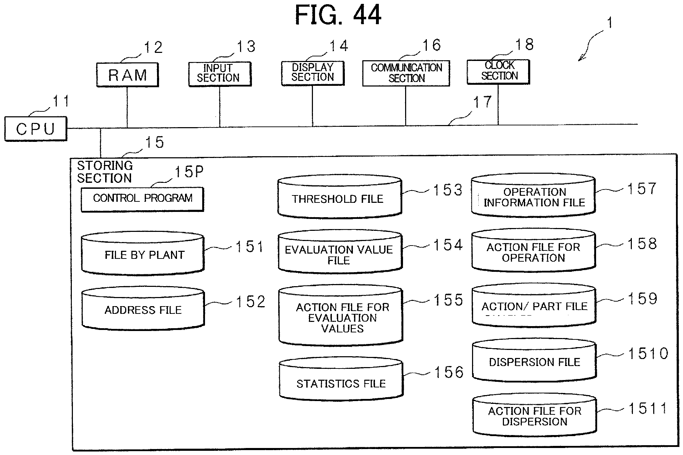

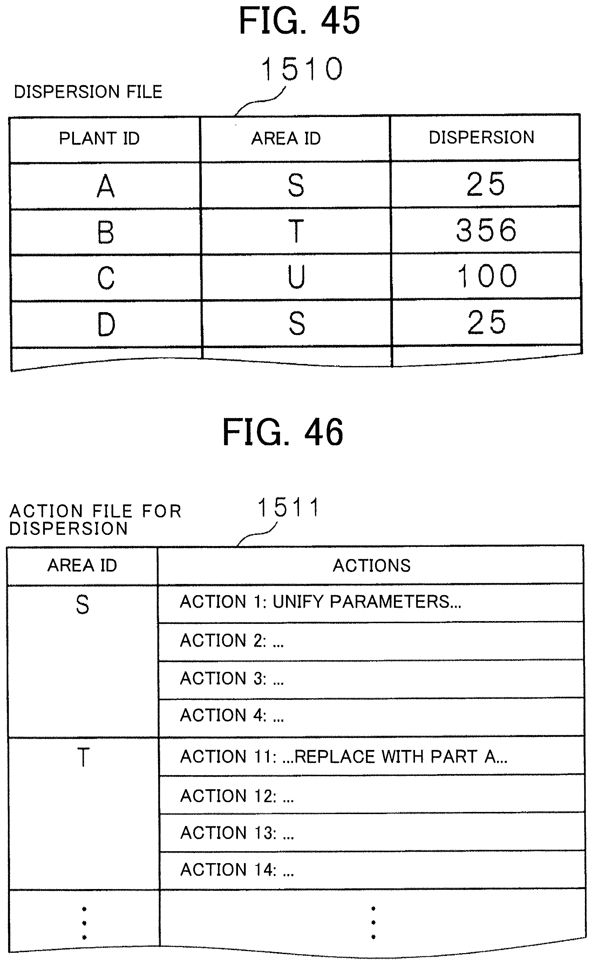

A seventh embodiment relates to using dispersion. Fig. 44 is a block diagram of a hardware configuration of a server computer 1 according to the seventh embodiment of the present invention. Compared to the server computer according to the sixth embodiment illustrated in Fig. 38, the server computer 1 according to the seventh embodiment further includes a dispersion file 1510 and an action file for dispersion 1511 in the storing section 15. Fig. 45 is an illustrative record layout of the dispersion file 1510. The dispersion file 1510 includes a field for plant ID, a field for area ID, and a field for dispersion. The field for dispersion stores dispersion of evaluation values by plant. The CPU 11 reads out evaluation values of all machine IDs of a target plant from the file by plant 151. The CPU 11 calculates a square of the difference between an evaluation value and an averaged evaluation value of each machine ID, and then takes a square root of the sum of the calculated squares of all machine IDs as dispersion. The sum may be used as the dispersion. The CPU 11 stores the dispersion in the dispersion file 1510 in association with a plant ID.

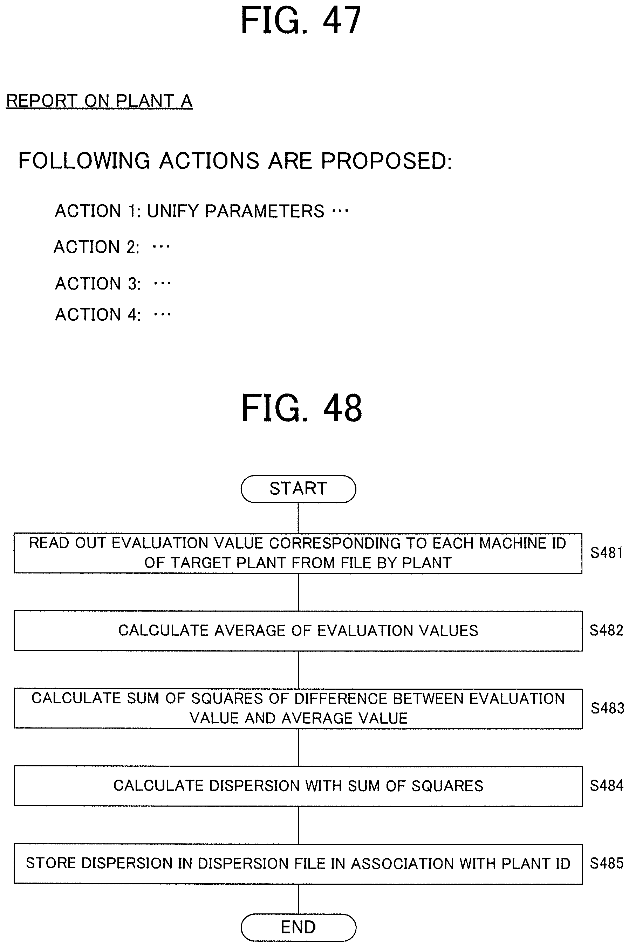

Fig. 46 is an illustrative record layout of an action file for dispersion 1511. The action file for dispersion 1511 includes a field for area ID, a field for the action or the like. The filed of actions stores a plurality of actions to lower dispersion of an area ID in the action file for dispersion 1511 in association with an action ID. As in the case of the above-described embodiments, such actions may be prepared with a text, a text with an image, a text with a moving picture, or a text with voice. The CPU 11 sorts plant names in ascending order of dispersion. The CPU 11 extracts a name of the plant which is ranked equal to or below the threshold rank. Fig. 47 is an illustrative view of a report. The CPU 11 writes the plurality of actions, which have been stored in the action file for dispersion 1511, to the report for the extracted plant.

Fig. 48 is a flowchart of procedures for calculating dispersion. The CPU 11 reads out an evaluation value corresponding to each machine ID of a target plant from the file by plant 151 (step S481). The CPU 11 obtains the sum of all evaluation values of machine IDs and divides the sum by the number of machine IDs to calculate an average of evaluation values (step S482). The CPU 11 calculates the sum of squares of difference between an evaluation value and an averaged evaluation value according to each machine ID (step S483). The CPU 11 calculates dispersion by a square root of the sum (Step S484). The CPU 11 stores the dispersion in the dispersion file 1510 in association with plant IDs (step S485). The CPU 11 repeatedly executes the above-described processing for all machine IDs.

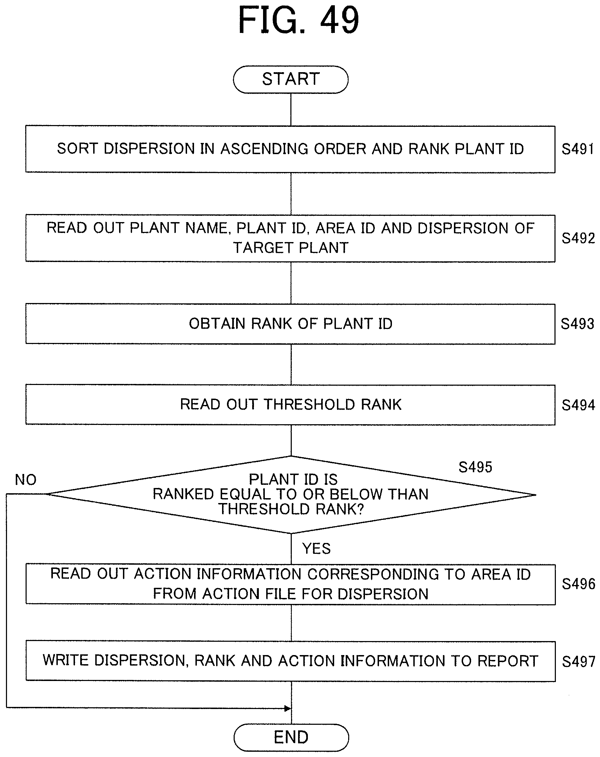

Fig. 49 is a flowchart of procedures for writing dispersion and action information. The CPU 11 refers to the dispersion file 1510 to sort dispersion in ascending order and ranks the plant IDs (step S491). Specifically, the CPU 11 associates a plant ID with a rank, and stores the associated plant ID in a RAM 12. The CPU 11 refers to the address file 152 and the dispersion file 1510 to read out a plant name, a plant ID, an area ID, and dispersion of a target plant whose report is to be generated (step S492). The CPU 11 obtains from the RAM 12 the rank of the plant ID which has been read out in step S492 (step S493). The CPU 11 reads out the threshold rank (e.g. 100th) from the storing section 15 (step S494). The CPU 11 examines whether the plant ID is ranked equal to or below the threshold rank (step S495).

When determining that the plant ID is not ranked equal to or below the threshold rank ("NO" in step S495), the CPU 11 terminates the processing. When determining that the plant ID is ranked equal to or below the threshold rank ("YES" in step S495), the CPU 11 shifts the procedure to step S496. The CPU 11 reads out action information corresponding to the area ID, which has been read in step S492, from the action file for dispersion 1511 (step S496). The CPU 11 writes to the report the dispersion read in step S492, the rank read in step S493, and the action information read in step S496 (step S497). Accordingly, it will become possible to notify users that there is dispersion of evaluation values among textile machines 3, and also to provide appropriate actions to be taken.

The seventh embodiment of the present invention is as described above. Since other features thereof are the same as the first through the sixth embodiments of the present invention, the same reference numerals are denoted for the corresponding portions, and a detailed description will be omitted.

Eighth Embodiment

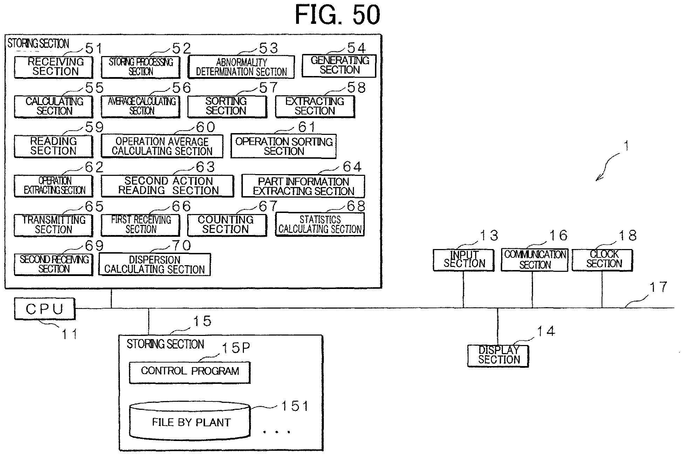

Fig. 50 is a functional block diagram showing operations of the server computer 1 according to the above-described embodiments. When the CPU 11 executes a control program 15P or the like, the server computer 1 operates as follows. Note that description on each file stored in the storing section 15 is omitted. The CPU 11 includes the following sections, all of which are related to the module of the control program 15P, in the RAM 12: a receiving section 51, a storing processing section 52, an abnormality determining section 53, a generating section 54, a calculating section 55, a average calculating section 56, a sorting section 57, an extracting section 58, a reading section 59 and an operation average calculating section 60, an operation sorting section 61, an operation extracting section 62, a second action information reading section 63, a part information extracting section 64, a transmitting section 65, a first receiving section 66, a counting section 67, a statistic calculating section 68, a second receiving section 69 and a dispersion calculating section 70,.

The receiving section 51 receives plant identification information to identify a plant, textile machine identification information to identify a plurality of textile machines 3 connected to a terminal device, unit identification information to identify a plurality of units 4 controlled by the textile machine 3, and a plurality of pieces of operation information on operating states of the textile machines 3 and the units 4. The storing processing section 52 stores the a plurality of pieces of operation information, which the receiving section 51 has received, in the storing section 15 in association with the plant identification information, the machine identification information and the unit identification information. When the operation information stored in the storing section 15 exceeds a threshold value, the abnormality determining section 53 determines that the operation information is abnormal. The generating section 54 generates report information per plant identification information, including the operation information on each textile machine 3 and the units 4 thereof and abnormality information to identify the operation information determined by the abnormal determining section 53.

The calculating section 55 calculates an evaluation value per textile machine 3 of each plant based on the plurality of pieces of operation information stored in the storing section 15. The average calculating section 56 calculates an average evaluation value according to all textile machines 3 of each plant based on the evaluation value per the textile machine 3 of each plant calculated by the calculating section 55. The sorting section 57 sorts operation information according to the order of the average evaluation values, which are calculated by the average calculating section 56 for each plant. The extracting section 58 extracts plant identification information of the plant which is ranked equal to or below the order stored in the storing section 15 by the sorting section 57. The reading section 59 refers to the storing section 15, which has stored the plurality of pieces of first action information in association with the evaluation value, to read out the plurality of pieces of first action information. The operation average calculating section 60 reads out a plurality of pieces of operation information from the storing section 15 to calculate an average value per operation information of all textile machines 3 of the plant.

The operation sorting section 61 sorts operation information according to the order of average values of operation information, which are calculated by the operation average calculating section 60 for each plant. The operation extracting section 62 extracts plant identification information of the plant which is ranked equal to or below the order stored in the memory section 15 by the operation sorting section 61. The second action reading section 63 refers to the memory section 15 where a plurality of piece of action information are stored for each of the plurality of pieces of operation information, and reads out the plurality of pieces of second action information corresponding to the operation information extracted by the extracting section. When the abnormal determining section 53 determines that operation information is abnormal, the part information extracting section 64 extracts part information corresponding to the operation information by referring to the storing section 15 which stores the part information in association with the operation information.

The transmitting section 65 transmits the report information to an address corresponding to the plant identification information. The first receiving section 66 receives first action information identifying information to identify the first action information selected from among the plurality of pieces of first action information. The counting section 67 counts the number of the first action information identifying information received by the first receiving section 66. The statistics calculating section 68 calculates statistical information based on the number of the first action information identifying information counted by the counting section 67. The second receiving section 69 receives second action information identifying information to identify the second action information selected from among the plurality of pieces of the second action information corresponding to the operation information. The dispersion calculating section 70 calculates dispersion according to all textile machines 3 of each plant based on the evaluation value per textile machine 3 of each plant calculated by the calculating section 55.

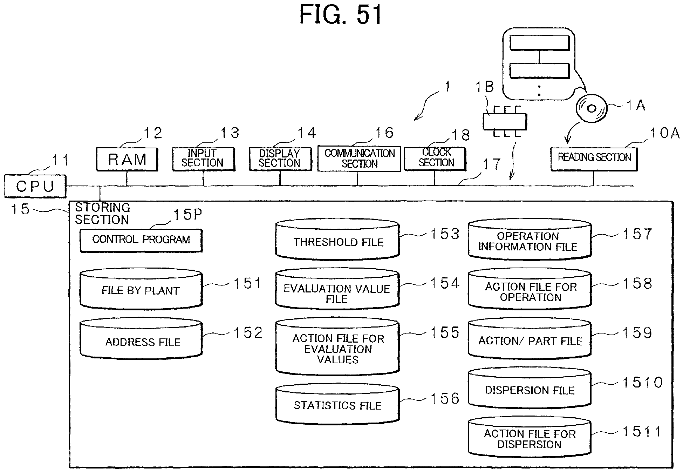

Fig. 51 is a block diagram of a hardware configuration of the server computer 1 according to the eighth embodiment of the present invention. A program to activate the server computer 1 may be stored in the storing section 15 by scanning a portable recording medium 10A, such as a CD-ROM, a DVD (digital versatile disc), a USB (universal serial bus) memory with a reading section, such as, a disc drive or the like. Alternatively, a semiconductor memory 1B storing the program, such as a flash memory, may be used in an information processing device 1. Further, the program may be downloaded from another server computer (not illustrated) connected to the Internet or the like via the communication network N. The details thereof will be described in the following paragraphs.

The server computer 1 illustrated in Fig. 51 scans a program that executes the above described processing of software from the portable recording medium 1A or the semiconductor memory 1B, or downloads the program from another server computer (not illustrated) via the communication network N. The program is installed as the control program 15P and is executed by being loaded in the RAM 12. Thus, the server computer 1 functions as described above.

The eighth embodiment of the present invention is as described above. Since other features thereof are the same as the first through the seventh embodiments of the present invention, the same reference numerals are denoted for the corresponding portions, and a detailed description will be omitted.

Ninth Embodiment

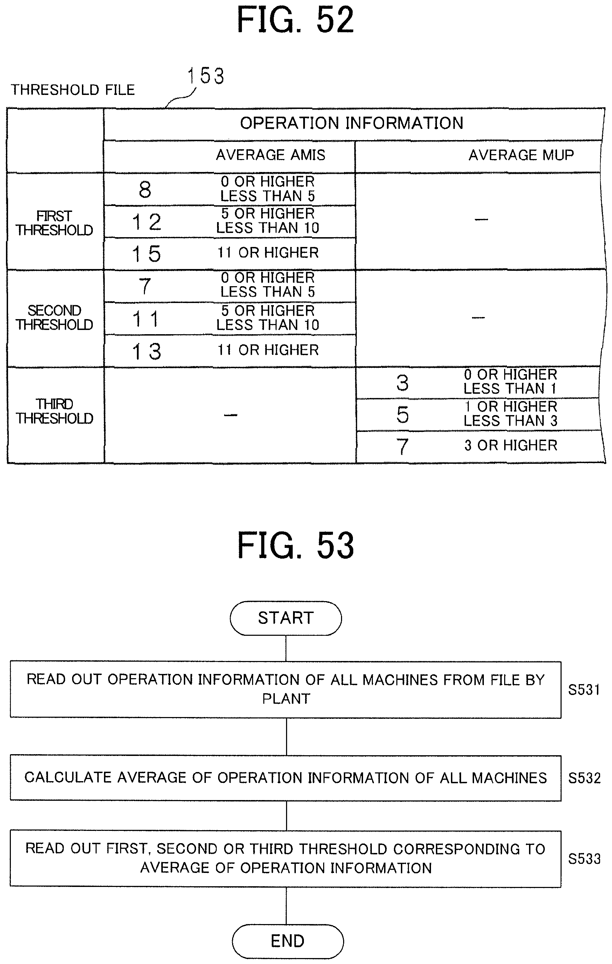

A ninth embodiment of the present invention relates to changing a value of a threshold. The CPU 11 changes the threshold value based on an average value of operation information of all machines of a plant. Fig. 52 is an illustrative record layout of a threshold file 153 according to the ninth embodiment. The threshold file 153 stores threshold values according to a range of the average value of operation information. In an example in Fig. 52, first threshold values of average AMISs are stored: when an average AMIS is 0 or higher and is less than 5, a first threshold is 8; when an average AMIS is 5 or higher and is less than 10, the first threshold is 12; when the average AMIS is 11 or higher, the first threshold value is 15. That is, in the threshold file 153, the threshold value is stored so as to increase or decrease depending on an increase or a decrease in an average value of the operation information of all machines of the plant.

Further, third threshold values of the average AMISs are stored: when an average MUP is 0 or higher and is less than 1, a third threshold value is 3; when the average MUP is 1 or higher and is less than 3, the third threshold value is 5; when the average MUP is 3 or higher, the third threshold value is 7. Likewise, other types of operation information may be stored so that the threshold value increases or decreases according to an increase or a decrease in an average value of operation information of all machines of the plant. That is, the threshold file 153 may store the first threshold values and the second threshold values, both of which increase/decrease depending on an increase or a decrease in a value of an average SEF, an average YLW, and an average STB. Likewise, the threshold file 153 may store the third threshold values that increase/decrease depending on an increase or a decrease in a value of an average MLC, an average MLW, an average MSL, an average MSM and an average MIS.

In the embodiment, a method in which threshold values corresponding to average values of operation information of all machines have been stored in the threshold file 153 has been described. However, the method is an example and not limited thereto. A coefficient that increases or decreases according to an increase or a decrease in an average value may be multiplied by, added to or subtracted by a threshold value. For example, when an average AMIS is 5 or higher and is less than 10, a standard threshold value is 12. When the average AMIS increased to 11 or higher, the standard threshold is multiplied by 1.1. Alternatively, 3 (three) is added to the standard threshold value. When the average AMIS decreased to 0 or higher and less than 5, the standard threshold value is multiplied by 0.9. Alternatively, 3 (three) is subtracted from the standard threshold value.

Fig. 53 is a flowchart of procedures for reading a threshold value. To read the first threshold value, the second threshold value, and the third threshold value in steps S128, S133, and S138, the following processing may be executed. The CPU 11 reads out operation information of all machines from the file by plant 151 (step S531). The CPU 11 calculates an average value of the operation information of all machines (step S532). The CPU 11 reads out a first threshold value, a second threshold value and a third threshold value corresponding to the average values of the operation information from the threshold file 153 (step S533). Thus, a threshold value will be changed according to performance of the textile machine 3 of the plant, which improves the performance of notifying an abnormality.

The ninth embodiment of the present invention is as described above. Since other features thereof are the same as the first embodiment through the eighth embodiment of the present invention, the same reference numerals are denoted to the corresponding portions, and detailed description will be omitted.

**Claims**

1. A central device (1), comprising:

a CPU (11) including a receiving section (51) a storing processing section (52), an abnormality determining section (53) and a generating section (54);

**characterized in that**

the central device (1) is connectable to at least one terminal device (2) provided in each of a plurality of plants via a communication network (N),

the receiving section (51) is adapted to receive plant identification information to identify a plant, machine identification information to identify each textile machine (3) of a plurality of textile machines (3) connected to the terminal device (2), unit identification information to identify each unit (4) of a plurality of units (4) of the textile machine (3), and a plurality of operation information elements on operating states of the textile machines (3) and the units (4),

the storing processing section (52) is adapted to store the plurality of operation information elements received by the receiving section (51) in a storing section (25) in association with the plant identification information, the machine identification information, and the unit identification information,

the abnormality determining section (53) is adapted to determine that an operation information element indicates an abnormal operation of a textile machine (3) or a unit (4) when a value associated with the operation information element stored in the storing section (25) exceeds a threshold,

the generating section (54) is adapted to generate report information per plant identification information, including operation information elements of each of the textile machines (3) and the units (4) and abnormality information determined by the abnormality determining section, and

the CPU (11) is configured to

- refer to an evaluation value file (154) to sort average evaluation values, each associated to a plant ID, and ranks the plants by their ID,

- read out a threshold rank from a storing section (15), whereas when a plant is ranked equal or below said threshold rank, the CPU refers to an action file for evaluation values (155) and read out actions to be taken by an user to use the textile machines of the plant more efficiently,

and

write the actions to the report information.

2.  The central device (1) according to claim 1 further comprising a calculating section (55) adapted to calculate an evaluation value per textile machine (3) of each plant based on the plurality of operation information elements stored in the storing section (25),

wherein the generating section (54) is adopted to generate report information including the evaluation value calculated by the calculating section (55).

3.  The central device (1) according to claim 2, wherein the calculating section (55) is adapted to subtract a value, which is obtained by multiplying operation information elements on a successful yarn splicing ratio or a mis-splicing ratio by a coefficient that has been stored in the storing section (25), and a value, which is obtained by multiplying different operation information elements other than the above operation information elements by the coefficient, from a constant stored in the memory section (25).

4.  The central device (1) according to claim 2 or claim 3 further comprising an average calculating section (56) adapted to calculate an average evaluation value according to all textile machines (3) of each plant based on the evaluation value per textile machine (3) of each plant calculated by the calculating section (55),

wherein the generating section (54) is adapted to generate report information including the average evaluation value calculated by the average calculating section (56).

5.  The central device (1) according to claim 4 further comprising:

a sorting section (57) adapted to sort the average evaluation values calculated by the average calculating section for each plant, and

an extracting section (58) adapted to extract plant identification information of a plant which is ranked equal to or below the order stored in the storing section (25) by the sorting section (57).

**6.** The central device (1) according to claim 5 further comprising:

a reading section (59) adapted to read a plurality of first action information elements, wherein the reading section (59) refers to the storing section (25), the storing section (25) storing the plurality of operation information elements in association with the evaluation value,
wherein the generating section (54) is adapted to generate report information including the plurality of first action information elements read by the reading section (59) and the extracted plant identification information.

**7.** The central device (1) according to claim 5 or claim 6 further comprising an operation average calculating section (60) adapted to calculate an average value per operation information element according to all textile machines (3) of a plant by reading out a plurality of operation information elements from the storing section (25).

**8.** The central device (1) according to claim 7 further comprising:

an operation sorting section (61) adapted to sort operation information elements according to the order of average values of each operation information element calculated by the operation average calculating section (60) for each plant, and
an operation extracting section (62) adapted to extract plant identification information of a plant that is ranked equal to or below the order sorted in the storing section (25) by the operation sorting section (62).

**9.** The central device (1) according to claim 8 further comprising:

a second action reading section (63) adapted to read out a plurality of second action information elements, wherein the second action reading section (63) refers to the storing section (25), the storing section (25) storing the plurality of operation information elements,
wherein the generating section (54) is adapted to generate report information including the second action information elements read out by the second action reading section (63) and the plant identification information extracted by the operation extracting section (62).

**10.** The central device (1) according to any one of claims 1 through 9 further comprising:

a part information extracting section (64) adapted to extract part information corresponding to operation information elements, when the central device (1) refers to the storing section (25) storing the part information in association with operation information elements and the abnormality determining section (53) determines that the operation information element is indicative of an abnormal operation,
wherein the generating section (54) is adapted to generate report information including the abnormal operation information and the part information extracted by the part information extracting section (64).

**11.** The central device (1) according to any one of claims 1 through 10 further comprising a transmitting section (65) adapted to transmit the report information to an address corresponding to the plant identification information.

**12.** The central device (1) according to claim 11 further comprising:

a first receiving section (66) adapted to receive first action information identifying information to identify the first action information selected from among the plurality of first action information elements,
a counting section (67) adapted to count the number of the first action information identifying information received by the first receiving section (66), and
a statistics calculating section (68) adapted to calculate statistic information based on the number of the first action information identifying information counted by the counting section (67),
wherein the generating section (54) is adapted to generate report information including the plurality of first action information elements and the statistic information calculated by the statistics calculating section (68).

**13.** The central device (1) according to claim 11 further comprising:

a second receiving section (69) adapted to receive second action information identifying information to identify the second action information selected from among the plurality of the second action information elements corresponding to operation information elements,
a counting section (67) adapted to count the number of the second action information identifying information corresponding to the operation information elements received by the second receiving section (69), and

a statistics calculating section (68) adapted to calculate statistics information per operation information element based on the number of the second action information identifying information corresponding to the operation information elements counted by the counting section (67),

wherein the generating section (54) is adapted to generate report information including the plurality of second action information elements corresponding to the operation information elements and the statistics information calculated by the statistics calculating section (68).

**14.** The central device (1) according to any one of claims 2 through 4 further comprising:

a dispersion calculating section (70) adapted to calculate dispersion according to all textile machines (3) of a plant based on an evaluation value per textile machine (3) of each plant calculated by the calculating section (55), wherein the generating section (54) is adapted to generate report information including the dispersion calculated by the dispersion calculating section (70).

**15.** An information processing system, comprising:

a central device (1) according to any one of claims 1 through 14;
a plurality of plants (PLANT A, PLANT B, PLANT C), each plant including at least one terminal device (2) and a plurality of textile machines (3) connected to the terminal device (2); and
a communication network (N) connecting the central device (1) and the terminal devices (2);
wherein the terminal device (2) comprises a transmitting section (65) adapted to transmit plant identification information to identify a plant, machine identification information to identify each textile machine (3) of a plurality of textile machines (3) connected to the terminal device (2), unit identification information to identify each unit (4) of a plurality of units (4) of the textile machine (3), and a plurality of operation information elements on operating states of the textile machines (3) and the units (4),
wherein the central device (1) is adapted to
receive, by the receiving section (51), the plant identification information, the machine identification information, the unit identification information and the plurality of operation elements information transmitted by the transmitting section (65),
store, by the storing processing section (52), the plurality of operation information elements received by the receiving section (51) in a storing section (25) in association with the plant identification information, the machine identification information and the unit identification information,
determine, by the abnormality determining section (53), that an operation information element indicates an abnormal operation of a textile machine (3) or a unit (4) when a values associated with the operation information element stored in the storing section (25) exceeds a threshold, and
to generate, by the generating section (54), report information per plant identification information, including operation information elements of each textile machine (3) and unit (4) and abnormality information determined by the abnormality determining section (53).

**16.** An information processing method using a central device (1) with a control section (47) connectable to a terminal device (2) provided in one of a plurality of plants via a communication network, the method comprising:

a receiving step for receiving by the control section (47) plant identification information to identify a plant, machine identification information to identify each textile machine (3) of a plurality of textile machines (3) connected to the terminal device (2), unit identification information to identify each unit (4) of a plurality of units (4) of the textile machine (3), and a plurality of operation information elements on operating states of the textile machines (3) and the units (4),
a memory processing step in which the control section (47) stores the plurality of operation information elements received in the receiving step in a storing section (25) in association with the plant identification information, the machine identification information and the unit identification information,
an abnormality determining step for determining that an operation information element stored in the storing section (25) indicates an abnormal operation of a textile machine (3) or a unit (4), when a values associated with the operation information element exceeds a threshold,
a generating step in which the control section (47) is adapted to generate report information per plant identification information, including operation information elements of each textile machine (3) and unit (4), and abnormality information determined by the abnormality determining section (53), and
the information processing method further comprising:

- referring to an evaluation value file (154) to sort average evaluation values, each associated to a plant ID, and ranks the plants by their ID,

- reading out a threshold rank from a storing section (15), whereas when a plant is ranked equal or below said threshold rank, referring to an action file for evaluation values (155) and reading out actions to be taken by an user to use the textile machines of the plant more efficiently, and

writing the actions to the report information.

17. A program (15P, 25P) used for a computer having a control section (47) connected to a terminal device (2) provided in one of a plurality of plants via a communication network, the program carrying out the method of claim 16 when executed by the computer.

**Patentansprüche**

1. Ein Zentralgerät (1), das folgende Merkmale aufweist:

eine CPU (11), die einen Empfangsabschnitt (51), einen Speicherungsverarbeitungsabschnitt (52), einen Abnormitätsbestimmungsabschnitt (53) und einen Erzeugungsabschnitt (54) umfasst;

**dadurch gekennzeichnet, dass**

das Zentralgerät (1) über ein Kommunikationsnetzwerk (N) mit zumindest einem Endgerät (2), das in jeder einer Mehrzahl von Anlagen vorgesehen ist, verbindbar ist,
der Empfangsabschnitt (51) dazu angepasst ist, Anlagenidentifikationsinformationen zu empfangen, um eine Anlage zu identifizieren, Maschinenidentifikationsinformationen zu empfangen, um jede Textilmaschine (3) einer Mehrzahl von mit dem Endgerät (2) verbundenen Textilmaschinen (3) zu identifizieren, Einheitsidentifikationsinformationen zu empfangen, um jede Einheit (4) einer Mehrzahl von Einheiten (4) der Textilmaschine (3) zu identifizieren, und eine Mehrzahl von Betriebsinformationselementen über Betriebszustände der Textilmaschinen (3) und der Einheiten (4) zu empfangen,
wobei der Speicherungsverarbeitungsabschnitt (52) dazu angepasst ist, die Mehrzahl von seitens des Empfangsabschnitts (51) empfangenen Betriebsinformationselementen in Zuordnung zu den Anlagenidentifikationsinformationen, den Maschinenidentifikationsinformationen und den Einheitsidentifikationsinformationen in einem Speicherungsabschnitt (25) zu speichern,
der Abnormitätsbestimmungsabschnitt (53) dazu angepasst ist, zu bestimmen, dass ein Betriebsinformationselement einen abnormen Betrieb einer Textilmaschine (3) oder einer Einheit (4) angibt, wenn ein Wert, der dem in dem Speicherungabschnitt (25) gespeicherten Betriebsinformationselement zugeordnet ist, eine Schwelle überschreitet,
der Erzeugungsabschnitt (54) dazu angepasst ist, Meldeinformationen pro Anlagenidentifikationsinformation zu erzeugen, einschließlich Operationsinformationselementen jeder der Textilmaschinen (3) und der Einheiten (4), und Abnormitätsinformationen, die durch den Abnormitätsbestimmungsabschnitt bestimmt werden, und
die CPU (11) dazu konfiguriert ist,

auf eine Auswertungswertdatei (154) Bezug zu nehmen, um Durchschnittsauswertungswerte, von denen jeder einer Anlagen-ID zugeordnet ist, zu sortieren und die Anlagen gemäß ihrer ID in eine Rangfolge zu bringen,
eine Schwellenrangfolge aus einem Speicherungsabschnitt (15) auszulesen, wohingegen die CPU dann, wenn eine Anlage bezüglich ihrer Rangfolge als gleichauf mit oder unterhalb der Schwellenrangfolge liegend eingeordnet wird, auf eine Handlungsdatei für Auswertungswerte (155) Bezug nimmt und Handlungen ausliest, die ein Nutzer vornehmen muss, um die Textilmaschinen der Anlage effizienter zu nutzen, und die Handlungen in die Meldeinformationen zu schreiben.

2. Das Zentralgerät (1) gemäß Anspruch 1, das ferner einen Berechnungsabschnitt (55) aufweist, der dazu angepasst ist, einen Auswertungswert pro Textilmaschine (3) jeder Anlage auf der Basis der Mehrzahl von in dem Speicherungsabschnitt (25) gespeicherten Betriebsinformationselementen zu berechnen,

wobei der Erzeugungsabschnitt (54) dazu angepasst ist, Meldeinformationen, die den durch den Berechnungsabschnitt (55) berechneten Auswertungswert umfassen, zu erzeugen.

3. Das Zentralgerät (1) gemäß Anspruch 2, bei dem der Berechnungsabschnitt (55) dazu angepasst ist, einen Wert, der erhalten wird, indem Betriebsinformationselemente bezüglich eines Verhältnisses eines erfolgreichen Carnspleißens oder eines Fehlspleißverhältnisses mit einem Koeffizienten multipliziert werden, der in dem Speicherungsabschnitt (25) gespeichert ist, und einen Wert, der erhalten wird, indem verschiedene Betriebsinformationselemente, die nicht die obigen Betriebsinformationselemente sind, mit dem Koeffizienten multipliziert werden, von einer in dem Speicherungsabschnitt (25) gespeicherten Konstante zu subtrahieren.

4. Das Zentralgerät (1) gemäß Anspruch 2 oder Anspruch 3, das ferner einen Durchschnittsberechnungsabschnitt (56) aufweist, der dazu angepasst ist, einen Durchschnittsauswertungswert gemäß allen Textilmaschinen (3) jeder Anlage auf der Basis des Auswertungswerts pro Textilmaschine (3) jeder Anlage, der durch den Berechnungsabschnitt (55) berechnet wird, zu berechnen,
wobei der Erzeugungsabschnitt (54) dazu angepasst ist, Meldeinformationen zu erzeugen, die den durch den Durchschnittsberechnungsabschnitt (56) berechneten Durchschnittsauswertungswert umfassen.

5. Das Zentralgerät (1) gemäß Anspruch 4, das ferner folgende Merkmale aufweist:

einen Sortierabschnitt (57), der dazu angepasst ist, die durch den Durchschnittsberechnungsabschnitt für jede Anlage berechneten Durchschnittsauswertungswerte zu sortieren, und
einen Extraktionsabschnitt (58), der dazu angepasst ist, Anlagenidentifikationsinformationen einer Anlage, die seitens des Sortierabschnitts (57) bezüglich ihrer Rangfolge als gleichauf mit oder unterhalb der in dem Speicherungsabschnitt (25) gespeicherten Reihenfolge eingeordnet wird, zu extrahieren.

6. Das Zentralgerät (1) gemäß Anspruch 5, das ferner folgendes Merkmal aufweist:

einen Leseabschnitt (59), der dazu angepasst ist, eine Mehrzahl erster Handlungsinformationselemente zu lesen, wobei der Leseabschnitt (59) auf den Speicherungsabschnitt (25) Bezug nimmt, wobei der Speicherungsabschnitt (25) die Mehrzahl von Betriebsinformationselementen in Zuordnung zu dem Auswertungswert speichert,
wobei der Erzeugungsabschnitt (54) dazu angepasst ist, Meldeinformationen zu erzeugen, die die Mehrzahl erster Handlungsinformationselemente, die durch den Leseabschnitt (59) gelesen werden, und die extrahierten Anlagenidentifikationsinformationen umfassen.

7. Das Zentralgerät (1) gemäß Anspruch 5 oder Anspruch 6, das ferner einen Betriebsdurchschnittsberechnungsabschnitt (60) aufweist, der dazu angepasst ist, einen Durchschnittswert pro Betriebsinformationselement gemäß allen Textilmaschinen (3) einer Anlage zu berechnen, indem er eine Mehrzahl von Betriebsinformationselementen aus dem Speicherungsabschnitt (25) ausliest.

8. Das Zentralgerät (1) gemäß Anspruch 7, das ferner folgende Merkmale aufweist:

einen Betriebssortierabschnitt (61), der dazu angepasst ist, Betriebsinformationselemente gemäß der Reihenfolge von Durchschnittswerten jedes Betriebsinformationselements, das durch den Betriebsdurchschnittsberechnungsabschnitt (60) für jede Anlage berechnet wird, zu sortieren, und
einen Betriebsextraktionsabschnitt (62), der dazu angepasst ist, Anlagenidentifikationsinformationen einer Anlage, die seitens des Betriebssortierabschnitts (62) bezüglich ihrer Rangfolge als gleichauf mit oder unterhalb der in dem Speicherungsabschnitt (25) sortierten Reihenfolge eingeordnet wird, zu extrahieren.

9. Das Zentralgerät (1) gemäß Anspruch 8, das ferner folgendes Merkmal aufweist:

einen zweiten Handlungsleseabschnitt (63), der dazu angepasst ist, eine Mehrzahl zweiter Handlungsinformationselemente auszulesen, wobei der zweite Handlungsleseabschnitt (63) auf den Speicherungsabschnitt (25) Bezug nimmt, wobei der Speicherungsabschnitt (25) die Mehrzahl von Betriebsinformationselementen speichert,
wobei der Erzeugungsabschnitt (54) dazu angepasst ist, Meldeinformationen zu erzeugen, die die seitens des zweiten Handlungsleseabschnitts (63) ausgelesenen zweiten Handlungsinformationselemente und die seitens des Betriebsextraktionsabschnitts (62) extrahierten Anlagenidentifikationsinformationen umfassen.

**10.** Das Zentralgerät (1) gemäß einem der Ansprüche 1 bis 9, das ferner folgendes Merkmal aufweist:

einen Teilinformationsextraktionsabschnitt (64), der dazu angepasst ist, Teilinformationen, die Betriebsinformationselementen entsprechen, zu extrahieren, wenn das Zentralgerät (1) auf den Speicherungsabschnitt (25) Bezug nimmt, der die Teilinformationen in Zuordnung zu Betriebsinformationselementen speichert, und der Abnormitätsbestimmungsabschnitt (53) bestimmt, dass das Betriebsinformationselement einen abnormen Betrieb angibt,

wobei der Erzeugungsabschnitt (54) dazu angepasst ist, Meldeinformationen zu erzeugen, die die Abnormer-Betrieb-Informationen und die durch den Teilinformationsextraktionsabschnitt (64) extrahierten Teilinformationen umfassen.

**11.** Das Zentralgerät (1) gemäß einem der Ansprüche 1 bis 10, das ferner einen Sendeabschnitt (65) aufweist, der dazu angepasst ist, die Meldeinformationen an eine den Anlagenidentifikationsinformationen entsprechende Adresse zu senden.

**12.** Das Zentralgerät (1) gemäß Anspruch 11, das ferner folgende Merkmale aufweist:

einen ersten Empfangsabschnitt (66), der dazu angepasst ist, Erste-Handlungsinformations-Identifikationsinformationen zu empfangen, um die aus der Mehrzahl von ersten Handlungsinformationselementen ausgewählten ersten Handlungsinformationen zu identifizieren,

einen Zählabschnitt (67), der dazu angepasst ist, die Anzahl der durch den ersten Empfangsabschnitt (66) empfangenen Erste-Handlungsinformations-Identifikationsinformationen zu zählen, und

einen Statistikberechnungsabschnitt (68), der dazu angepasst ist, Statistikinformationen auf der Basis der Anzahl der durch den Zählabschnitt (67) gezählten Erste-Handlungsinformations-identifikationsinformationen zu berechnen,

wobei der Erzeugungsabschnitt (54) dazu angepasst ist, Meldeinformationen zu erzeugen, die die Mehrzahl erster Handlungsinformationselemente und die durch den Statistikberechnungsabschnitt (68) berechneten Statistikinformationen umfassen.

**13.** Das Zentralgerät (1) gemäß Anspruch 11, das ferner folgende Merkmale aufweist:

einen zweiten Empfangsabschnitt (69), der dazu angepasst ist, Zweite-Handlungsinformations-Identifikationsinformationen zu empfangen, um die zweiten Handlungsinformationen zu identifizieren, die aus der Mehrzahl der zweiten Handlungsinformationselemente ausgewählt sind, die Betriebsinformationselementen entsprechen,

einen Zählabschnitt (67), der dazu angepasst ist, die Anzahl der Zweite-Handlungsinformations-Identifikationsinformationen, die den durch den zweiten Empfangsabschnitt (69) empfangenen Betriebsinformationselementen entsprechen, zu zählen, und

einen Statistikberechnungsabschnitt (68), der dazu angepasst ist, Statistikinformationen pro Betriebsinformationselement auf der Basis der Anzahl der Zweite-Handlungsinformations-Identifikationsinformationen, die den durch den Zählabschnitt (67) gezählten Betriebsinformationselementen entsprechen, zu berechnen,

wobei der Erzeugungsabschnitt (54) dazu angepasst ist, Meldeinformationen zu erzeugen, die die Mehrzahl zweiter Handlungsinformationselemente, die den Betriebsinformationselementen entsprechen, und die durch den Statistikberechnungsabschnitt (68) berechneten Statistikinformationen umfassen.

**14.** Das Zentralgerät (1) gemäß einem der Ansprüche 2 bis 4, das ferner folgendes Merkmal aufweist:

einen Dispersionsberechnungsabschnitt (70), der dazu angepasst ist, eine Dispersion gemäß allen Textilmaschinen (3) einer Anlage auf der Basis eines Auswertungswertes pro Textilmaschine (3) jeder Anlage, der durch den Berechnungsabschnitt (55) berechnet wind, zu berechnen,

wobei der Erzeugungsabschnitt (54) dazu angepasst ist, Meldeinformationen zu erzeugen, die die durch den Dispersionsberechnungsabschnitt (70) berechnete Dispersion umfassen.

**15.** Ein Informationsverarbeitungssystem, das folgende Merkmale aufweist:

ein Zentralgerät (1) gemäß einem der Ansprüche 1 bis 14;
eine Mehrzahl von Anlagen (ANLAGE A, ANLAGE B, ANLAGE C), wobei jede Anlage zumindest ein Endgerät (2) und eine Mehrzahl von mit dem Endgerät (2) verbundenen Textilmaschinen (3) umfasst; und
ein Kommunikationsnetzwerk (N), das das Zentralgerät (1) und die Endgeräte (2) miteinander verbindet;

wobei das Endgerät (2) einen Sendeabschnitt (65) aufweist, der dazu angepasst ist, Anlagenidentifikationsinformationen zu senden, um eine Anlage zu identifizieren, Maschinenidentifikationsinformationen zu senden, um jede Textilmaschine (3) einer Mehrzahl von mit dem Endgerät (2) verbundenen Textilmaschinen (3) zu identifizieren, Einheitsidentifikationsinformationen zu senden, um jede Einheit (4) einer Mehrzahl von Einheiten (4) der Textilmaschine (3) zu identifizieren, und eine Mehrzahl von Betriebsinformationselementen bezüglich Betriebszuständen der Textilmaschinen (3) und der Einheiten (4) zu senden,

wobei das Zentralgerät (1) dazu angepasst ist,

anhand des Empfangsabschnitts (51) die Anlagenidentifikationsinformationen, die Maschinenidentifikationsinformationen, die Einheitsidentifikationsinformationen und die Mehrzahl von Betriebselementinformationen, die durch den Sendeabschnitt (65) gesendet werden, zu empfangen,

anhand des Speicherungsverarbeitungsabschnitts (52) die Mehrzahl von seitens des Empfangsabschnitts (51) empfangenen Betriebsinformationselementen in einem Speicherungsabschnitt (25) in Zuordnung zu den Anlagenidentifikationsinformationen, den Maschinenidentifikationsinformationen und den Einheitsidentifikationsinformationen zu speichern,

anhand des Abnormitätsbestimmungsabschnitts (53) zu bestimmen, dass ein Betriebsinformationselement einen abnormen Betrieb einer Textilmaschine (3) oder einer Einheit (4) angibt, wenn ein Wert, der dem in dem Speicherungsabschnitt (25) gespeicherten Betriebsinformationselement zugeordnet ist, eine Schwelle überschreitet, und

anhand des Erzeugungsabschnitts (54) Meldeinformationen pro Anlagenidentifikationsinformationen, die Betriebsinformationselemente jeder Textilmaschine (3) und Einheit (4) umfassen, und durch den Abnormitätsbestimmungsabschnitt (53) bestimmte Abnormitätsinformationen zu erzeugen.

16. Ein Informationsverarbeitungsverfahren, das ein Zentralgerät (1) mit einem Steuerabschnitt (47) verwendet, das über ein Kommunikationsnetzwerk mit einem Endgerät (2), das in einer einer Mehrzahl von Anlagen vorgesehen ist, verbindbar ist, wobei das Verfahren folgende Schritte aufweist:

einen Empfangsschritt zum Empfangen, seitens des Steuerabschnitts (47), von Anlagenidentifikationsinformationen, um eine Anlage zu identifizieren, von Maschinenidentifikationsinformationen, um jede Textilmaschine (3) einer Mehrzahl von mit dem Endgerät (2) verbundenen Textilmaschinen (3) zu identifizieren, von Einheitsidentifikationsinformationen, um jede Einheit (4) einer Mehrzahl von Einheiten (4) der Textilmaschine (3) zu identifizieren, und einer Mehrzahl von Betriebsinformationselementen über Betriebszustände der Textilmaschinen (3) und der Einheiten (4),

einen Speicherungsverarbeitungsschritt, bei dem der Steuerabschnitt (47) die Mehrzahl von in dem Empfangsschritt empfangenen Betriebsinformationselementen in Zuordnung zu den Anlagenidentifikationsinformationen, den Maschinenidentifikationsinformationen und den Einheitsidentifikationsinformationen in einem Speicherungsabschnitt (25) speichert,

einen Abnormitätsbestimmungsschritt zum Bestimmen, dass ein in dem Speicherungsabschnitt (25) gespeichertes Betriebsinformationselement einen abnormen Betrieb einer Textilmaschine (3) oder einer Einheit (4) angibt, wenn ein Wert, der dem Betriebsinformationselement zugeordnet ist, eine Schwelle überschreitet,

einen Erzeugungsschritt, bei dem der Steuerabschnitt (47) dazu angepasst ist, Meldeinformationen pro Anlagenidentifikationsinformation, einschließlich Operationsinformationselementen jeder Textilmaschine (3) und Einheit (4), und Abnormitätsinformationen, die durch den Abnormitätsbestimmungsabschnitt (53) bestimmt werden, zu erzeugen, und

wobei das Informationsverarbeitungsverfahren ferner folgende Schritte aufweist:

Bezugnehmen auf eine Auswertungswertdatei (154), um Durchschnittsauswertungswerte, von denen jeder einer Anlagen-ID zugeordnet ist, zu sortieren und die Anlagen gemäß ihrer ID in eine Rangfolge zu bringen, Auslesen einer Schwellenrangfolge aus einem Speicherungsabschnitt (15), wohingegen dann, wenn eine Anlage bezüglich ihrer Rangfolge als gleichauf mit oder unterhalb der Schwellenrangfolge liegend eingeordnet wird, auf eine Handlungsdatei für Auswertungswerte (155) Bezug genommen wird und Handlungen ausgelesen werden, die ein Nutzer vornehmen muss, um die Textilmaschinen der Anlage effizienter zu nutzen, und

Schreiben der Handlungen in die Meldeinformationen.

17. Ein Programm (15P, 25P), das für einen Computer verwendet wird, der einen Steuerabschnitt (47) aufweist, der über ein Kommunikationsnetzwerk mit einem Endgerät (2), das in einer einer Mehrzahl von Anlagen vorgesehen ist, verbunden ist, wobei das Programm das Verfahren gemäß Anspruch 16 durchführt, wenn es durch den Computer ausgeführt wird.

**Revendications**

1. Dispositif central (1), comprenant:

   une CPU (11) comportant un segment de réception (51), un segment de traitement de mémorisation (52), un segment de détermination d'anomalie (53) et un segment de génération (54);

   **caractérisé par le fait que**

   le dispositif central (1) peut être connecté à au moins un dispositif terminal (2) prévu dans chacune de la pluralité d'installations via un réseau de communication (N),
   le segment de réception (51) est adapté pour recevoir les informations d'identification d'installation pour identifier une installation, des informations d'identification de machine pour identifier chaque machine textile (3) d'une pluralité de machines textiles (3) connectées au dispositif terminal (2), des informations d'identification d'unité pour identifier chaque unité (4) d'une pluralité d'unités (4) de la machine textile (3), et une pluralité d'éléments d'information de fonctionnement sur les états de fonctionnement des machines textiles (3) et des unités (4),
   le segment de traitement de mémorisation (52) est adapté pour mémoriser la pluralité d'éléments d'information de fonctionnement reçus par le segment de réception (51) dans un segment de mémorisation (25) en association avec les informations d'identification d'installation, les informations d'identification de machine et les informations d'identification d'unité,
   le segment de détermination d'anomalie (53) est adapté pour déterminer qu'un élément d'information de fonctionnement indique un fonctionnement anormal d'une machine textile (3) ou d'une unité (4) lorsqu'une valeur associée à l'élément d'information de fonctionnement mémorisé dans le segment de mémorisation (25) excède un seuil,
   le segment de génération (54) est adapté pour générer des informations de rapport par information d'identification d'installation, comportant des éléments d'information de fonctionnement de chacune des machines textiles (3) et des unités (4) et des informations d'anomalie déterminées par le segment de détermination d'anomalie, et
   la CPU (11) est configurée pour

   - se référer à un fichier de valeurs d'évaluation (154) pour trier les valeurs d'évaluation moyennes associées, chacune, à une 1D d'installation, et classifier les installations par leur ID,
   - lire un classement de seuils d'un segment de mémorisation (15), tandis que, lorsqu'une installation est classifiée égale à ou au-dessous de ladite classification de seuil, la CPU se réfère à un fichier d'action pour des valeurs d'évaluation (155) et lit les actions à réaliser par un utilisateur pour utiliser les machines textiles de l'installation de manière plus efficace, et
   - écrire les actions dans les informations de rapport.

2. Dispositif central (1) selon la revendication 1 comprenant par ailleurs un segment de calcul (55) adapté pour calculer une valeur d'évaluation par machine textile (3) de chaque installation sur base de la pluralité d'éléments d'information de fonctionnement mémorisés dans le segment de mémorisation (25),
   dans lequel le segment de génération (54) est adapté pour générer les informations de rapport comportant la valeur d'évaluation calculée par le segment de calcul (55).

3. Dispositif central (1) selon la revendication 2, dans lequel le segment de calcul (55) est adapté pour soustraire une valeur qui est obtenue en multipliant les éléments d'information de fonctionnement sur un rapport d'épissure de fil réussi ou un rapport d'épissure erronée par un coefficient qui a été mémorisé dans le segment de mémorisation (25), et une valeur qui est obtenue en multipliant différents éléments d'information de fonctionnement autres que les éléments d'information de fonctionnement ci-dessus par le coefficient, à partir d'une constante mémorisée dans le segment de mémoire (25).

4. Dispositif central (1) selon la revendication 2 ou la revendication 3, comprenant par ailleurs un segment de calcul de moyenne (56) adapté pour calculer une valeur d'évaluation moyenne selon toutes les machines textiles (3) de chaque installation sur base de la valeur d'évaluation par machine textile (3) de chaque installation calculée par le segment de calcul (55),
   dans lequel le segment de génération (54) est adapté pour générer des informations de rapport comportant la valeur d'évaluation moyenne calculée par le segment de calcul de moyenne (56).

5. Dispositif central (1) selon la revendication 4, comprenant par ailleurs

un segment de tri (57) adapté pour trier les valeurs d'évaluation moyennes calculées par le segment de calcul de moyenne pour chaque installation, et
un segment d'extraction (58) adapté pour extraire les informations d'identification d'une installation qui est classifiée égale à ou au-dessous de l'ordre mémorisé dans le segment de mémorisation (25) par le segment de tri (57).

6. Dispositif central (1) selon la revendication 5, comprenant par ailleurs:

un segment de lecture (59) adapté pour lire une pluralité de premiers éléments d'information d'action, où le segment de lecture (59) se réfère au segment de mémorisation (25), le segment de mémorisation (25) mémorisant la pluralité d'éléments d'information de fonctionnement en association avec la valeur d'évaluation,
dans lequel le segment de génération (54) est adapté pour générer des informations de rapport comportant la pluralité de premiers éléments d'information d'action lus par le segment de lecture (59) et les informations d'identification d'installation extraites.

7. Dispositif central (1) selon la revendication 5 ou la revendication 6, comprenant par ailleurs un segment de calcul de moyenne de fonctionnement (60) adapté pour calculer une valeur moyenne par élément d'information de fonctionnement selon toutes les machines textiles (3) d'une installation en lisant une pluralité d'éléments d'information de fonctionnement du segment de mémorisation (25).

8. Dispositif central (1) selon la revendication 7, comprenant par ailleurs:

un segment de tri de fonctionnement (61) adapté pour trier les éléments d'information de fonctionnement selon l'ordre des valeurs moyennes de chaque élément d'information de fonctionnement calculé par le segment de calcul de moyenne de fonctionnement (60) pour chaque installation, et
un segment d'extraction de fonctionnement (62) adapté pour extraire les informations d'identification d'une installation qui est classifiée égale à ou au-dessous de l'ordre trié dans le segment de mémorisation (25) par le segment de tri de fonctionnement (62).

9. Dispositif central (1) selon la revendication 8, comprenant par ailleurs:

un deuxième segment de lecture d'action (63) adapté pour lire une pluralité de deuxièmes éléments d'information d'action, où le deuxième segment de lecture d'action (63) se réfère au segment de mémorisation (25), le segment de mémorisation (25) mémorisant la pluralité d'éléments d'information de fonctionnement,
dans lequel le segment de génération (54) est adapté pour générer une information de rapport comportant les deuxièmes éléments d'information d'action lus par le deuxième segment de lecture d'action (63) et les informations d'identification d'installation extraites par le segment d'extraction de fonctionnement (62).

10. Dispositif central (1) selon l'une quelconque des revendications 1 à 9, comprenant par ailleurs:

un segment d'extraction d'informations de pièce (64) adapté pour extraire des informations de pièce correspondant à des éléments d'information de fonctionnement, lorsque le dispositif central (1) se réfère au segment de mémorisation (25) mémorisant les informations de pièce en association avec les éléments d'information de fonctionnement et le segment de détermination d'anomalie (53) détermine que l'élément d'information de fonctionnement indique un fonctionnement anormal,
dans lequel le segment de génération (54) est adapté pour générer des informations de rapport comportant les informations de fonctionnement anormal et les informations de pièce extraites par le segment d'extraction d'informations de pièce (64).

11. Dispositif central (1) selon l'une quelconque des revendications 1 à 10, comprenant par ailleurs un segment de transmission (65) adapté pour transmettre les informations de rapport à une adresse correspondant aux informations d'identification d'installation.

12. Dispositif central (1) selon la revendication 11, comprenant par ailleurs:

un premier segment de réception (66) adapté pour recevoir des premières informations d'identification d'information d'action pour identifier les premières informations d'action sélectionnées parmi la pluralité de premiers éléments d'information d'action,
un segment de comptage (67) adapté pour compter le nombre de premières informations d'identification d'information d'action reçues par le premier segment de réception (66), et

un segment de calcul de statistiques (68) adapté pour calculer les informations statistiques sur base du nombre de premières informations d'identification d'information d'action comptées par le segment de comptage (67), dans lequel le segment de génération (54) est adapté pour générer des informations de rapport comportant la pluralité de premiers éléments d'information d'action et les informations statistiques calculées par le segment de calcul de statistiques (68).

**13.** Dispositif central (1) selon la revendication 11, comprenant par ailleurs:

un deuxième segment de réception (69) adapté pour recevoir les deuxièmes informations d'identification d'information d'action pour identifier les deuxièmes informations d'action sélectionnées parmi la pluralité de deuxièmes éléments d'information d'action correspondant à des éléments d'information de fonctionnement,

un segment de comptage (67) adapté pour compter le nombre de deuxièmes informations d'identification d'information d'action correspondant aux éléments d'information de fonctionnement reçus par le deuxième segment de réception (69), et

un segment de calcul de statistiques (68) adapté pour calculer les informations statistiques par élément d'information de fonctionnement sur base du nombre de deuxièmes informations d'identification d'information d'action correspondant aux éléments d'information de fonctionnement comptés par le segment de comptage (67),

dans lequel le segment de génération (54) est adapté pour générer des informations de rapport comportant la pluralité de deuxièmes éléments d'information d'action correspondant aux éléments d'information de fonctionnement et aux informations statistiques calculées par le segment de calcul de statistiques (68).

**14.** Dispositif central (1) selon l'une quelconque des revendications 2 à 4, comprenant par ailleurs:

un segment de calcul de dispersion (70) adapté pour calculer la dispersion selon toutes les machines textiles (3) d'une installation sur base d'une valeur d'évaluation par machine textile (3) de chaque installation calculée par le segment de calcul (55),

dans lequel le segment de génération (54) est adapté pour générer des informations de rapport comportant la dispersion calculée par le segment de calcul de dispersion (70).

**15.** Système de traitement d'informations, comprenant:

un dispositif central (1) selon l'une quelconque des revendications 1 à 14;

une pluralité d'installations (INSTALLATION A, INSTALLATION B, INSTALLATION C), chaque installation comportant au moins un dispositif terminal (2) et une pluralité de machines textiles (3) connectées au dispositif terminal (2); et

un réseau de communication (N) connectant le dispositif central (1) et les dispositifs terminaux (2);

dans lequel le dispositif terminal (2) comprend un segment de transmission (65) adapté pour transmettre les informations d'identification d'installation pour identifier une installation, les informations d'identification de machine pour identifier chaque machine textile (3) d'une pluralité de machines textiles (3) connectées au dispositif terminal (2), les informations d'identification d'unité pour identifier chaque unité (4) d'une pluralité d'unités (4) de la machine textile (3), et une pluralité d'éléments d'information de fonctionnement sur les états de fonctionnement des machines textiles (3) et des unités (4),

dans lequel le dispositif central (1) est adapté pour

recevoir, par le segment de réception (51), les informations d'identification d'installation, les informations d'identification de machine, les informations d'identification d'unité et la pluralité d'informations d'élément de fonctionnement transmises par le segment de transmission (65),

mémoriser, par le segment de traitement de mémorisation (52), la pluralité d'éléments d'information de fonctionnement reçus par le segment de réception (51) dans un segment de mémorisation (25) en association avec les informations d'identification d'installation, les informations d'identification de machine et les informations d'identification d'unité,

déterminer, par le segment de détermination d'anomalie (53), qu'un élément d'information de fonctionnement indique un fonctionnement anormal d'une machine textile (3) ou d'une unité (4) lorsqu'une valeur associée à l'élément d'information de fonctionnement mémorisé dans le segment de mémorisation (25) excède un seuil, et

générer, par le segment de génération (54), des informations de rapport par information d'identification d'installation, comportant les éléments d'information de fonctionnement de chaque machine textile (3) et unité (4) et les informations d'anomalie déterminées par le segment de détermination d'anomalie (53).

**16.** Procédé de traitement d'informations à l'aide d'un dispositif central (1) avec un segment de commande (47) pouvant être connecté à un dispositif terminal (2) prévu dans l'une d'une pluralité d'installations via un réseau de communication, le procédé comprenant:

une étape de réception pour recevoir par le segment de commande (47) les informations d'identification d'installation pour identifier une installation, les informations d'identification de machine pour identifier chaque machine textile (3) d'une pluralité de machines textile (3) connectées au dispositif terminal (2), les informations d'identification d'unité pour identifier chaque unité (4) d'une pluralité d'unités (4) de la machine textile (3), et une pluralité d'éléments d'information de fonctionnement sur les états de fonctionnement des machines textiles (3) et des unités (4),

une étape de traitement de mémoire dans laquelle le segment de commande (47) mémorise la pluralité d'éléments d'information de fonctionnement reçus à l'étape de réception dans un segment de mémorisation (25) en association avec les informations d'identification d'installation, les informations d'identification de machine et les informations d'identification d'unité,

une étape de détermination d'anomalie pour déterminer qu'un élément d'information de fonctionnement mémorisé dans le segment de mémorisation (25) indique un fonctionnement anormal d'une machine textile (3) ou d'une unité (4), lorsqu'une valeur associée à l'élément d'information de fonctionnement excède un seuil,

une étape de génération dans laquelle le segment de commande (47) est adapté pour générer des informations de rapport par information d'identification d'installation, comportant les éléments d'information de fonctionnement de chaque machine textile (3) et unité (4), et les informations d'anomalie déterminées par le segment de détermination d'anomalie (53), et

le procédé de traitement d'informations comprenant par ailleurs le fait de:

- se référer à un fichier de valeurs d'évaluation (154) pour trier les valeurs d'évaluation moyennes associées, chacune, à une ID d'installation, et classifier les installations par leur ID,
- lire une classification de seuil d'un segment de mémorisation (15), tandis que, lorsqu'une installation est classifiée égale à ou au-dessous de ladite classification de seuil, se référer à un fichier d'action pour les valeurs d'évaluation (155) et lire les actions à réaliser par un utilisateur pour utiliser les machines textiles de l'installation de manière plus efficace, et

écrire les actions dans les informations de rapport.

**17.** Programme (15P, 25P) utilisé pour un ordinateur présentant un segment de commande (47) connecté à un dispositif terminal (2) prévu dans l'une d'une pluralité d'installations via un réseau de communication, le programme réalisant le procédé selon la revendication 16 lorsqu'il est exécuté par l'ordinateur.

# FIG. 1

# FIG. 2

CONTROL SECTION

FIG. 3

# FIG. 4

OPERATION INFORMATION FILE  251

| MACHINE ID | UNIT ID | OPERATION INFORMATION (%) | | | | | | | | | | |
|---|---|---|---|---|---|---|---|---|---|---|---|---|
| | | MUP | MLC | MLW | MSL | MSM | MIS | OPERATING RATIO | SEF | YLW | STB | AMIS |
| 1 | 1 | 2.2 | 2.5 | 3.5 | 2.1 | 0.8 | 3.6 | 76 | | | | |
| | 2 | 3.2 | 2.4 | 3.0 | 1.1 | 1.8 | 6.5 | 85 | | | | |
| | 3 | 2.2 | 2.5 | 5.5 | 8.1 | 0.9 | 5.5 | 90 | 86 | 0.22 | 5.2 | 2.5 |
| | ⋮ | ⋮ | ⋮ | ⋮ | ⋮ | ⋮ | ⋮ | ⋮ | | | | |
| 2 | 1 | 4.2 | 3.5 | 3.5 | 2.1 | 0.8 | 12.5 | 85 | | | | |
| | 2 | 3.2 | 2.4 | 2.0 | 1.3 | 1.8 | 3.5 | 90 | | | | |
| | 3 | 2.2 | 4.5 | 5.5 | 8.1 | 0.9 | 6.5 | 98 | 76 | 0.21 | 4.8 | 3.5 |
| | ⋮ | ⋮ | ⋮ | ⋮ | ⋮ | ⋮ | ⋮ | ⋮ | | | | |

# FIG. 5

# FIG. 6

FILE BY PLANT    151

| PLANT ID: A | PLANT ID: B | PLANT ID: C |
|---|---|---|

| MACHINE ID | UNIT ID | OPERATION INFORMATION (%) | | | | | | | SEF | YLW | STB | AMIS | EVALUATION VALUE |
|---|---|---|---|---|---|---|---|---|---|---|---|---|---|
| | | MUP | MLC | MLW | MSL | MSM | MIS | OPERATING RATIO | | | | | |
| 1 | 1 | 2.2 | 2.5 | 3.5 | 2.1 | 0.8 | 3.5 | 76 | | | | | |
| | 2 | 3.2 | 2.4 | 3.0 | 1.1 | 1.8 | 6.5 | 85 | | | | | |
| | 3 | 2.2 | 2.5 | 5.5 | 8.1 | 0.9 | 5.5 | 90 | 86 | 0.22 | 5.2 | 2.5 | 200 |
| | ⋮ | ⋮ | ⋮ | ⋮ | ⋮ | ⋮ | ⋮ | ⋮ | | | | | |
| 2 | 1 | 4.2 | 3.5 | 3.5 | 2.1 | 0.8 | 12.5 | 85 | | | | | |
| | 2 | 3.2 | 2.4 | 2.0 | 1.3 | 1.8 | 3.5 | 90 | | | | | |
| | 3 | 2.2 | 4.5 | 5.5 | 8.1 | 0.9 | 6.5 | 98 | 76 | 0.21 | 4.8 | 3.6 | 187 |
| | ⋮ | ⋮ | ⋮ | ⋮ | ⋮ | ⋮ | ⋮ | ⋮ | | | | | |

# FIG. 7

ADDRESS FILE 152

| PLANT NAME | PLANT ID | USER ID | PASSWORD | EMAIL ADDRESS |
|---|---|---|---|---|
| A | A | A01 | · · · | A01@xxx.com |
| | | A02 | · · · | A02@xxx.com |

# FIG. 8

REPORT ON PLANT A

| MACHINE ID | OPERATION INFORMATION (%) | | | |
|---|---|---|---|---|
| | AMIS | SEF | YLW | STB |
| 1 | 12.3 | 83.4 | 0.22 | 20 |
| 2 | 8.6 | 73.4 | 0.21 | 28 |
| 3 | 8.3 | 67.3 | 0.25 | 12 |
| 4 | 9.3 | 80.9 | 1.2 | 25 |

# FIG. 9

THRESHOLD FILE $\overset{153}{\frown}$

| | AMIS | SEF | YLW | STB | MUP | MLC | MLW | MSL | MSM | MIS |
|---|---|---|---|---|---|---|---|---|---|---|
| FIRST THRESHOLD | 10 | 70 | 5.0 | 30 | – | – | – | – | – | – |
| SECOND THRESHOLD | 8 | 65 | 5.0 | 25 | – | – | – | – | – | – |
| THIRD THRESHOLD | – | – | – | – | 5.0 | 5.0 | 5.0 | 5.0 | 5.0 | 5.0 |

# FIG. 10

## REPORT ON PLANT A

| MACHINE ID | UNIT ID | MUP | MLC | MLW | MSL | MSM | MIS |
|---|---|---|---|---|---|---|---|
| 1 | 1 | (6.2) | 2.5 | 3.5 | 2.1 | 0.8 | (15.8) |
| | 2 | 3.2 | 2.4 | 3.0 | 1.1 | 1.8 | 3.5 |
| | 3 | 2.2 | 2.5 | 5.5 | (8.1) | 0.9 | 2.9 |
| | ⋮ | ⋮ | ⋮ | ⋮ | ⋮ | ⋮ | ⋮ |
| 2 | 1 | 4.2 | 3.5 | 3.5 | 2.1 | 0.8 | (12.0) |
| | 2 | 3.2 | 2.4 | 2.0 | 1.3 | 1.8 | 2.5 |
| | 3 | 2.2 | (9.5) | 5.5 | 8.1 | 0.9 | 6.2 |
| | ⋮ | ⋮ | ⋮ | ⋮ | ⋮ | ⋮ | ⋮ |

# FIG. 11

REPORT ON PLANT A

| MACHINE ID | 1 | 2 | 3 | · · · |
|---|---|---|---|---|
| EVALUATION VALUE | 180 | 190 | 200 | · · · |

# FIG. 12

CLIENT COMPUTER                    SERVER COMPUTER

( START )

S111

RECEIVE MACHINE ID, UNIT ID AND
OPERATION INFORMATION OF EACH
UNIT

S112

RECEIVE MACHINE ID AND OPERATION
INFORMATION OF TEXTILE MACHINE

S113

READ OUT PLANT ID

S114

TRANSMIT PLANT ID, MACHINE ID, UNIT
ID AND OPERATION INFORMATION OF
EACH UNIT

S115

TRANSMIT PLANT ID, MACHINE ID, UNIT
ID AND OPERATION INFORMATION OF
TEXTILE MACHINE

S116

RECEIVE PLANT ID, MACHINE ID, UNIT ID
AND OPERATION INFORMATION OF
EACH UNIT

S117

RECEIVE PLANT ID, MACHINE ID, UNIT ID
AND OPERATION INFORMATION OF
TEXTILE MACHINE

S118

STORE OPERATION INFORMATION OF
EACH UNIT IN FILE BY PLANT IN
ASSOCIATION WITH PLANT ID, MACHINE
ID AND UNIT ID

S119

STORE OPERATION INFORMATION OF
EACH TEXTILE MACHINE IN
ASSOCIATION WITH PLANT ID AND
MACHINE ID

( END )

# FIG. 13

( START )

| READ OUT REPORT TEMPLATE | S121 |

| READ OUT PLANT NAME CORRESPONDING TO PLANT ID | S122 |

| WRITE PLANT NAME INTO REPORT | S123 |

| READ OUT MACHINE ID AND OPERATION INFORMATION OF TEXTILE MACHINE CORRESPONDING TO PLANT ID FROM FILE BY PLANT | S124 |

| WRITE MACHINE ID AND OPERATION INFORMATION OF TEXTILE MACHINE TO REPORT | S125 |

| READ OUT MACHINE ID, UNIT ID, AND OPERATION INFORMATION OF EACH UNIT CORRESPONDING TO PLANT ID FROM FILE BY PLANT | S126 |

| WRITE MACHINE ID, UNIT ID, AND OPERATION INFORMATION OF UNIT INTO REPORT | S127 |

| READ OUT FIRST THRESHOLD CORRESPONDING TO OPERATION INFORMATION OF TEXTILE MACHINE | S128 |

S129

NO ◁— OPERATION INFORMATION OF TEXTILE MACHINE EXCEEDS FIRST THRESHOLD?

YES

| WRITE FIRST ABNORMAL INFORMATION TO OPERATION INFORMATION OF TEXTILE MACHINE OF REPORT | S131 |

S132

NO ◁— OPERATION INFORMATION OF ALL TEXTILE MACHINES HAS BEEN PROCESSED?

YES

| READ OUT SECOND THRESHOLD CORRESPONDING TO OPERATION INFORMATION OF UNIT | S133 |

( 1 )

# FIG. 14

( 1 )

S134

READ OUT MIS CORRESPONDING TO MACHINE ID FROM FILE BY PLANT

S1340

YES ◁——— WRITE FIRST ABNORMALITY INFORMATION TO CORRESPONDING AMIS? ———▷

NO

S135

NO ◁——— MIS EXCEEDING SECOND THRESHOLD EXISTS? ———▷

YES                S136

WRITE SECOND ABNORMALITY INFORMATION TO FIGURE OF AMIS CORRESPONDING TO MACHINE ID OF REPORT

S137

READ OUT OPERATION INFORMATION OF UNIT CORRESPONDING TO MACHINE ID AND UNIT ID

S138

READ OUT THIRD THRESHOLD CORRESPONDING TO OPERATION INFORMATION OF UNIT

S139

NO ◁——— OPERATION INFORMATION OF UNIT EXCEEDS THIRD THRESHOLD? ———▷

YES                S141

WRITE THIRD ABNORMALITY INFORMATION TO FIGURES OF OPERATION INFORMATION OF UNIT CORRESPONDING TO UNIT ID AND MACHINE ID OF REPORT

S142

NO ◁——— OPERATION INFORMATION OF ALL UNITS HAS BEEN PROCESSED? ———▷

YES

( 2 )

# FIG. 15

(2)

S143

READ OUT FORMULA TO CALCULATE EVALUATION VALUE

S144

READ OUT AMIS, YLW, STB

S145

COUNT UNITS WHOSE OPERATING RATIO IS MORE THAN 0 (ZERO)

S146

CALCULATE EVALUATION VALUE BY SUBSTITUTING FIGURES FOR FORMULA

S147

STORE EVALUATION VALUE IN FILE BY PLANT IN ASSOCIATION WITH MACHINE ID

NO                                                                    S148

ALL MACHINE IDS HAVE BEEN PROCESSED?

YES                              S149

WRITE MACHINE ID AND EVALUATION VALUE TO REPORT

S1410

PLOT GRAPH BASED ON MACHINE IDS AND EVALUATION VALUES

S1411

PASTE GRAPH TO GENERATE REPORT

S1412

READ OUT EMAIL ADDRESS CORRESPONDING TO PLANT ID

S1413

TRANSMIT REPORT TO EMAIL ADDRESS

END

# FIG. 16

STORING SECTION

CONTROL PROGRAM 15P

FILE BY PLANT 151

ADDRESS FILE 152

THRESHOLD FILE 153

EVALUATION VALUE FILE 154

ACTION FILE FOR EVALUATION VALUES 155

# FIG. 17

154

EVALUATION VALUE FILE

| PLANT ID | AREA ID | AVERAGE EVALUATION VALUE |
|---|---|---|
| A | S | 250 |
| B | T | 300 |
| C | U | 265 |
| D | S | 220 |

# FIG. 18

155

ACTION FILE FOR EVALUATION VALUES

| AREA ID | ACTIONS | |
|---|---|---|
| S | ACTION 1: REMOVE YARN WASTE... | |
| | ACTION 2: ... | |
| | ACTION 3: ... | |
| | ACTION 4: ... | |
| T | ACTION 11: | CHECK WHETHER ROTATION IS NORMAL |
| | ACTION 12: ... | |
| | ACTION 13: ... | |
| | ACTION 14: ... | |
| ⋮ | ⋮ | |

# FIG. 19A

## REPORT ON PLANT A

RANKED 280TH

# FIG. 19B

## REPORT ON PLANT A

RANKED 20TH IN AREA S

# FIG. 20

REPORT ON PLANT A          AVERAGE EVALUATION VALUE: 250

FOLLOWING ACTIONS ARE PROPOSED:

ACTION 1: REMOVE YARN WASTE ···

ACTION 2: ···

ACTION 3: ···

ACTION 4: ···

# FIG. 21

```
START
```

READ OUT EVALUATION VALUE OF EACH PLANT ID FROM FILE BY PLANT | S211

CALCULATE AVERAGE EVALUATION VALUE BASED ON SUM OF EVALUATION VALUES AND THE NUMBER OF MACHINE IDS | S212

READ OUT AREA ID | S213

STORE AREA ID AND AVERAGE EVALUATION VALUE IN FILE BY PLANT IN ASSOCIATION WITH PLANT ID | S214

SORT EVALUATION VALUES IN DESCENDING ORDER | S215

READ OUT NAME OF TARGET PLANT CORRESPONDING PLANT ID | S216

WRITE AVERAGE EVALUATION VALUE AND RANK CORRESPONDING TO PLANT NAME AND PLANT ID TO REPORT | S217

PLOT AVERAGE EVALUATION VALUES OF PLANT ID IN ORDER ON GRAPH AND PASTE GRAPH | S218

PROCESS LINE CORRESPONDING TO PLANT ID WITH COLORING PROCESSING | S219

```
3
```

# FIG. 22

(3)

| | |
|---|---|
| EXTRACT AREA ID CORRESPONDING TO PLANT ID OF TARGET PLANT | S221 |

| | |
|---|---|
| DELETE RECORD HAVING DIFFERENT AREA ID | S222 |

| | |
|---|---|
| SORT AVERAGE EVALUATION VALUES IN DESCENDING ORDER | S223 |

| | |
|---|---|
| WRITE AVERAGE EVALUATION VALUE AND AREA RANK CORRESPONDING TO PLANT ID TO REPORT | S224 |

| | |
|---|---|
| PLOT AVERAGE EVALUATION VALUES OF PLANT IDS ON GRAPH IN ORDER AND PASTE GRAPH | S225 |

| | |
|---|---|
| PROCESS LINE CORRESPONDING TO PLANT ID WITH COLORING PROCESSING | S226 |

| | |
|---|---|
| READ OUT THRESHOLD RANK | S227 |

NO — PLANT IS RANKED EQUAL TO OR BELOW THRESHOLD RANK IN ALL PLANTS?    S228

YES

| | |
|---|---|
| EXTRACT PLANT ID | S229 |

| | |
|---|---|
| READ OUT PLAN NAME | S2291 |

| | |
|---|---|
| READ OUT ACTIONS CORRESPONDING TO AREA ID | S2292 |

| | |
|---|---|
| WRITE PLANT NAME AND ACTIONS TO REPORT | S2293 |

( END )

# FIG. 23

# FIG. 24

STATISTIC FILE ⟋ 156

| AREA ID | ACTIONS | SELECTED NUMBER | SELECTION RATIO (%) |
|---|---|---|---|
| S | ACTION 1: REMOVE YARN WASTE | 250 | 75 |
| | ACTION 2: ⋯ | 35 | 12 |
| | ACTION 3: ⋯ | ⋯ | ⋯ |
| | ACTION 4: ⋯ | ⋯ | ⋯ |
| T | ACTION 11: CHECK WHETHER ROTATION IS NORMAL | ⋯ | ⋯ |
| | ACTION 12: ⋯ | ⋯ | ⋯ |
| | ACTION 13: ⋯ | ⋯ | ⋯ |
| | ACTION 14: ⋯ | ⋯ | ⋯ |

# FIG. 25

REPORT ON PLANT A

FOLLOWING ACTIONS ARE PROPOSED:                PAST SELECTION RATION

251A →

■ ACTION 1: REMOVE YARN WASTE ...            75%

☐ ACTION 2: ...                              12%

☐ ACTION 3: ...                              ・・・

☐ ACTION 4: ...                              ・・・

TO REPORT  ⟋ 252    TO TERMINATE

# FIG. 26

CLIENT COMPUTER                    SERVER COMPUTER

( START )

S261

WRITE PLURALITY OF ACTION IDS, ACTIONS, AND
BUTTON TO REPORT TO REPORT

S262

WRITE CHECKBOXES TO REPORT

S263

READ OUT SELECTION RAITO CORRESPONDING TO
ACTION ID AND ACTION FROM STATISTICS FILE

S264

WRITE SELECTION RATIO IN ASSOCIATION WITH
ACTION

S265

TRANSMIT GENERATED REPORT

RECEIVE REPORT    S266

DISPLAY REPORT    S267

S268
TRANSMIT ACTION ID

S269

RECEIVE ACTION ID

S2611

INCREMENT SELECTED NUMBER CORRESPONDING
TO ACTION ID

S2612

CALCULATE SUM OF SELECTED NUMBERS

S2613

CALCULATE SELECTION RATIO

S2614

UPDATE SELECTION RATIO

( END )

# FIG. 27

# FIG. 28

OPERATION
INFORMATION FILE ⟋ 157

| PLANT ID | AREA ID | AVERAGE AMIS | AVERAGE YLW | AVERAGE STB |
|---|---|---|---|---|
| A | S | 2.5 | 3.6 | 4.2 |
| B | T | 12.6 | 5.6 | 8.2 |
| C | U | 2.5 | 4.8 | 4.7 |
| D | S | 2.8 | 13.6 | 7.2 |

# FIG. 29

ACTION FILE FOR
OPERATION ⟋ 158

| AREA ID | ACTION FOR AVERAGE AMIS | ACTION FOR AVERAGE YLW | ACTION FOR AVERAGE STB |
|---|---|---|---|
| S | ACTION 1: CHECK SETTING POSITION OF LEVER | ... | ... |
| | ACTION 2: ... | ... | ... |
| | ACTION 3: ... | ... | ... |
| | ACTION 4: ... | ... | ... |
| T | ACTION 11: ...REMOVE CLOGGING YARN WASTE | ... | ... |
| | ACTION 12: ... | ... | ... |
| | ACTION 13: ... | ... | ... |
| | ACTION 14: ... | ... | ... |

# FIG. 30A

REPORT ON PLANT A

AVERAGE
AMIS (%)  1 5

301
300
280

4 3 2 1  PLANT

RANKED 280TH

# FIG. 30B

REPORT ON PLANT A

AVERAG
E AMIS (%)  1 5

26
25
20

2 1  PLANT

RANKED 20TH IN AREA S

# FIG. 31

REPORT ON PLANT A

## FOLLOWING ACTIONS ARE PROPOSED:

ACTION 1: CHECK SETTING POSITION OF LEVER ···

ACTION 2: ···

ACTION 3: ···

ACTION 4: ···

# FIG. 32

START

REFER TO FILE BY PLANT TO CALCULATE SUM OF AMISS — S311

CALCULATE AVERAGE AMIS BY DIVIDING SUM OF AMISS BY NUMBER OF MACHINE IDS — S312

STORE AVERAGE AMIS IN OPERATION INFORMATION FILE IN ASSOCIATION WITH PLANT ID AND AREA ID — S313

S314

NO — ALL PLANT IDS HAVE BEEN PROCESSED?

YES

END

# FIG. 33

START

READ OUT AVERAGE AMIS OF TARGET PLANT — S321

READ OUT PLANT ID AND AVERAGE AMIS FROM OPERATION INFORMATION FILE — S322

SORT AVERAGE AMISS IN ASCENDING ORDER AND RANK PLANT ID — S323

NO

TARGET PLANT IS RANKED EQUAL TO OR BELOW THAN THRESHOLD ORDER? — S324

END

YES

READ OUT TARGET PLANT CORRESPONDING TO PLANT ID — S325

WRITE AVERAGE AMIS AND RANK IN ALL PLANTS CORRESPONDING TO PLANT NAME AND PLANT ID TO REPORT — S326

PLOT AVERAGE AMISS OF PLANT IDS ON GRAPH IN ORDER AND PASTE GRAPH — S327

PROCESS LINE CORRESPONDING TO PLANT ID WITH COLORING PROCESSING — S328

EXTRACT AREA ID CORRESPONDING TO PLANT ID OF TARGET PLANT — S329

4

# FIG. 34

( 4 )

| DELETE RECORDS HAVING DIFFERENT AREA ID | S331 |

| SORT AVERAGE AMISS IN ASCENDING ORDER | S332 |

| WRITE AVERAGE AMIS AND AREA RANK CORRESPONDING TO PLANT ID TO REPORT | S333 |

| PLOT AVERAGE AMISS OF PLANT IDS ON GRAPH IN ORDER AND PASTE GRAPH | S334 |

| PROCESS LINE CORRESPONDING TO PLANT ID WITH COLORING PROCESSING | S335 |

| READ OUT PLURALITY OF ACTIONS FOR AVERAGE AMIS CORRESPONDING TO AREA ID FROM ACTION FILE FOR OPERATION | S336 |

| WRITE PLURALITY OF ACTIONS FOR AVERAGE AMIS TO REPORT | S337 |

( END )

# FIG. 35

STATISTICS FILE                156

| AVERAGE EVALUATION VALUE | AVERAGE AMIS | AVERAGE YLW | AVERAGE STB | | |
|---|---|---|---|---|---|

| AREA ID | ACTIONS | SELECTED NUMBER | SELECTION RATIO (%) |
|---|---|---|---|
| S | ACTION 1 : CHECK SETTING POSITION OF LEVER ... | 250 | 75 |
| | ACTION 2 : ..... | • • • | • • • |
| | ACTION 3 : ..... | • • • | • • • |
| | ACTION 4 : ..... | • • • | • • • |
| T | ACTION 11: ...REMOVE YARN CLOGGING... | • • • | • • • |
| | ACTION 12 : ..... | • • • | • • • |
| | ACTION 13 : ..... | • • • | • • • |
| | ACTION 14 : ..... | • • • | • • • |

# FIG. 36

REPORT ON PLANT A

FOLLOWING ACTIONS ARE PROPOSED:

251A

| | | PAST SELECTION RATION |
|---|---|---|
| ☑ | ACTION 1: CHECK SETTING POSITION OF LEVER.. | 75% |
| ☐ | ACTION 2: ... | 12% |
| ☐ | ACTION 3: ... | . . . |
| ☐ | ACTION 4: ... | . . . |

252

TO REPORT     TO TERMINATE

# FIG. 37

PERSONAL COMPUTER                    SERVER COMPUTER

( START )

S371
WRITE PLURALITY OF ACTION IDS, ACTIONS, AND BUTTON TO TRANSMIT REPORT

S372
WRITE CHECKBOXES TO REPORT

S373
READ OUT ACTION ID AND SELECTION RAITO CORRESPONDING TO ACTION FROM STATISTIC FILE

S374
WRITE SELECTION RATIO IN ASSOCIATION WITH ACTION

S375
TRANSMIT GENERATED REPORT

RECEIVE REPORT     S376

DISPLAY REPORT     S377

TRANSMIT ACTION ID    S378

S379
RECEIVE ACTION ID

S3711
INCREMENT SELECTED NUMBER OF CORRESPONDING ACTION ID

S3712
CALCULATE SUM OF SELECTED NUMBERS

S3713
CALCULATE SELECTION RATIO

S3714
UPDATE SELECTION RATIO

( END )

# FIG. 38

| | | | | | |
|---|---|---|---|---|---|
| 12 | 13 | 14 | 16 | 18 | 1 |
| RAM | INPUT SECTION | DISPLAY SECTION | COMMUNICATION SECTION | CLOCK SECTION | |

11
CPU

17

15
STORING SECTION
15P
CONTROL PROGRAM

THRESHOLD FILE ~153

OPERATION INFORMATION FILE ~157

FILE BY PLANT ~151

EVALUATION VALUE FILE ~154

ACTION FILE FOR OPERATION ~158

ADDRESS FILE ~152

ACTION FILE FOR EVALUATION VALUES ~155

ACTION/ PART FILE ~159

STATISTICS FILE ~156

# FIG. 39

ACTION/PART FILE                              — 156

|  | MUP | MLC | MLW | MSL | MSM | MIS | AMIS | SEF | YLW | STB |
|---|---|---|---|---|---|---|---|---|---|---|
| OPERATION INFORMATION | ... | ... | ... | ... | ... | ... | ... | ... | ... | ... |
| ACTION INFORMATION | ... | ... | ... | ... | ... | ... | ... | ... | ... | ... |
| PART INFORMATION | ... | ... | ... | ... | ... | ... | ... | ... | ... | ... |

# FIG. 40

WHEN MPU IS HIGH, CHECK FOLLOWING POINTS

1. YARN CLOGGING IN SUCTION MOUTH

REMOVE YARN WASTE
SINCE COMB MIGHT BE DAMAGED, PAY ATTENTION
WHEN PULLING OUT YARN WASTE

2. ABNORMALITY IN DISTANCE/LOCATION OF SUCTION MOUTH

MAKE SURE WHETHER SUCTION MOUTH IS PROPERLY
POSITIONED IN TERMS OF HORIZONTALITY AND
CLOSENESS

A

3. OPERATIONAL FAILURES IN BRG CENTER

CHECK WHETHER PACKAGE BREAK HAS BEEN LOCKED

4. LIFTING UP OF CRADLE

CRADLE HAS BEEN LIFTED UP BEFORE SUCTION MOUTH
IS ELEVATED?

# FIG. 41

PROBLEM OF HIGHER MUP HAS BEEN DETECTED IN YOU MACHINE.
(MUP: RATIO OF MISSPLICING OF UPPER YARN)
UNIT HAVING HIGHER MUP MAY HAVE DEFECT IN THE FOLLOWING PARTS.

| PART ID | PART NAME |
|---------|-----------|
| A | PART A |
| B | PART B |
| C | PART C |
| D | PART D |

# FIG. 42

START

STEP S127

S421

READ OUT FIRST THRESHOLD CORRESPONDING TO OPERATION INFORMATION OF TEXTILE MACHINE

NO     OPERATION INFORMATION OF TEXTILE MACHINE EXCEEDS FIRST THRESHOLD?     S422

YES     S423

WRITE FIRST ABNORMALITY INFORMATION ON OPERATION INFORMATION OF TEXTILE MACHINE TO REPORT

S424

READ OUT ACTION INFORMATION AND PART INFORMATION CORRESPONDING TO OPERATION INFORMATION FROM ACTION/PART FILE

S425

WRITE ACTION INFORMATION AND PART INFORMATION TO REPORT

NO     OPERATION INFORMATION OF ALL TEXTILE MACHINES HAS BEEN PROCESSED?     S426

YES     S427

READ OUT SECOND THRESHOLD CORRESPONDING TO OPERATION INFORMATION OF UNIT

S428

READ OUT MIS CORRESPONDING TO MACHINE ID FROM FILE BY PLANT

YES     FIRST ABNORMALITY INFORMATION HAS BEEN WRITTEN TO CORRESPONDING AMIS ?     S429

NO

NO     MIS EXCEEDING SECOND THRESHOLD EXISTS?     S430

YES

6

5

# FIG. 43

(5)

S432

WRITE SECOND ABNORMALITY INFORMATION TO FIGURES OF AMIS
CORRESPONDING TO MACHINE ID OF REPORT

S433

READ OUT ACTION INFORMATION AND PART INFORMATION
CORRESPONDING TO MIS FROM ACTION/PART FILE

S434

WRITE ACTION INFORMATION AND PART INFORMATION TO REPORT

(6)

S435

READ OUT OPERATION INFORMATION OF UNIT CORRESPONDING TO
MACHINE ID AND UNIT ID

S436

READ OUT THIRD THRESHOLD CORRESPONDING TO OPERATION
INFORMATION OF UNIT

S437

NO ← OPERATION INFORMATION OF UNIT EXCEEDS THIRD THRESHOLD?

YES

S438

WRITE THIRD ABNORMALITY INFORMATION TO FIGURES OF MACHINE ID,
UNIT ID AND OPERATION INFORMATION OF UNIT OF REPORT

S439

READ OUT ACTION INFORMATION AND PART INFORMATION
CORRESPONDING TO OPERATION INFORMATION FROM ACTION/PART FILE

S4310

WRITE ACTION INFORMATION AND PART INFORMATION TO REPORT

S4311

NO ← OPERATION INFORMATION OF ALL UNITS HAS BEEN PROCESSED?

YES

STEP S143

END

69

# FIG. 44

| | | | | |
|---|---|---|---|---|
| | 1 2 RAM | 1 3 INPUT SECTION | 1 4 DISPLAY SECTION | 1 6 COMMUNICATION SECTION | 1 8 CLOCK SECTION |

1 1 CPU

1 7

1

1 5

STORING SECTION

1 5 P CONTROL PROGRAM

THRESHOLD FILE ~1 5 3

OPERATION INFORMATION FILE ~1 5 7

FILE BY PLANT ~1 5 1

EVALUATION VALUE FILE ~1 5 4

ACTION FILE FOR OPERATION ~1 5 8

ADDRESS FILE ~1 5 2

ACTION FILE FOR EVALUATION VALUES ~1 5 5

ACTION/ PART FILE ~1 5 9

STATISTICS FILE ~1 5 6

DISPERSION FILE ~1 5 1 0

ACTION FILE FOR DISPERSION ~1 5 1 1

# FIG. 45

1510

DISPERSION FILE

| PLANT ID | AREA ID | DISPERSION |
|:---:|:---:|:---:|
| A | S | 25 |
| B | T | 356 |
| C | U | 100 |
| D | S | 25 |

# FIG. 46

ACTION FILE FOR
DISPERSION

1511

| AREA ID | ACTIONS |
|:---:|:---|
| S | ACTION 1: UNIFY PARAMETERS... |
| | ACTION 2: ... |
| | ACTION 3: ... |
| | ACTION 4: ... |
| T | ACTION 11: ...REPLACE WITH PART A... |
| | ACTION 12: ... |
| | ACTION 13: ... |
| | ACTION 14: ... |
| ⋮ | ⋮ |

71

# FIG. 47

REPORT ON PLANT A

FOLLOWING ACTIONS ARE PROPOSED:

ACTION 1: UNIFY PARAMETERS ⋯

ACTION 2: ⋯

ACTION 3: ⋯

ACTION 4: ⋯

# FIG. 48

```
          ( START )
              │
┌─────────────────────────────────────────────────────────┐
│ READ OUT EVALUATION VALUE CORRESPONDING TO EACH MACHINE ID │ S481
│         OF TARGET PLANT FROM FILE BY PLANT                 │
└─────────────────────────────────────────────────────────┘
              │
┌─────────────────────────────────────────────────────────┐
│         CALCULATE AVERAGE OF EVALUATION VALUES            │ S482
└─────────────────────────────────────────────────────────┘
              │
┌─────────────────────────────────────────────────────────┐
│ CALCULATE SUM OF SQUARES OF DIFFERENCE BETWEEN EVALUATION │ S483
│              VALUE AND AVERAGE VALUE                       │
└─────────────────────────────────────────────────────────┘
              │
┌─────────────────────────────────────────────────────────┐
│       CALCULATE DISPERSION WITH SUM OF SQUARES            │ S484
└─────────────────────────────────────────────────────────┘
              │
┌─────────────────────────────────────────────────────────┐
│ STORE DISPERSION IN DISPERSION FILE IN ASSOCIATION WITH PLANT ID │ S485
└─────────────────────────────────────────────────────────┘
              │
          (  END  )
```

# FIG. 49

START

| SORT DISPERSION IN ASCENDING ORDER AND RANK PLANT ID | S491 |

| READ OUT PLANT NAME, PLANT ID, AREA ID AND DISPERSION OF TARGET PLANT | S492 |

| OBTAIN RANK OF PLANT ID | S493 |

| READ OUT THRESHOLD RANK | S494 |

S495

PLANT ID IS RANKED EQUAL TO OR BELOW THAN THRESHOLD RANK?

NO

YES

| READ OUT ACTION INFORMATION CORRESPONDING TO AREA ID FROM ACTION FILE FOR DISPERSION | S496 |

| WRITE DISPERSION, RANK AND ACTION INFORMATION TO REPORT | S497 |

END

# FIG. 50

# FIG. 51

| | |
|---|---|
| 11 CPU | |
| 12 RAM | 13 INPUT SECTION | 14 DISPLAY SECTION | 16 COMMUNICATION SECTION | 18 CLOCK SECTION | 17 | 1B | 1A | 10A READING SECTION |

15 STORING SECTION

15P CONTROL PROGRAM

151 FILE BY PLANT

152 ADDRESS FILE

153 THRESHOLD FILE

154 EVALUATION VALUE FILE

155 ACTION FILE FOR EVALUATION VALUES

156 STATISTICS FILE

157 OPERATION INFORMATION FILE

158 ACTION FILE FOR OPERATION

159 ACTION/ PART FILE

1510 DISPERSION FILE

1511 ACTION FILE FOR DISPERSION

# FIG. 52

THRESHOLD FILE 153

| | | | OPERATION INFORMATION | | |
|---|---|---|---|---|---|
| | | AVERAGE AMIS | | AVERAGE MUP | |
| FIRST THRESHOLD | 8 | 0 OR HIGHER LESS THAN 5 | — | | |
| | 1 2 | 5 OR HIGHER LESS THAN 10 | | | |
| | 1 5 | 11 OR HIGHER | | | |
| SECOND THRESHOLD | 7 | 0 OR HIGHER LESS THAN 5 | — | | |
| | 1 1 | 5 OR HIGHER LESS THAN 10 | | | |
| | 1 3 | 11 OR HIGHER | | | |
| THIRD THRESHOLD | — | | 3 | 0 OR HIGHER LESS THAN 1 | |
| | | | 5 | 1 OR HIGHER LESS THAN 3 | |
| | | | 7 | 3 OR HIGHER | |

# FIG. 53

START

READ OUT OPERATION INFORMATION OF ALL MACHINES FROM FILE BY PLANT — S531

CALCULATE AVERAGE OF OPERATION INFORMATION OF ALL MACHINES — S532

READ OUT FIRST, SECOND OR THIRD THRESHOLD CORRESPONDING TO AVERAGE OF OPERATION INFORMATION — S533

END

**REFERENCES CITED IN THE DESCRIPTION**

**Patent documents cited in the description**

- JP 2002087703 A
- JP 2004183139 A
- EP 1186977 A2
- DE 4031419 A1